# EUROPEAN PATENT APPLICATION

(11) **EP 4 557 113 A1**
(43) Date of publication of application: **21.05.2025**
(21) Application number: 24214182.8
(22) Date of filing: 20.11.2024
(51) Int. Cl.: G06F 13/40, G06F 13/16, G06F 13/42

(54) **SYSTEMS, METHODS, AND APPARATUS FOR USING ON-DIE PROTOCOL WITH DIE-TO-DIE SYSTEM**

(30) Priority: 20.11.2023 US 202363601201 P; 11.11.2024 US 202418943849
(71) Applicant: SAMSUNG ELECTRONICS CO., LTD., Yeongtong-gu Suwon-si, Gyeonggi-do 16677 (KR)
(72) Inventor: KIM, Soon Ju, San Jose, CA, 95134 (US); CHANG, Kah Kawe, San Jose, CA, 95134 (US)
(74) Representative: Kuhnen & Wacker Patent- und Rechtsanwaltsbüro PartG mbB

(57) **Abstract**

An apparatus may include a die (105) including at least one circuit configured to receive, using a first channel of an on-die interface (103, 109), first information, receive, using a second channel of the on-die interface (103, 109), second information, generate one or more transaction units including the first information and the second information, and send, using at least one die-to-die system (107), the one or more transaction units. An apparatus may include a die (105) including at least one circuit configured to receive, using at least one on-die interface (103, 109), first information for a first transaction, receive, using the at least one on-die interface (103, 109), second information for a second transaction, generate one or more transaction units including the first information and the second information, and send, using at least one die-to-die system (107), the one or more transaction units.

## Description

### TECHNICAL FIELD

This disclosure relates generally to communication protocols, and more specifically to systems, methods, and apparatus for using an on-die protocol with a die-to-die system.

### BACKGROUND

An on-die protocol may be used for communications between portions of an integrated circuit fabricated on a die. For example, an on-die protocol may specify how requests, data, responses, and/or the like, may be transferred between functional blocks on a die such as processor cores, memories, buffers, controllers, peripheral circuits, and/or the like.

The above information disclosed in this Background section is only for enhancement of understanding of the background of the inventive principles and therefore it may contain information that does not constitute prior art.

### SUMMARY

An apparatus may include a die including at least one circuit configured to receive, using a first channel of an on-die interface, first information, receive, using a second channel of the on-die interface, second information, generate one or more transaction units including the first information and the second information, and send, using at least one die-to-die system, the one or more transaction units. A first one of the one or more transaction units may include at least a portion of the first information, and a second one of the one or more transaction units may include at least a portion of the second information. One of the one or more transaction units may include at least a portion of the first information and at least a portion of the second information. The first information may include information for a first transaction of the on-die interface and information for a second transaction of the on-die interface. The second information may include information for the first transaction of the on-die interface and information for the second transaction of the on-die interface. The at least one die-to-die system may include a path, and the at least one circuit may be configured to send, using the path, at least a portion of the first information, and send, using the path, at least a portion of the second information. The at least a portion of the first information may include control information, and the least a portion of the second information may include control information. The at least a portion of the first information may include data information, and the least a portion of the second information may include data information. The at least one die-to-die system may include a first path and a second path, and the at least one circuit may be configured to send, using the first path, at least a portion of the first information, and send, using the first path, at least a portion of the second information. The at least a portion of the first information may include control information, and the least a portion of the second information may include control information. The at least a portion of the first information may include data information, and the least a portion of the second information may include data information. One of the one or more transaction units may include error correction information for at least one of the one or more transaction units.

An apparatus may include a die including at least one circuit configured to receive, using at least one on-die interface, first information for a first transaction, receive, using the at least one on-die interface, second information for a second transaction, generate one or more transaction units including the first information and the second information, and send, using at least one die-to-die system, the one or more transaction units. One of the one or more transaction units may include at least a portion of the first information and at least a portion of the second information. The at least a portion of the first information may include control information for the first transaction, and the least a portion of the second information may include control information for the second transaction. The at least a portion of the first information may include data information for the first transaction, and the least a portion of the second information may include data information for the second transaction. The at least one die-to-die system may include a path, and the at least one circuit may be configured to send, using the path, at least a portion of the first information, and send, using the path, at least a portion of the second information. The at least a portion of the first information may include control information for the first transaction, and the least a portion of the second information may include control information for the second transaction. The at least a portion of the first information may include data information for the first transaction, and the least a portion of the second information may include data information for the second transaction. The at least one die-to-die system may include a first path and a second path, and the at least one circuit may be configured to send, using the first path, at least a portion of the first information, and send, using the first path, at least a portion of the second information. The at least a portion of the first information may include control information for the first transaction, and the least a portion of the second information may include control information for the second transaction. The at least a portion of the first information may include data information for the first transaction, and the least a portion of the second information may include data information for the second transaction. One of the one or more transaction units may include error correction information for at least one of the one or more transaction units.

An apparatus may include a die including at least one circuit configured to receive, using a first on-die interface, first information, receive, using a second on-die interface, second information, generate one or more transaction units including the first information and the second information, and send, using at least one die-to-die system, the one or more transaction units. One of the one or more transaction units may include at least a portion of the first information and at least a portion of the second information. The at least a portion of the first information may include control information. The at least a portion of the first information may include data information. A first one of the one or more transaction units may include at least a portion of the first information, and a second one of the one or more transaction units may include at least a portion of the second information. The at least a portion of the first information may include control information, and the at least a portion of the second information may include control information. The at least a portion of the first information may include data information, and the at least a portion of the second information may include data information. The at least one die-to-die system may include a path, and the at least one circuit may be configured to send, using the path, at least a portion of the first information, and send, using the path, at least a portion of the second information. The at least a portion of first information may include control information and data information, and the at least a portion of second information may include control information and data information. The at least one die-to-die system may include a first path and a second path, and the at least one circuit may be configured to send, using the first path, at least a portion of the first information, and send, using the second path, at least a portion of the second information. The at least a portion of first information may include control information, and the at least a portion of second information may include control information. The at least a portion of the first information may include data information, and the least a portion of the second information may include data information. One of the one or more transaction units may include error correction information for at least one of the one or more transaction units.

### BRIEF DESCRIPTION OF THE DRAWINGS

The figures are not necessarily drawn to scale and elements of similar structures or functions or portions thereof may generally be represented by reference indicators ending in, and/or containing, the same digits, letters, and/or the like, for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates a first embodiment of a protocol translation scheme in accordance with example embodiments of the disclosure.
Fig. 2 illustrates a second embodiment of a protocol translation scheme in accordance with example embodiments of the disclosure.
Fig. 3 illustrates an embodiment of a channel architecture for an on-die protocol in accordance with example embodiments of the disclosure.
Fig. 4 illustrates an embodiment of a write transaction using an on-die protocol in accordance with example embodiments of the disclosure.
Fig. 5 illustrates an embodiment of a read transaction using an on-die protocol in accordance with example embodiments of the disclosure.
Fig. 6 illustrates an embodiment of a die-to-die system in accordance with example embodiments of the disclosure.
Fig. 7A illustrates an embodiment of a module configuration for a die-to-die system in accordance with example embodiments of the disclosure.
Fig. 7B illustrates an embodiment of a multi-module configuration for a die-to-die system in accordance with example embodiments of the disclosure.
Fig. 8 illustrates an example embodiment of a raw format for a transaction unit in accordance with example embodiments of the disclosure.
Fig. 9 illustrates an example embodiment of a latency-oriented flit format for a transaction unit in accordance with example embodiments of the disclosure.
Fig. 10 illustrates a first embodiment of a transaction unit scheme in accordance with example embodiments of the disclosure.
Fig. 11 illustrates a second embodiment of a transaction unit scheme in accordance with example embodiments of the disclosure.
Fig. 12 illustrates a third embodiment of a transaction unit scheme in accordance with example embodiments of the disclosure.
Fig. 13 illustrates a fourth embodiment of a transaction unit scheme in accordance with example embodiments of the disclosure.
Fig. 14 illustrates a first embodiment of a component configuration for a transaction unit scheme with an on-die interface and a die-to-die path in accordance with example embodiments of the disclosure.
Fig. 15 illustrates a second embodiment of a component configuration for a transaction unit scheme with multiple on-die interfaces and a die-to-die path in accordance with example embodiments of the disclosure.
Fig. 16 illustrates a third embodiment of a component configuration for a transaction unit scheme with an on-die interface and multiple die-to-die paths in accordance with example embodiments of the disclosure.
Fig. 17 illustrates a fourth embodiment of a component configuration for a transaction unit scheme with multiple on-die interfaces and multiple die-to-die paths in accordance with example embodiments of the disclosure.
Fig. 18 illustrates an example embodiment of a component architecture having one or more modules arranged to transfer combined control and data information for a protocol translation scheme in accordance with example embodiments of the disclosure.
Fig. 19 illustrates an example embodiment of a component architecture having a module to transfer control and a module to transfer data information for a protocol translation scheme in accordance with example embodiments of the disclosure.
Fig. 20 illustrates an example embodiment of a transaction unit for transferring write request information using a raw format in accordance with example embodiments of the disclosure.
Fig. 21 illustrates an example embodiment of a transaction unit for transferring write data information using a raw format in accordance with example embodiments of the disclosure.
Fig. 22 illustrates an example embodiment of a transaction unit for transferring write data information using a flit format in accordance with example embodiments of the disclosure.
Fig. 23 illustrates an example embodiment of a transaction unit for transferring write response information using a raw format in accordance with example embodiments of the disclosure.
Fig. 24 illustrates an example embodiment of a transaction unit for transferring read request information using a raw format in accordance with example embodiments of the disclosure.
Fig. 25 illustrates an example embodiment of a transaction unit for transferring read data information using a raw format in accordance with example embodiments of the disclosure.
Fig. 26 illustrates an example embodiment of a transaction unit for transferring read data information using a flit format in accordance with example embodiments of the disclosure.
Fig. 27 illustrates an example embodiment of a transaction unit for transferring a write request and write data using a raw format and a combined transfer path in accordance with example embodiments of the disclosure.
Fig. 28 illustrates an example embodiment of a transaction unit for transferring a write request and write data using a flit format and a combined transfer path in accordance with example embodiments of the disclosure.
Figs. 29A and 29B, which may collectively be referred to as Fig. 29, illustrate an enlarged view of the example embodiment of a transaction unit for transferring write request information using a raw format illustrated in Fig. 20 in accordance with example embodiments of the disclosure.
Figs. 30A and 30B, which may collectively be referred to as Fig. 30, illustrate an enlarged view of the example embodiment of a transaction unit for transferring write data information using a raw format illustrated in Fig. 21 in accordance with example embodiments of the disclosure.
Figs. 31A and 31B, which may collectively be referred to as Fig. 31, illustrate an enlarged view of the example embodiment of a transaction unit for transferring write data information using a flit format illustrated in Fig. 22 in accordance with example embodiments of the disclosure.
Figs. 32A and 32B, which may collectively be referred to as Fig. 32, illustrate an enlarged view of the example embodiment of a transaction unit for transferring write response information using a raw format illustrated in Fig. 23 in accordance with example embodiments of the disclosure.
Figs. 33A and 33B, which may collectively be referred to as Fig. 33, illustrate an enlarged view of the example embodiment of a transaction unit for transferring read request information using a raw format illustrated in Fig. 24 in accordance with example embodiments of the disclosure.
Figs. 34A and 34B, which may collectively be referred to as Fig. 34, illustrate an enlarged view of the example embodiment of a transaction unit for transferring read data information using a raw format illustrated in Fig. 25 in accordance with example embodiments of the disclosure.
Figs. 35A and 35B, which may collectively be referred to as Fig. 35, illustrate an enlarged view of the example embodiment of a transaction unit for transferring read data information using a flit format illustrated in Fig. 26 in accordance with example embodiments of the disclosure.
Figs. 36A, 36B, and 36C, which may collectively be referred to as Fig. 36, illustrate an enlarged view of the example embodiment of a transaction unit for transferring a write request and write data using a raw format and a combined transfer path illustrated in Fig. 27 in accordance with example embodiments of the disclosure.
Figs. 37A, 37B, and 37C, which may collectively be referred to as Fig. 37, illustrate an enlarged view of the example embodiment of a transaction unit for transferring a write request and write data using a flit format and a combined transfer path illustrated in Fig. 28 in accordance with example embodiments of the disclosure.

### DETAILED DESCRIPTION

An on-die (OD) protocol may use one or more communication channels to transfer requests, data, responses, and/or the like, between portions of an integrated circuit fabricated on a die (which may also be referred to as a chip). In some example embodiments, an OD protocol may be implemented with an interface having a first channel to send a request (e.g., a transaction request such as a read or write request) from an initiator to a target, a second channel to transfer data between the initiator and the target based on the request, and/or a third channel to send a response (e.g., in the case of a write operation) from the target to the initiator to acknowledge receiving data on the second channel.

In some apparatus such as a system-in-package (SIP), information may be transferred between dies within a package using a die-to-die (D2D) protocol. In some embodiments, a D2D protocol may transfer information using one or more transaction units such as flow control units (flits), raw format transaction units, and/or the like. A transaction unit may have a specified format that may include, for example, an amount of information such as a specified number of bytes.

In some apparatus, it may be useful to connect an OD interface to a D2D system to enable a portion of an integrated circuit on one die to communicate with a portion of an integrated circuit on another die. For example, in some embodiments, a D2D protocol may be used as an intermediary to connect a processor core having a first OD interface on a first die to a memory having a second OD interface on a second die. However, depending on the implementation details, such an arrangement may result in relatively inefficient communication. For example, an OD interface may implement a request format, a data format, and/or a response format using signals (e.g., using clock-by-clock transfers) that may be difficult to transfer using a D2D system. As a further example, an OD interface may implement one or more formats having specified numbers of bytes that may be different from the number of bytes specified for a transaction unit in a D2D protocol. Thus, a D2D system may transfer more bytes, flits, and/or the like, than may be used or needed by an OD interface to which it is connected, thereby increasing the overhead and/or reducing the bandwidth of the D2D system.

In a protocol translation scheme in accordance with example embodiments of the disclosure, information for an OD protocol may be arranged (e.g., packed) in one or more transaction units for a D2D protocol. For example, information from a first channel (e.g., a request channel) and a second channel (e.g., a data channel) for a transaction of an OD interface may be arranged in one or more transaction units for a D2D system. As another example, information for multiple transactions of an OD protocol may be arranged in one or more transaction units for a D2D system. Depending on the implementation details, some of the disclosed techniques may reduce overhead, for example, by reducing unused bytes in a transaction unit and/or by reducing latencies caused by sending additional transaction units for additional channels, transactions, and/or the like. Additionally, or alternatively, some of the disclosed techniques may reduce power consumption, for example, by reducing the amount of control information transferred with data information.

Protocol translation schemes may use a variety of hardware configurations in accordance with example embodiments of the disclosure. For example, in some embodiments, information for one or more data channels (e.g., a write data channel and/or a read data channel) and one or more control channels (e.g., channels for commands, requests, addresses, responses, and/or the like) of an OD interface may be combined and transferred using a shared hardware module for a D2D system. In other embodiments, however, information for at least a portion of one or more channels for an OD interface may be transferred using one or more separate hardware modules for a D2D system. For example, in some embodiments, information for one or more data channels for an OD interface may be transferred using a first module of a D2D system, whereas information for one or more control channels may be transferred using a second module of a D2D system

Protocol translation schemes may use a variety of information formats in accordance with example embodiments of the disclosure. In some embodiments, an information format may be based on and/or affected by an underlying hardware configuration. For example, in embodiments in which information for one or more data channels and one or more control channels may be transferred using a shared hardware module for a D2D system, a transaction unit format may include both control and data information. One example may include a raw format in which a transaction unit may include control information and data information for one OD interface and/or sequential data information for multiple OD interfaces. Another example may include a latency-oriented format in which a flit may include control information and/or data information for multiple OD interfaces (e.g., in an interleaved configuration).

As another example, in embodiments in which information for one or more data channels and one or more control channels may be transferred using separate hardware modules for a D2D system, a first transaction unit format may include information for a request channel, a second transaction unit format may include information for a data channel, and a third transaction unit format may include information for a response channel. One example of a transaction unit format for a data channel may include a raw format in which a transaction unit may include data information for one OD interface and/or sequential data information for multiple OD interfaces. Another example of a transaction unit format may include a latency-oriented format in which a flit may include data information for multiple OD interfaces (e.g., in an interleaved configuration).

Some additional aspects of the disclosure relate to techniques for detecting and/or correcting information for an OD protocol transferred using a D2D protocol. For example, some embodiments may use a transaction unit format (e.g., a raw format) in which a transaction layer of a D2D protocol may not implement a retry mechanism. Such embodiments may be beneficial, for example, in implementations that are especially sensitive to latencies caused by resending data using a retry mechanism (e.g., implementations for high bandwidth memory (HBM)). Some embodiments that avoid a retry mechanism may implement an error correction mechanism (e.g., forward error correction) at a transaction layer to replace or improve the data reliability provided by a retry mechanism.

Some additional aspects of the disclosure relate to techniques for indicating valid data on a data channel of an OD interface transferred using a D2D system. For example, in some embodiments, one or more write strobe signals may be transferred a reduced number of times (e.g., one time) per transaction. In such embodiments, a write strobe pattern may be used to indicate which lanes of a write data channel contain valid information for multiple data transfers. Depending on the implementation details, this may reduce the amount of control information transferred with corresponding data information.

This disclosure encompasses numerous aspects relating to protocol translation schemes. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

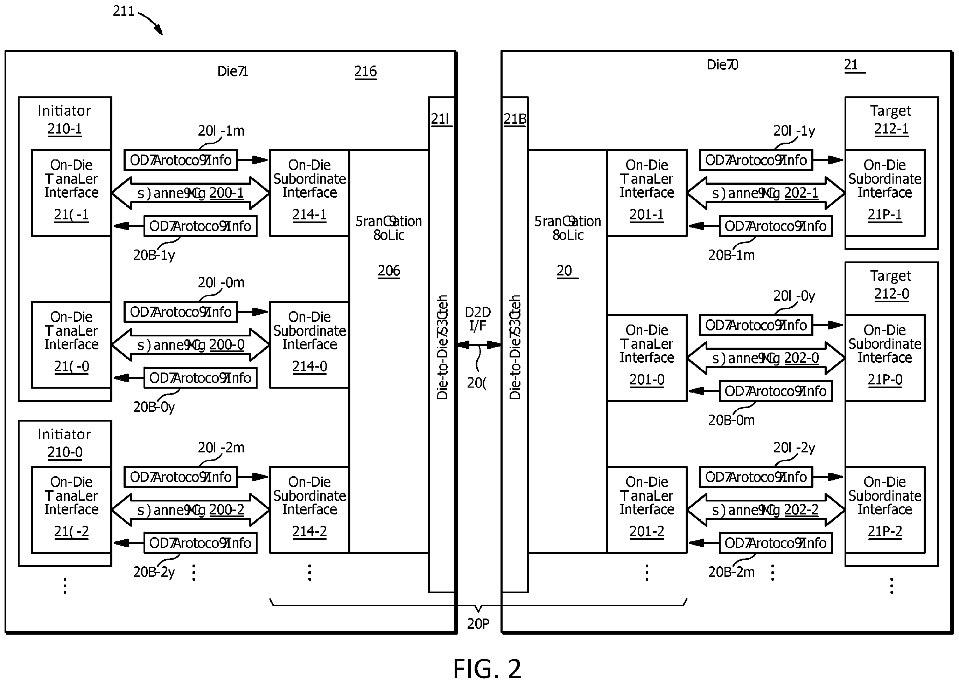

Multiple instances of elements identified with the same base numbers and different suffixes may be referred to individually and/or collectively by the base number. For example, one or more initiators 201-0, 201-1, ... illustrated in Fig. 2 may be referred to individually and/or collectively as initiator or initiators 201. More generally, within this disclosure, a reference to "a" or "the" element may refer to one or multiples of the element.

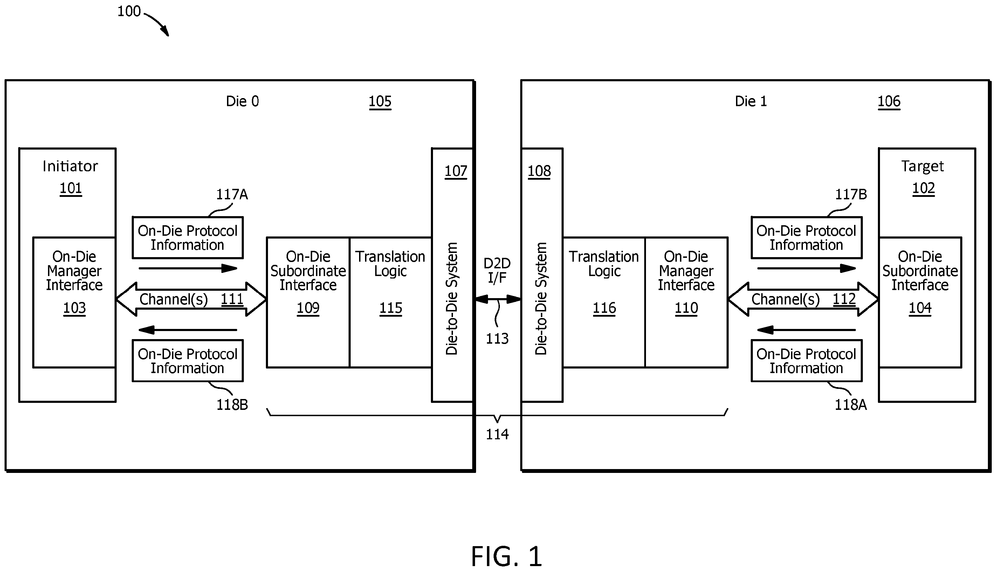

Fig. 1 illustrates a first embodiment of a protocol translation scheme in accordance with example embodiments of the disclosure. The protocol translation scheme 100 illustrated in Fig. 1 may include an initiator 101 having an OD manager interface 103 for an OD protocol and a target 102 having an OD subordinate interface 104 for an OD protocol. The Initiator 101, which may be located at a first die 105, may include one or more processors, controllers, memories, and/or any other type of functionality that may use an OD interface. The target 102, which may be located at a second die 106, may include one or more processors, controllers, memories, and/or any other type of functionality that may use an OD interface.

In some embodiments, the OD manager interface 103 and the OD subordinate interface 104 may be implemented with one or more OD protocols that may be interoperable if the initiator 101 and target 102 are located on the same die. However, to facilitate communication between the initiator 101 and target 102 on dies 105 and 106, the protocol translation scheme 100 may include a D2D interconnect scheme 114 configured to operate as a bridge between the OD manager interface 103 and the OD subordinate interface 104. Additionally, or alternatively, the D2D interconnect scheme 114 may be configured to translate, convert, and/or the like, between one protocol used by the OD manager interface 103 and another protocol used by the OD subordinate interface 104 that may not otherwise be interoperable.

The D2D interconnect scheme 114 may include a first D2D system 107 located on the first die 105 and a second D2D system 108 located on the second die 106. The first D2D system 107 and the second D2D system 108 may be connected by one or more D2D interfaces 113. The first D2D system 107 may use an OD subordinate interface 109 for an OD protocol to communicate with the OD manager interface 103 of the initiator 101 using a set of one or more channels 111. The second D2D system 108 may use a manager interface 110 for an OD protocol to communicate with the OD subordinate interface 104 of the initiator 102 using a set of one or more channels 112.

A set of channels (e.g., set of channels 111 and/or set of channels 112) may be implemented with one or more signals that may arranged in one or more groups of signals corresponding to one or more channels. Examples of types of channels may include control channels (e.g., channels for commands, requests, addresses, responses, and/or the like), data channels (e.g., a write data channel and/or a read data channel), and/or the like. Some signals may be exclusive to certain channels, however, some signals may be shared by two or more channels.

Examples of OD protocols that may be used for one or more of the OD interfaces 103, 104, 109, and/or 110 may include Advanced Microcontroller Bus Architecture (AMBA) (including one or more of the AMBA family of protocols such as Advanced eXtensible Interface (AXI), Coherent Hub Interface (CHI), AMBA High-performance Bus (AHB), AXI Coherency Extensions (ACE), and/or Advanced Peripheral Bus (APB)), Cache Coherent Interconnect for Accelerators (CCIX), Credited eXtensible Stream (CXS), On-Chip Protocol (OCP), Device Transaction Level (DTL), and/or the like.

Examples of D2D protocols that may be used for the one or more D2D systems 107 and/or 108 may include Universal Chiplet Interface Express (UCIe), Bunch of Wires (BOW), Open High Bandwidth Interconnect (OpenHBI), and/or the like.

One or both of the dies 105 and/or 106 (which may also be referred to as chips) may be implemented dielets (which may also be referred to as chiplets), and/or any other type of integrated circuit device. Although the dies 105 and 106 may be illustrated as separated components, the protocol translation scheme 100 illustrated in Fig. 1 may also be used in embodiments in which the dies 105 and 106 may be portions fabricated on a common die but separated by an obstruction, a distance, and/or the like, that may be bridged by a D2D interconnect. For example, the D2D interconnect scheme 114 may connect an initiator on a first portion of a die with a target on a second portion of the die using one or more connections that may pass through one or more vias, semiconductor bridges (e.g. silicon bridges), traces on a substrate to which the die is connected, relatively long traces on the die, and/or the like.

The first die 105 may include translation logic (e.g., circuitry and/or other functionality) 115 that may translate OD protocol information 117A (e.g., signal operations such as signal states, timings, patterns, and/or the like) received from the OD manager interface 103 through the set of one or more channels 111 to a form that may be transferred using the one or more D2D interfaces 113. For example, in some embodiments, the translation logic 115 may pack OD protocol information 117A in the form of one or more signal operations (e.g., for one or more transactions, transfers, and/or the like) on the set of one or more of channels 111 into one or more transaction units which the D2D system 107 may transfer to the D2D system 108 at the second die 106.

The second die 106 may include translation logic 116 that may unpack the OD protocol information in the form of one or more signal states from the one or more transaction units and use it to generate (e.g., reconstruct) the one or more signal operations (e.g., of one or more transactions, transfers, and/or the like) on the set of one or more of channels 112. Thus, the D2D interconnect scheme 114 may transfer the OD protocol information 117A received from the OD manager interface 103 as reconstructed OD protocol information 117B to the OD subordinate interface 104. The OD protocol information 117A (and/or reconstructed OD protocol information 117B) may include any information transferred from a manager interface to a subordinate interface such as write request information, write data information, read request information, and/or the like.

In a similar manner, in some embodiments, the translation logic 116 and/or 115 may also pack and unpack, respectively, OD protocol information 118A received from the OD subordinate interface 104 to enable the D2D interconnect scheme 114 to transfer the OD protocol information 118A as reconstructed OD protocol information 118B to the OD manager interface 103. The OD protocol information 118A (and/or reconstructed OD protocol information 118B) may include any information transferred from a subordinate interface to an OD manager interface such as read data information, write response information, and/or the like.

In some embodiments, and depending on the implementation details, the protocol translation scheme 100 may implement a protocol packing and/or unpacking scheme that may enable the initiator 101 on die 105 and the target 102 on die 106 to perform transactions using an OD protocol with little or no effect on the overall performance of the transactions and/or involving little or no adaptation for, and/or awareness of the presence of, one or more protocol translation operations (e.g., packing and/or unpacking) and/or the D2D interconnect scheme 114.

In some embodiments, and depending on the implementation details, the protocol translation scheme 100 illustrated in Fig. 1 may enable transactions between the initiator 101 and target 102 in a manner that may introduce little or no latency in transactions, cause little or no reduction in bandwidth, consume a relatively small amount of power, provide a relatively low bit error rate (BER), and/or provide one or more other benefits as described in more detail herein.

Although the D2D systems 107 and/or 108 are not limited to any specific implementation details, in some embodiments, either or both of the D2D systems 107 and/or 108 may include a physical layer (which may also be referred to as a phy or PHY layer) and/or a link layer (which in some embodiments may be implemented with an adapter layer which may also be referred to as an adapter). In some embodiments, either or both of the translation logic 115 and/or OD subordinate interface 109 may be implemented with, or as part of, a transaction layer which may be separate from the D2D system 107. Additionally, or alternatively, either or both of the translation logic 115 and/or OD subordinate interface 109 may be at least partially integrated, and/or implemented with, the D2D system 107, for example, as part of a link layer. Similarly, in some embodiments, either or both of the OD manager interface 110 and/or protocol translation logic 116 may be implemented with, or as part of, a transaction layer which may be separate from, integral with, or partially integral with, the D2D system 108.

In one exemplary embodiment of a write transaction, the initiator 101 may initiate a write operation with the target 102 by using the OD manager interface 103 to send a write request to the OD subordinate interface 109 using an OD protocol that may be implemented with one or more signals of a write request channel within the set of one or more channels 111. The translation logic 115 may pack OD protocol information 117A associated with the write request (e.g., one or more states, timings, patterns, and/or the like of the one or more signals of the write request channel) into one or more transaction units. The D2D system 107 may transfer the one or more transaction units to the D2D system 108 through the one or more D2D interfaces 113 using a D2D protocol.

The translation logic 116 at the second die 106 may unpack the OD protocol information 117A from the one or more transaction units to generate a reconstructed version of the OD protocol information 117B associated with the write request. The OD manager interface 110 may use the reconstructed OD protocol information 117B to forward the write request to the OD subordinate interface 104 using an OD protocol (e.g., the same or similar OD protocol used for OD protocol information 117A) that may be implemented with one or more signals of a write request channel within the set of one or more channels 112.

Based on sending the write request, the initiator 101 may send write data associated with the write request (e.g., in the form of OD protocol information 1 17A) to the OD subordinate interface 109 using an OD protocol that may be implemented with one or more signals of a write data channel within the set of one or more channels 111. The D2D interconnect scheme 114 may forward the write data to the OD subordinate interface 104 in a manner similar to that used for the write request, for example, by packing the OD protocol information 117A associated with the write data into one or more transaction units which it may unpack and use to generate reconstructed write data (e.g., in the form of reconstructed OD protocol information 117B).

In various embodiments, the D2D interconnect scheme 114 (including translation logic 115 and 116) may pack OD protocol information for the write request and the write data at least partially into different transaction units, at least partially into one or more of the same transaction units, or into one or more other transaction unit formats and/or combinations thereof. In various embodiments, the D2D interconnect scheme 114 (including translation logic 115 and 116) may transfer OD protocol information for the write request and the write data at least partially using different hardware paths (e.g., using different hardware modules for a D2D system), at least partially using one or more of the same hardware paths (e.g., the same hardware module for a D2D system), or using one or more other hardware path configurations and/or combinations thereof.

Based on receiving the write request and/or the write data, the target 102 may send a write response to the initiator 101 (e.g., in the form of OD protocol information 118A) by sending the write response to the subordinate interface 110 using an OD protocol that may be implemented with one or more signals of a write response channel within the set of one or more channels 112. The D2D interconnect scheme 114 may forward the write response to the OD manager interface 103 in a manner similar to that used for the write request and/or the write data, but in the reverse order. For example, the translation logic 116 may pack the OD protocol information 118A for the write response into one or more transaction units that the D2D system 108 at die 106 may send to the D2D system 107 at die 105. The translation logic 115 may unpack the OD protocol information 118A from the one or more transaction units and use it to generate a reconstructed version 118B of the OD protocol information for the write response which it may use to send the write response to the OD manager interface 103 at the initiator 101.

In various embodiments, the D2D interconnect scheme 114 (including translation logic 115 and/or 116) may transfer OD protocol information for the write response at least partially using a different hardware path (e.g., using different hardware modules for a D2D system) than a hardware path used for the write request and/or write data, at least partially using a same hardware path used for at least a portion of the write request and/or write data, or using one or more other hardware path configurations and/or combinations thereof.

In one exemplary embodiment of a read transaction, the initiator 101 may initiate a read operation with the target 102 by using the OD manager interface 103 to send a read request (e.g., in the form of OD protocol information 1 17A) to the OD subordinate interface 109 which the D2D interconnect scheme 114 may forward (e.g., in the form of reconstructed OD protocol information 117B) to the target 102 in a manner similar to that described above with respect to a write transaction (e.g., by packing and/or unpacking OD protocol information into and/or from one or more transaction units). However, in some embodiments, a read request may be transferred using one or more signals of a read request channel within the set of one or more channels 111 and/or a read request channel within the set of one or more channels 112.

Based on receiving a read request, the target 102 may retrieve requested read data which it may send to the initiator 101 by sending read data (e.g., in the form of OD protocol information 118A) through the OD subordinate interface 104 using an OD protocol and one or more signals of a read data channel within the set of one or more channels 112. The D2D interconnect scheme 114 may forward the read data to the OD manager interface 103 in a manner similar to that used for the write response, but in the reverse order. For example, the translation logic 116 may pack the OD protocol information 118A for the read data into one or more transaction units that the D2D system 108 at die 106 may send to the D2D system 107 at die 105. The translation logic 115 may unpack the OD protocol information 118A from the one or more transaction units and use it to generate a reconstructed version 118B of the OD protocol information for the read data which it may use to send the read data to the OD manager interface 103 at the initiator 101.

In some embodiments, the target 102 may send a read response along with the read data to the initiator 101. In various embodiments, the D2D interconnect scheme 114 (including translation logic 115 and/or 116) may pack OD protocol information for a read response at least partially into one or more transaction units used to transfer read data, at least partially into one or more separate transaction units, and/or into one or more other transaction unit formats and/or combinations thereof. In various embodiments, the D2D interconnect scheme 114 (including translation logic 115 and/or 116) may transfer OD protocol information for read data and a read response at least partially using different hardware paths (e.g., using different hardware modules for a D2D system), at least partially using one or more of the same hardware paths (e.g., the same hardware module for a D2D system), or using one or more other hardware path configurations and/or combinations thereof.

In some embodiments, some or all of the translation logic 115 and/or 116 may be referred to and/or characterized as a transaction translator. For example, the translation logic 115 may one or more signal operations associated with an OD protocol transaction to D2D protocol information in a stream of one or more transaction units that may be transferred from the first die 105 to the second die 106 where the translation logic 116 may translate the D2D protocol information in one or more transaction units to a reconstructed OD protocol transaction.

Fig. 2 illustrates a second embodiment of a protocol translation scheme in accordance with example embodiments of the disclosure. The protocol translation scheme 200 illustrated in Fig. 2 may include one or more elements that may be similar to those illustrated in other figures in which similar elements may be indicated by reference numbers ending in, and/or containing, the same digits, letters, and/or the like.

The protocol translation scheme 200 illustrated in Fig. 2 may include one or more initiators 201-0, 201-1, ... having one or more OD manager interfaces 203-0, 203-1, ... connected through one or more corresponding sets of one or more channels 211-0, 211-1, ... to one or more corresponding OD subordinate interfaces 209-0, 209-1, ... and/or translation logic 215 and/or D2D system 207 on die 205. The protocol translation scheme 200 may also include one or more targets 102-0, 102--1, ... having one or more OD subordinate interfaces 204-0, 204-1, ... connected through one or more corresponding sets of one or more channels 212-0, 212-1, ... to one or more corresponding OD manager interfaces 210-0, 210-1, ... and/or translation logic 216 and/or D2D system 208 on die 206.

In some embodiments, the structure and/or operation of one or more of the individual OD interfaces 203, 204, 209, and/or 210 and/or corresponding sets of one or more channels 211 and/or 212 may be similar to those illustrated and described with respect to Fig. 1. However, in the embodiment illustrated in Fig. 2, some interfaces and/or channels (e.g., at or connected to the same initiator and/or target) may be configured to aggregate the bandwidth and/or other properties of multiple interfaces and/or channels. In some embodiments, multiple interfaces 203, 204, 209, and/or 210 at a common component may be referred to and/or characterized as an OD interface port or an OD port.

Although the OD interfaces 203, 204, 209, and/or 210 and/or corresponding sets of one or more channels 211 and/or 212 may be illustrated as using D2D system scheme 214 with single D2D systems 207 and/or 208 at dies 205 and/or 206, respectively, in some embodiments, multiple instances of D2D systems may be used, for example, to support additional bandwidth that may be implemented with multiple OD interfaces.

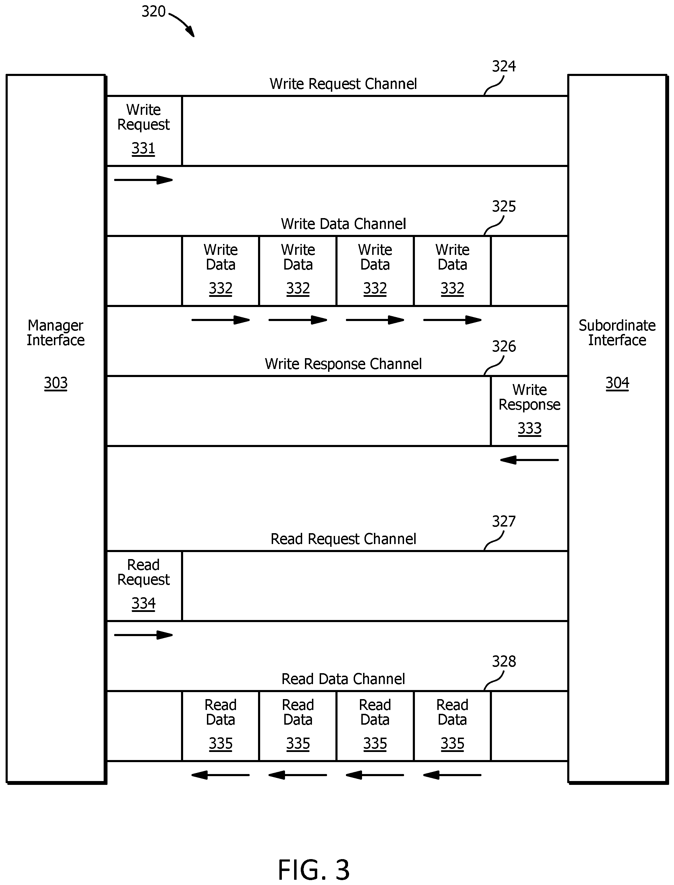

Fig. 3 illustrates an embodiment of a channel architecture for an OD protocol in accordance with example embodiments of the disclosure. The channel architecture 320 illustrated in Fig. 3 may be implemented with, or be used to implement, any of the protocol translation schemes disclosed herein, including those illustrated and/or described with respect to Fig. 1 and/or Fig. 2.

The channel architecture 320 may include a manager interface 303 (which may be located, for example, at an initiator) and a subordinate interface 304 (which may be located, for example, at a target) that may communicate using a write request channel 324, a write data channel 325, a write response channel 326, a read request channel 327, and/or a read data channel 328.

The write request channel 324 may be implemented with one or more signals that may be used for a write request 331 to initiate a write transaction. Examples of signals used to implement the write request channel 324 may include one or more of a write address, one or more signals that may indicate an amount of write data (e.g., write size, write length, and/or the like), a burst attribute, a valid signal, a ready signal, a cache attribute (e.g., information about how a transaction may progress through a system, how caches and/or buffers may handle a request, and/or the like), a memory protection attribute, a transaction identifier, one or more user signals (e.g., to implement an extension to a write request), a quality-of-service (QoS) signal, a region signal (e.g., an identifier for an address region), one or more signals for error checking and/or correcting (e.g., parity signals), and/or the like. Information flow on the write request channel 324 may generally be from the manager interface 303 to the subordinate interface 309 as illustrated by the arrow, but one or more signals (e.g., a ready signal) may be transmitted from the subordinate interface 309 to the manager interface 303.

The write data channel 325 may be implemented with one or more signals that may be used to transfer write data 332 from the manager interface 303 to the subordinate interface 309 as part of a write transaction based on the write request 331. Examples of signals used to implement the write data channel 325 may include one or more write data signals and/or one or more of a valid signal, a ready signal, a last signal (e.g., to signal a last transfer), one or more strobe signals (e.g., to indicate which byte lanes of the write data channel contain valid information), one or more strobe on/off signals, one or more user signals (e.g., to implement an extension to write data), and/or the like. Information flow on the write data channel 325 may generally be from the subordinate interface 309 to the manager interface 303 as illustrated by the arrow, but one or more signals (e.g., a ready signal) may be transmitted from the manager interface 303 to the subordinate interface 309.

The write response channel 326 may be implemented with one or more signals that may be used for a write response 333, for example, to indicate a result of a write transaction. Examples of signals used to implement the write response channel 326 may include one or more of a valid signal, a ready signal, a write response signal (e.g., to indicate a result of one or more write transfers, transactions, and/or the like), a completion signal (e.g., to indicate a completion response), one or more user signals (e.g., to implement an extension to a write response), an identifier signal (e.g., a transaction identifier for a write channel), and/or the like. Information flow on the write response channel 326 may generally be from the subordinate interface 309 to the manager interface 303 as illustrated by the arrow, but one or more signals (e.g., a ready signal) may be transmitted from the manager interface 303 to the subordinate interface 309.

The read request channel 327 may be implemented with one or more signals that may be used for a read request 334 to initiate a read transaction. Examples of signals used to implement the read request channel 327 may include one or more of a read address, one or more signals that may indicate an amount of read data (e.g., read size, read length, and/or the like), a burst attribute, a valid signal, a ready signal, a cache attribute (e.g., information about how a transaction may progress through a system, how caches and/or buffers may handle a request, and/or the like), a memory protection attribute, a transaction identifier, one or more user signals (e.g., to implement an extension to a read request), a quality-of-service (QoS) signal, a region signal (e.g., an identifier for an address region), one or more signals for error checking and/or correcting (e.g., parity signals), and/or the like. Information flow on the read request channel 327 may generally be from the manager interface 303 to the subordinate interface 309 as illustrated by the arrow, but one or more signals (e.g., a ready signal) may be transmitted from the subordinate interface 309 to the manager interface 303.

The read data channel 328 may be implemented with one or more signals that may be used to transfer read data 335 from the subordinate interface 309 to the manager interface 303 as part of a read transaction based on a read request 334. Examples of signals used to implement the read data channel 328 may include one or more read data signals and/or one or more of a valid signal, a ready signal, a last signal (e.g., to signal a last transfer), a read response signal (e.g., to indicate whether the apparatus having the subordinate interface 309 successfully read the requested day, whether the data in a specific transfer and/or transaction is valid, and/or the like), one or more read chunking and/or read strobe signals, one or more user signals (e.g., to implement an extension to read data), and/or the like. Information flow on the read data channel 325 may generally be from the subordinate interface 309 to the manager interface 303 as illustrated by the arrow, but one or more signals (e.g., a ready signal) may be transmitted from the manager interface 303 to the subordinate interface 309.

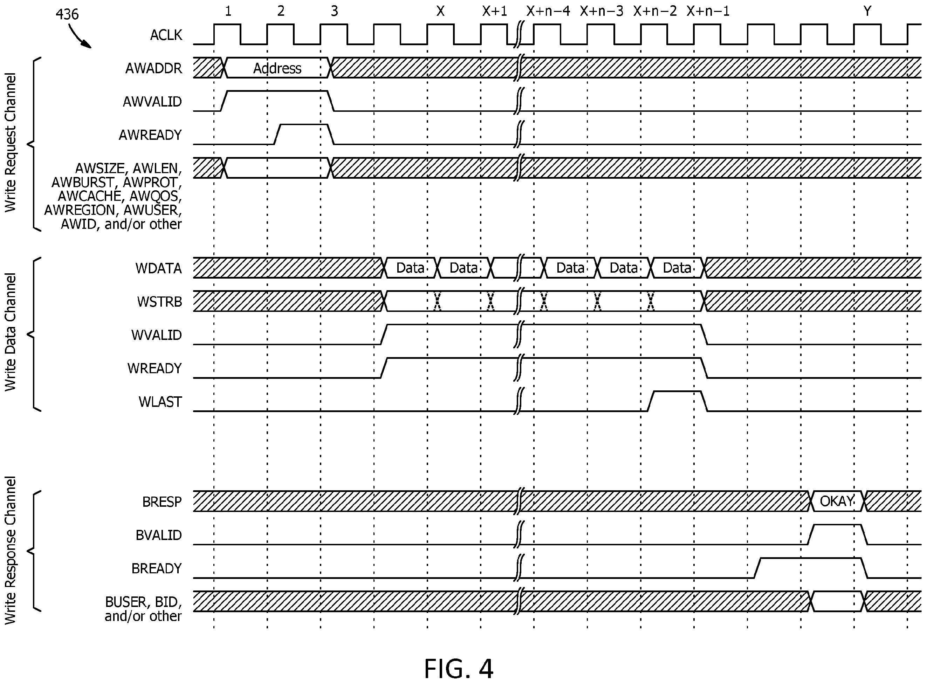

Fig. 4 illustrates an embodiment of a write transaction using an on-die protocol in accordance with example embodiments of the disclosure. The transaction 436 illustrated in Fig. 4 may be implemented with, or used to implement, any of the channel architectures disclosed herein. One or more signals used by the write request channel, write data channel, and/or write response channel may use, for example, the nomenclature set forth in Table 1.

The transaction 436 may be initiated by the write request on the write request channel using one or more rising edges of clock cycles 1 through 3 of the ACLK signal. Write data may be transferred on the write data channel using the rising edges of clock cycles X through X+n-1. A write response may be transferred on the write response channel using a rising edge of clock cycle Y.

For purposes of illustration, the write transaction 436 may be described in the context of signals used with an AXI protocol, but the same or similar operations may be implemented with any other OD protocols such as OCP, DTL, and/or the like.

The timings illustrated in Fig. 4 are for general information only and may be shown with time spacing between some operations on different channels. In some embodiments, however, operations on different channels may be performed in an overlapping or parallel manner. For example, in some embodiments, information on one or more of the AWADDR, AWVALID, WDATA, and/or WVALID signals may overlap and/or be transferred on the same clock edges and/or during the same clock cycles.

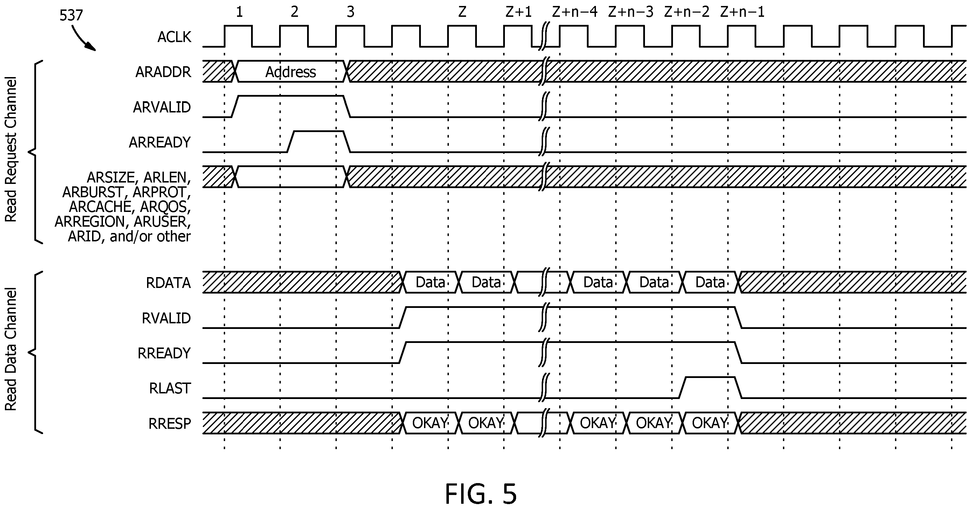

Fig. 5 illustrates an embodiment of a read transaction using an on-die protocol in accordance with example embodiments of the disclosure. The transaction 537 illustrated in Fig. 5 may be implemented with, or used to implement, any of the channel architectures disclosed herein. One or more signals used by the read request channel and/or read data channel may use, for example, the nomenclature set forth in Table 1.

The transaction 537 may be initiated by a read request on the read request channel using the rising edges of clock cycles 1 through 3 of the ACLK signal. Read data may be transferred on the read data channel using the rising edges of clock cycles Z through Z+n-1.

For purposes of illustration, the read transaction 537 may be described in the context of signals used with an AXI protocol, but the same or similar operations may be implemented with any other OD protocol such as OCP, DTL, and/or the like.

The timings illustrated in Fig. 4 are for general information only and may be shown with time spacing between some operations on different channels. In some embodiments, however, operations on different channels may be performed in an overlapping or parallel manner.

**Table 1**

| Write Request Channel | |
|---|---|
| AWVALID | Valid indicator |
| AWPROT | Access attribute(s) |
| AWCACHE | Memory attribute(s) |
| AWBURST | Burst attribute |
| AWSIZE | Transaction size |
| AWID | Transaction identifier for write channel(s) |
| AWADDR | Transaction address |
| AWLEN | Transaction length |
| AWQOS | QoS identifier |
| AWREGION | Region identifier |
| AWUSER | User-implemented extension to a request |

| Write Data Channel | |
|---|---|
| WDATA | Write data |
| WVALID | Valid indicator |
| WLAST | Last write data |
| WSTROBE | Write data strobe(s) |

| Write Response Channel | |
|---|---|
| BVALID | Valid indicator |
| BRESP | Write response |
| BUSER | User-implemented extension to a write response |
| BID | Transaction identifier for write channel(s) |

| Read Request Channel | |
|---|---|
| ARVALID | Valid indicator |
| ARPROT | Access attribute(s) |
| ARCACHE | Memory attribute(s) |
| ARBURST | Burst attribute |
| ARSIZE | Transaction size |
| ARID | Transaction identifier for read channel(s) |
| ARADDR | Transaction address |
| ARLEN | Transaction length |
| ARQOS | QoS identifier |
| ARREGION | Region identifier |
| ARUSER | User-implemented extension to a request |

| Read Data Channel | |
|---|---|
| RDATA | RVALID |
| RVALID | Valid indicator |
| RLAST | Last read data |
| RRESP | Read response |
| RID | Transaction identifier for read channel(s) |

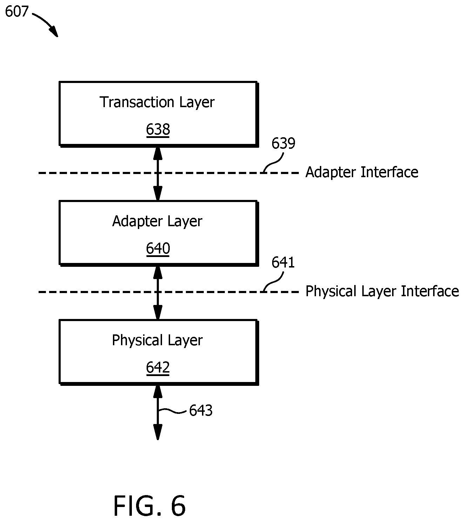

Fig. 6 illustrates an embodiment of a D2D system in accordance with example embodiments of the disclosure. The D2D system 607 may be implemented with, or used to implement, any of the protocol translation schemes disclosed herein, including those illustrated and/or described with respect to Fig. 1 and/or Fig. 2. For purposes of illustration, the D2D system 607 and/or other components, configurations, formats, and/or the like, of a D2D system may be described with respect to Fig. 6 and/or other drawings in the context of a UCIe protocol, but the same or similar logical and/or physical structures, operations, functions, and/or the like, may be implemented with any other D2D protocol such as BOW, OpenHBI, and/or the like.

The D2D system 607 may include a transaction layer 638, an adapter layer 640 (which may also be referred to as an adapter), and/or a physical layer 642. The transaction layer 638 and the adapter layer 640 may interact through an adapter interface 639. In some embodiments, the adapter interface 639 may be referred to and/or characterized as a transfer-unit-aware interface (e.g., a flit-aware D2D interface (FDI)). The adapter layer 640 and physical layer 642 may interact through a physical layer interface 641. In some embodiments, the physical layer interface 641 may be referred to and/or characterized as a raw interface. The physical layer 642 may transmit and/or receive information through one or more interfaces 643. In some embodiments, and depending on the implementation details, some or all of the transaction layer 638, adapter layer 640, and/or the physical layer 642 may implement a transport layer. In some embodiments, and depending on the implementation details, some or all of the transaction layer 638, adapter layer 640, and/or the physical layer 642 may implement a link layer.

The physical layer 642 may include apparatus to implement one or more D2D interfaces 643 between D2D systems (e.g., D2D systems on separate dies). An interface 643 may include a group of one or more lanes. Some interfaces 643 may be implemented with one or more modules, each of which may include one or more lanes (e.g., 16 lanes per module, 64 lanes per module, and/or the like).

In some embodiments, an interface 643 may be characterized as having an N-byte data path where N may indicate the total number of data lanes in the interface 643. For example, an interface implemented with four modules having 16 data lanes each may have a 64-byte data path, and an interface implemented with two modules having 64 data lanes each may have a 128-byte data path. In some embodiments, one or more lanes of a module may be characterized as operating at the same data rate and/or width. In some embodiments, lanes of multiple modules operating with a common adapter layer 640 may operate at the same data rate and/or width.

The adapter layer 640 may coordinate one or more operations of the transaction layer 638 and/or physical layer 642 to transfer information across one or more interfaces 643 implemented by the physical layer 642. The adapter layer 640 may implement one or more of a wide variety of functions, operations, features, and/or the like, in accordance with example embodiments of the disclosure. For example, the adapter layer 640 may implement a cyclic redundancy check (CRC) to detect errors, and/or a retry mechanism to retransmit data. The adapter layer 640 may be requested, configured, and/or the like, to implement a CRC and/or a retry mechanism, for example, by the transaction layer 638. As another example, the adapter layer 640 may negotiate a protocol, mode, transaction unit format (e.g., raw, flit, and/or the like), and/or the like, with another D2D system (e.g., a remote partner) and communicate the negotiated configuration to the transaction layer 638. As a further example, the adapter layer 640 may implement an arbitration (ARB) and/or multiplexing (MUX) function if the adapter layer 640 is configured to support more than one protocol and/or instances of a protocol (e.g., using one or more protocol stacks).

The transaction layer 638 may implement one or more protocols, modes, formats, and/or the like to transfer information across one or more interfaces 643 through the adapter layer 640 and physical layer 642. Examples of protocols that may be implemented by the transaction layer 638 may include one or more standard protocols (e.g., PCIe, CXL, and/or the like), one or more streaming protocols, and/or the like. In some embodiments, a streaming protocol (which may provide one or more generic modes for implementing a user defined protocol) may be used to implement a protocol translation scheme in accordance with example embodiments of the disclosure. For example, the transaction layer 638 may implement a streaming protocol in which information from an OD protocol may be packed into a raw format, a latency-oriented (e.g., latency-optimized) flit format, and/or the like, in accordance with example embodiments of the disclosure. In some embodiments, some or all of the adapter layer 640 may be bypassed when using a raw format. For example, in some implementations, when using a raw format transaction unit, the adapter layer 640 may transfer information from the transaction layer 638 to the physical layer 642 without modification. Additionally, or alternatively, when using a raw format transaction unit, a retry mechanism of the adapter layer 640 may be unused.

In some embodiments, a first D2D system (e.g., a first instance of the D2D system 607) may be implemented on a first die, and a second D2D system (e.g., a second instance of the D2D system 607) may be implemented on a second die. The first and second interfaces may be connected using one or more connections (e.g., electrical connections, optical connections, and/or the like) that may be implemented with one or more contacts, solder connections, conductors, transmission lines, and/or the like, to support one or more communication interfaces 643 between the first and second D2D systems. For example, the first and second D2D systems may be connected through one or more conductors (e.g., conductive traces configured as transmission lines that may have a characteristic impedance) running through, over, along, and/or the like, one or more substrates, interposers, bridges, and/or the like).

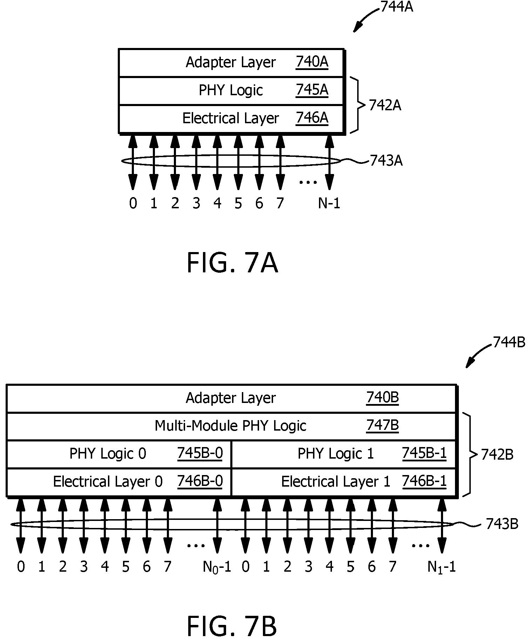

Fig. 7A illustrates an embodiment of a module configuration for a D2D system in accordance with example embodiments of the disclosure. The module configuration 744A illustrated in Fig. 7A may be implemented with, or used to implement, one or more interfaces for any of the D2D systems disclosed herein.

The module configuration 744A may include an adapter layer 740A and a physical layer 742A. The physical layer 742A may include a logical physical layer 745A and an electrical layer (e.g., an analog front end (AFE)) 746A. The electrical layer 746A may include transmitters and/or receivers for any number N of lanes (e.g., 16 lanes (x16), 32 lanes (x32), 64 lanes (x64), and/or the like) that may form an interface 743A. In some embodiments, an interface 743A may be characterized as having an N-byte data path where N may indicate the total number of data lanes in the interface 743A. Thus, in the module configuration 744A illustrated in Fig. 7A, the width of the N-byte data path may be the same as the number of data lanes in the electrical layer 764. In some embodiments, one or more (e.g., all) of the lanes of a module may transfer information in parallel and/or at the same data rate (e.g., using a common clock signal). For example, in some embodiments, each byte of the N-byte data path may be transferred on a separate data lane. In some embodiments, each bit of a byte may be transferred sequentially on the corresponding data lane (e.g., each bit may be transferred during a unit interval (UI).

Fig. 7B illustrates an embodiment of a multi-module configuration for a D2D system in accordance with example embodiments of the disclosure. The multi-module configuration 744B illustrated in Fig. 7B may be implemented with, or used to implement, one or more interfaces for any of the D2D systems disclosed herein.

The multi-module configuration 744B illustrated in Fig. 7B may include one or more elements that may be similar to those illustrated in Fig. 7A in which similar elements may be indicated by reference numbers ending in, and/or containing, the same digits, letters, and/or the like. However, in the multi-module configuration 744B illustrated in Fig. 7B, the physical layer 742B may include a first instance of a logical physical layer 745B-0 and a second instance of a logical physical layer 745B-1. The physical layer 742B may also include a first instance of an electrical layer 746B-0 having N₀ data lanes and a second instance of an electrical layer 746B-1 having Ni data lanes.

The physical layer 742B may further include a multi-module logical physical layer 747B that may be used, for example, to coordinate the operations of the two instances of logical physical layers 745B-0 and 745B-1 and/or the operations of the two instances of electrical layers 746B-0 and 746B-1. For example, in some embodiments, the multi-module logical physical layer 747B may cause the separate instances of the logical physical layers 745B-0 and 745B-1 and/or electrical layers 746B-0 and 746B-1 to operate in parallel, at the same data transfer rate (e.g., using a common clock signal), and/or the like. Depending on the implementation details, this may enable the separate instances of the logical physical layers 745B-0 and 745B-1 and/or electrical layers 746B-0 and 746B-1 to operate with the adapter layer 740B (e.g., a single instance of the adapter layer 740B).

In some embodiments, and depending on the implementation details, a multi-module configuration may be configured to cause the data lanes of the different logical physical layers 745B-0 and 745B-1 and/or electrical layers 746B-0 and 746B-1 to operate as a single logical and/or physical interface. In some embodiments, an interface 743B may be characterized as having an N-byte data path where N may indicate the total number of data lanes in the interface 743B. Thus, in the module configuration 740B illustrated in Fig. 7B, the width of the N-byte data path may be N = N₀ + Ni which, an embodiment having electrical layers with equal numbers of data lanes, may be two times the width of the number of data lanes in each of the electrical layers 764B-0 and 764B-1 (e.g., N=32 for 2x16 lane modules, N=64 for 2x32 lane modules, N=128 for 2x64 lane modules, and/or the like).

For purposes of illustration, the multi-module configuration 744B may be shown as having two modules each having the same number of lanes, but in other embodiments, any number of modules, each having any number of lanes may be used. Moreover, modules may have different numbers of lanes may be used together to form a logical and/or physical interface. The lanes described herein may be referred to as main data path lanes which may be implemented, for example, with dual-simplex signals, and the module configurations described herein may implement one or more additional signals (not shown) such as sideband signals, forwarded clocks, valid signals, and/or the like.

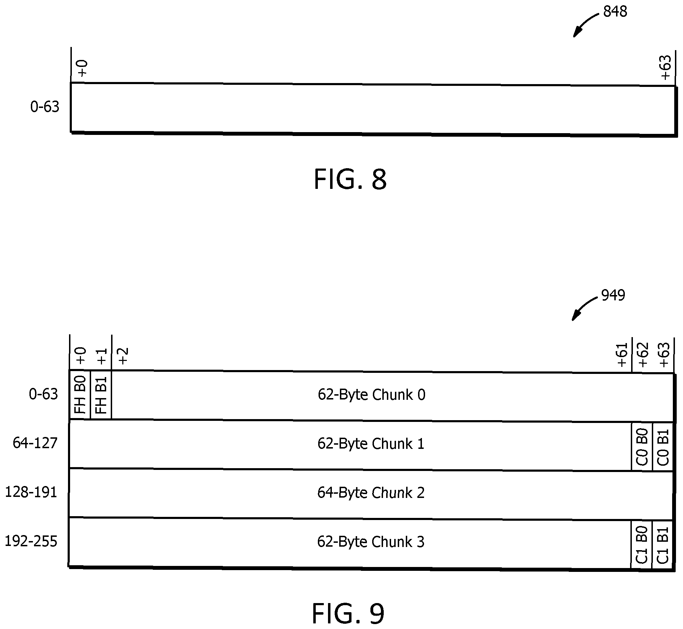

Fig. 8 illustrates an example embodiment of a raw format for a transaction unit in accordance with example embodiments of the disclosure. The raw format 848 illustrated in Fig. 8 may be used to implement, or may be implemented with, any of the protocol translation schemes disclosed herein. For example, the raw format 848 may be used to transfer information between the transaction layer 638, the adapter layer 640, and/or the physical layer 642 of the D2D system 607 illustrated in Fig. 6.

In the example embodiment illustrated in Fig. 8, the raw format 848 may include 64 bytes numbered 0 through 63 that may be transmitted as a unit. In other embodiments, however, a raw format may include any amount of information (e.g., any number of bytes). The number of transfers involved in transmitting (and/or receiving) the 64-byte raw format 848 may depend on a width of a data path for a D2D system. For example, with a 64-byte data path (e.g., using an interface with a single x64 module or four x16 modules), the raw format 848 may be transmitted using a single transfer (e.g., each of bytes 0-63 may be transferred on a corresponding byte lane during unit intervals 0-7). With a 32-byte data path (e.g., using an interface with a single x63 module or two x16 modules), the raw format 848 may be transmitted using a two transfer (e.g., each of bytes 0-31 may be transmitted on a corresponding one of the 32-byte lanes using a first transfer during unit intervals 0-7, and each of bytes 32-63 may be transmitted on a corresponding one of the 32-byte lanes using a second transfer during unit intervals 8-15).

In some embodiments, the raw format 848 may be used to implement a streaming (e.g., user-defined) protocol in which a transaction layer may transfer some or all of a transaction unit of information (e.g., 64 bytes) to a physical layer. In some embodiments, and depending on the implementation details, a transaction layer may bypass one or more operations of an adapter layer. For example, in some embodiments, a transaction layer may transfer some or all of a transaction unit of information to a physical layer with little or no modification by an adapter layer. Similarly, at a corresponding D2D system at a receiving partner, a physical layer may transfer some or all of a transaction unit of information to a transaction layer without modification by an adapter layer.

As another example, in some embodiments, one or more data reliability features (e.g., an error checking mechanism such as a CRC mechanism, a retry mechanism, and/or the like) may be disabled when using a raw format 848.

Fig. 9 illustrates an example embodiment of a latency-oriented flit format for a transaction unit in accordance with example embodiments of the disclosure. The latency-oriented flit format 949 illustrated in Fig. 9 may be used to implement, or may be implemented with, any of the protocol translation schemes disclosed herein. For example, the latency-oriented flit format 949 may be used to transfer information between the transaction layer 638, the adapter layer 640, and/or the physical layer 642 of the D2D system 607 illustrated in Fig. 6.

For purposes of illustration, the latency-oriented flit format 949 may be implemented as a latency-optimized flit format having 256 bytes divided into four 64-byte portions (e.g., bytes 0-63, bytes 64-127, bytes 128-191, and/or bytes 192-255), one or more (e.g., each) of which may be transmitted as a unit. In other embodiments, however, any number portions of any sizes may be used. One or more (e.g., each) of the portions of the flit format 949 may include a portion of user data that may be referred to as a chunk. The number of transfers involved in transmitting (and/or receiving) the 64-byte raw format 848 may be based on and/or affected by a width of a data path for a D2D system in a manner similar to that described above with respect to the raw format 848 (e.g., each of the four 64-byte portions of the latency-oriented flit format 949 may be transmitted using a single transfer on a 64-byte data path).

In some embodiments, the latency-oriented flit format 949 may be used to implement a streaming (e.g., user-defined) protocol in which a transaction layer may transfer some or all of a flit of user information (e.g., 250 bytes of user information organized as four chunks within a 256-byte flit) to an adapter layer which may add additional information to the flit such as some or all of flit header bytes FHB0 and/or FHB1 to the portion in bytes 0-63. Additionally, or alternatively, an adapter layer may add data reliability information such as CRC code bytes C0 B0 and C0 B1 to the portion in bytes 64-127 and CRC codes C1 B0 and C1 B1 to the portion in bytes 192-255 which adapter layers at transmitting and/or receiving partners (e.g., D2D systems at transmitting and receiving ends of an interface) may use to implement error detection and/or retry mechanisms.

In some embodiments, the flit header bytes FHB0 and/or FHB1 may include information provided by a transaction layer and/or an adapter layer such as one or more protocol, mode, and/or format identifiers, a stack identifier, acknowledge (ACK) and/or negative-acknowledge (NACK) information, and/or the like.

For purposes of illustration, the user information may be organized as a 62-byte chunk 0 in bytes 2-63, a 62-byte chunk 1 in bytes 64-125, a 64-byte chunk 2 in bytes 128-191, and a 62 byte chunk 3 in bytes 192-253, but any other number and/or combination of chunks of user information may be used. Additionally, or alternatively, any other amounts and/or locations may be used for the flit header and/or CRC code information. In some embodiments, some or all of the content of chunk 0, chunk 1, chunk 2, and/or chunk 3 may be provided by a transaction layer, for example, to implement a protocol translation scheme in accordance with example embodiments of the disclosure.

In some embodiments, the latency-oriented flit format 949 may enable latency-sensitive information in a portion (e.g., chunk 0 and/or chunk 1 of user information) to be transferred and/or processed before other chunks of the flit format 949 are transferred. Depending on the implementation details, this may reduce the latency involved in transferring and/or processing latency-sensitive information. Moreover, by implementing a relatively early CRC and/or retry mechanism (e.g., by placing CRC information in bytes 126 and/or 127), the latency-oriented flit format 949 may ensure a level of reliability (e.g., BER) for relatively early arriving portions of the flit. For example, C0B0 and C0B1 may be used to perform error detection of information in the first 128 bytes of the flit format 949 before the last 128 bytes are transferred.

Referring again to Fig. 1, in the absence of one or more techniques in accordance with example embodiments of the disclosure, transferring OD protocol information 117 and/or 118 between the initiator 101 and the target 102 using a D2D interconnect may be difficult. For example, some or all of the OD protocol information 117 and/or 118 (e.g., for one or more transactions, transfers, and/or the like) may be in the form of signal operations such as signal states, timings, patterns, and/or the like that may be difficult and/or inefficient to transfer using a D2D protocol, thereby increasing latency, reducing bandwidth, increasing energy consumption, and/or the like.

However, one or more techniques in accordance with example embodiments of the disclosure may enable OD protocol information 117 and/or 118 to be translated to a form that may be transferred using a D2D protocol. For example, in some embodiments, OD protocol information 117A may be packed in one or more transaction units in a D2D protocol format at a first D2D system 107 on a first die 105 and transmitted to a second D2D system 108 at a second die 106 where the OD protocol information 117B may be unpacked (e.g., reconstructed) from the one or more transaction units. Depending on the implementation details, a protocol translation in accordance with example embodiments of the disclosure may reduce latency, increase bandwidth, reduce energy consumption, and/or the like.

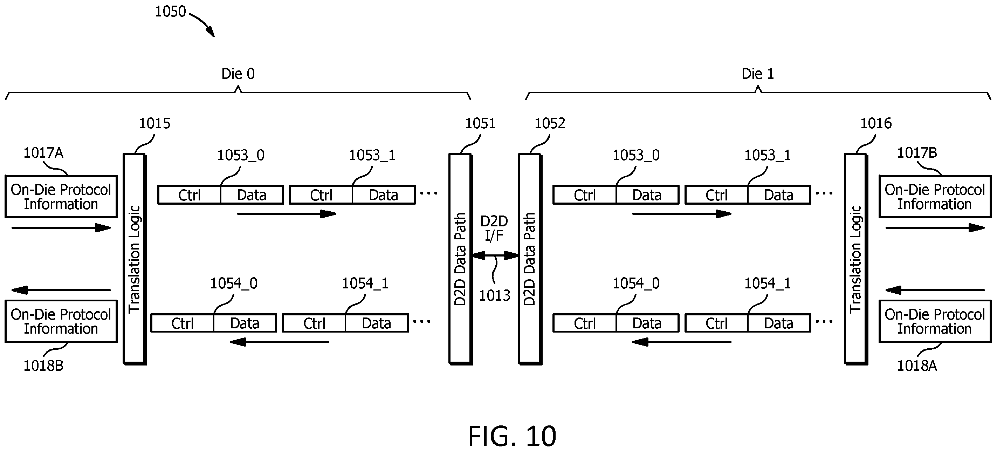

Fig. 10 illustrates a first embodiment of a transaction unit scheme in accordance with example embodiments of the disclosure. The transaction unit scheme 1050 illustrated in Fig. 10 may be used to implement, or be implemented with, any of the protocol translation schemes disclosed herein. For example, the transaction unit scheme 1050 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like), module and/or path configurations, and/or the like, illustrated and described with respect to Figs. 3-9.

Referring to Fig. 10, the transaction unit scheme 1050 may include first translation logic 1015 and a first D2D data path 1051 located at a first die (Die 0), and second translation logic 1016 and a second D2D data path 1052 located at a second die (Die 1). The first D2D data path 1051 and second D2D data path 1052 may be connected by a D2D interface 1013. In some embodiments, the first translation logic 1015 and/or second translation logic 1016 may be implemented with or used to implement, for example, at least partially, a transaction layer such as the transaction layer 638 illustrated and described with respect to Fig. 6.

The first translation logic 1015 may receive OD protocol information 1017A (e.g., from an initiator), for example, using an OD interface such as the OD manager interface 103 illustrated in Fig. 1. The first translation logic 1015 may generate a stream of one or more transaction units 1053_0, 1053_1, ... by translating the OD protocol information 1017A to the stream of one or more transaction units 1053_0, 1053_1, ... , for example, by packing OD protocol information such as signal operations (e.g., signal states, timings, patterns, and/or the like) into the one or more transaction units 1053_0, 1053_1, ... (which may be referred to individually and/or collectively as 1053).

The D2D data paths 1051 and 1052 and D2D interface 1013 may transfer the one or more transaction units 1053 to the second translation logic 1016 which may translate the one or more transaction units 1053 to a reconstructed version of the OD protocol information 1017B, for example, by unpacking the OD protocol information from the one or more transaction units 1053. The second translation logic 1016 may send the reconstructed version of the OD protocol information 1017B (e.g., to a target), for example, using an OD interface such as the OD subordinate interface 104 illustrated in Fig. 1.

Any of the one or more transaction units 1053 may include control information (Ctrl) and/or data information (Data). For example, if the OD protocol information 1017A and/or 1018B includes information for a write transaction and a read transaction, a first transaction unit 1053_0 may have a first portion including control information for the write transaction (e.g., a write address, write size, write length, write ID, and/or the like, for a write request) and a second portion including data information for the write transaction (e.g., the first byte(s) of write data, valid, strobe, last, and/or the like). A second transaction unit 1053_1 may include all data information for the write transaction (e.g., the next byte(s) of write data, valid, strobe, last, and/or the like). A third transaction unit 1053_2 (which may be indicated by the ellipses (...) subsequent to the second transaction unit 1053_1 ) may include a first portion including data information for the write transaction (e.g., the last byte(s) of write data for the write transaction, valid, strobe, last, and/or the like) and a second portion including control information for the read transaction (e.g., a read address, read size, read length, read ID, and/or the like, for a read request).

The first translation logic 1015 and second translation logic 1016 may operate in a similar manner but opposite direction to transfer OD protocol information 1018A (e.g., from a target) from Die 1 to Die 0 (e.g., to an initiator). For example, the second translation logic 1016 may generate a stream of one or more transaction units 1054_0, 1054_1, ... (which may be referred to individually and/or collectively as 1054) by packing the OD protocol information 1018A into the one or more transaction units 1054, and the first translation logic 1015 may unpack the one or more transaction units 1054 to generate a reconstructed version of the OD protocol information 1018B.

Any of the one or more transaction units 1054 may include control information (Ctrl) and/or data information (Data). For instance, continuing the example discussed above in which OD protocol information 1017A and/or 1018B may include information for a write transaction and a read transaction, a first transaction unit 1054_0 may have a first portion including control information for the write transaction (e.g., a write response) and a second portion including data information for the read transaction (e.g., the first byte(s) of read data, valid, last, and/or the like). A second transaction unit 1054_1 may include all data information for the read transaction (e.g., the next byte(s) of read data, valid, last, and/or the like). A third transaction unit 1054_2 (which may be indicated by the ellipses (...) subsequent to the second transaction unit 1054_1 ) may include a first portion including data information for the read transaction (e.g., the last byte(s) of read data, valid, last, and/or the like) and a second portion that may include control information (e.g., a write response for a different write transaction), data information (e.g., read data for a different read transaction), and/or the like.

Thus, in some embodiments, the transaction unit scheme 1050 may translate one or more OD protocol transactions implemented with OD protocol information 1017A and/or 1018B at Die 0 to one or more transaction units that may be transferred to Die 1 using a D2D protocol through interface 1013 and translated back to one or more OD protocol transactions implemented with OD protocol information 1017B and/or 1018A at Die 1.

In some embodiments, the first translation logic 1015 may implement, at least partially, an OD protocol interface (e.g., an OD subordinate interface to communicate with a corresponding OD manager interface). In some embodiments, the second translation logic 1016 may implement, at least partially, an OD protocol interface (e.g., an OD manager interface to communicate with a corresponding OD subordinate interface).

In some embodiments, the first translation logic 1015 and/or second translation logic 1016 may be implemented with or used to implement, for example, at least partially, a transaction layer such as the transaction layer 638 illustrated and described with respect to Fig. 6.

The arrangement of transaction units 1053 and/or 1054 in Fig. 10 and/or other transaction units illustrated in other drawings may not necessarily indicate an order in which the transaction units may be transferred.

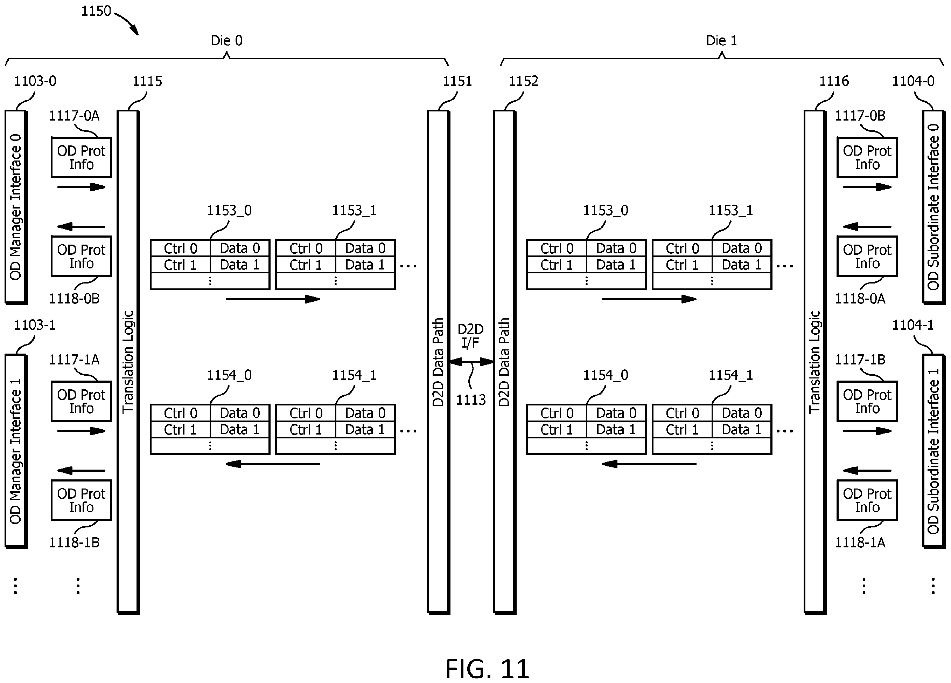

Fig. 11 illustrates a second embodiment of a transaction unit scheme in accordance with example embodiments of the disclosure. The transaction unit scheme 1150 illustrated in Fig. 11 may be used to implement, or be implemented with, any of the protocol translation schemes disclosed herein. For example, the transaction unit scheme 1150 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like), module and/or path configurations, and/or the like, illustrated and described with respect to Figs. 3-9.

Referring to Fig. 11, the transaction unit scheme 1150 may include one or more elements that may be similar to those illustrated in other figures in which similar elements may be indicated by reference numbers ending in, and/or containing, the same digits, letters, and/or the like.

Additionally, or alternatively, the transaction unit scheme 1150 may translate OD protocol information from more than one OD interface on at least one of the two dies. For example, the first translation logic 1115 may be connected to OD manager interfaces 1103-1, 1103-2, ... to exchange OD protocol information 1117-0A and/or 1118-0B, 1117-1A and/or 1118-1B, ..., respectively. Similarly, the second translation logic 1116 may be connected to OD subordinate interfaces 1104-0, 1104-1, .... to exchange OD protocol information 1117-0B and/or 1118-0A, 1117-1B and/or 1118-1A, ..., respectively.

In a manner similar to the transaction unit scheme 1050 illustrated in Fig. 10, the first translation logic 1115 and/or second translation logic 1116 may pack and/or unpack OD protocol information for one or more transactions into and/or from one or more transaction units for a D2D system.

Additionally, or alternatively, the first translation logic 1115 and/or second translation logic 1116 may pack and/or unpack OD protocol information for one or more OD interfaces into and/or from one or more transaction units for a D2D system. For example, any of transaction units 1153_0, 1153_1, ... may include control information (Ctrl 0, Ctrl 1, ...) for OD manager interfaces 1103-0, 1103-1, ...., respectively, and/or data information (Data 0, Data 1, ...) for OD manager interfaces 1103-0, 1103-1, ..., respectively. Similarly, any of transaction units 1154_0, 1154_1, ... may include control information (Ctrl 0, Ctrl 1, ...) for OD subordinate interfaces 1104-0, 1104-1, ...., respectively, and/or data information (Data 0, Data 1, ...) for OD subordinate interfaces 1104-0, 1104-1, ..., respectively.

Thus, in some embodiments, and depending on the implementation details, the transaction unit scheme 1150 may combine one or more types of information, for one or more transactions, and/or for one or more OD interfaces in one or more transaction units that may be transferred between dies using a D2D interconnect in accordance with example embodiments of the disclosure.

In some embodiments, the transaction unit scheme 1150 may translate one or more OD protocol transactions implemented with OD protocol information 1117-0A, 1118-0B, 1117-1A, and/or 1118-1B at Die 0 to one or more transaction units that may be transferred to Die 1 using a D2D protocol through D2D interface 1113 and translated back to one or more OD protocol transactions implemented with OD protocol information 1117-0B, 1118-0A, 1117-1B, and/or 1118-1A at Die 1.

In some embodiments, the first translation logic 1115 may implement, at least partially, an OD protocol interface (e.g., an OD subordinate interface to communicate with a corresponding OD manager interface). In some embodiments, the second translation logic 1116 may implement, at least partially, an OD protocol interface (e.g., an OD manager interface to communicate with a corresponding OD subordinate interface).

In some embodiments, the first translation logic 1115 and/or second translation logic 1116 may be implemented with or used to implement, for example, at least partially, a transaction layer such as the transaction layer 638 illustrated and described with respect to Fig. 6.

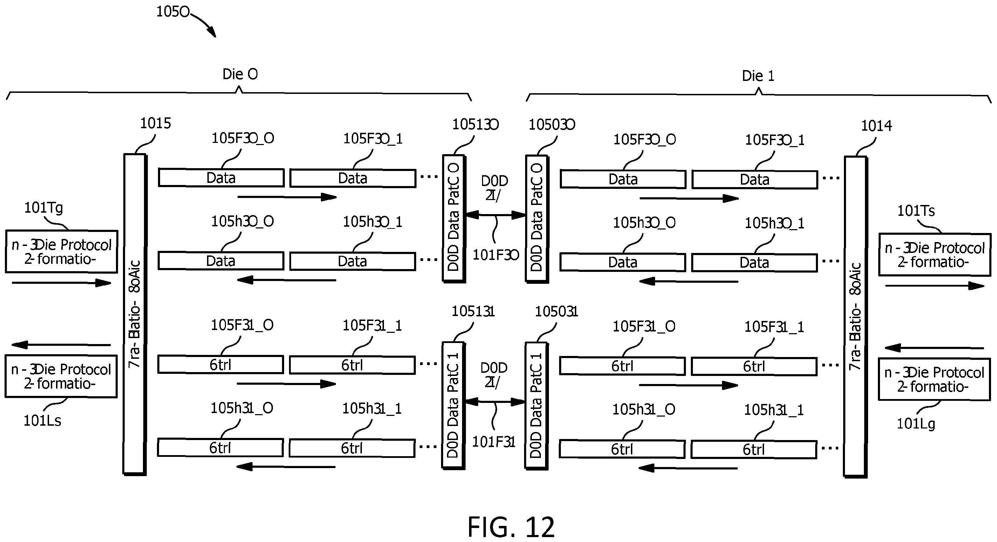

Fig. 12 illustrates a third embodiment of a transaction unit scheme in accordance with example embodiments of the disclosure. The transaction unit scheme 1250 illustrated in Fig. 12 may be used to implement, or be implemented with, any of the protocol translation schemes disclosed herein. For example, the transaction unit scheme 1250 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like), module and/or path configurations, and/or the like, illustrated and described with respect to Figs. 3-9. In some embodiments, the first translation logic 1215 and/or second translation logic 1216 may be implemented with or used to implement, for example, at least partially, a transaction layer such as the transaction layer 638 illustrated and described with respect to Fig. 6.

The transaction unit scheme 1250 illustrated in Fig. 12 may include one or more elements that may be similar to those illustrated in other figures in which similar elements may be indicated by reference numbers ending in, and/or containing, the same digits, letters, and/or the like.

Additionally, or alternatively, the transaction unit scheme 1250 illustrated in Fig. 12 may include more than one D2D interface and/or associated D2D data paths at one or more (e.g., each) die. For example, a first D2D data path 1251-0 at Die 0 may communicate with a first D2D data path 1252-0 at Die 1. A second data path 1251-1 at Die 0 may communicate with a second D2D data path 1252-1 at Die 1.

The first translation logic 1215 and/or second translation logic 1216 may translate any type of OD protocol information 1217A, 1217B, 1218A, and/or 1218B (e.g., control information, data information, and/or the like) to D2D protocol information (e.g., by packing and/or unpacking any type of OD protocol information into and/or from one or more transaction units for a D2D protocol).

However, in some embodiments, the first translation logic 1215 and/or second translation logic 1216 may use one or more of the D2D data paths and/or associated D2D interfaces at least partially for a dedicated purpose. For example, the first translation logic 1215 may use D2D data paths 1251-0 and 1252-0 exclusively or primarily for data information (Data). Additionally, or alternatively, the first translation logic 1215 may use D2D data paths 1251-1 and 1252-1 exclusively or primarily for control information (Ctrl).

As a first example of at least partial dedicated data path usage, the first translation logic 1215 may pack data information (e.g., write data, valid, strobe, last, and/or the like) for one or more write transactions in OD protocol information 1217A into a first stream of one or more transaction units 1253-0_0, 1253-0_1, .... The first translation logic 1215 may pack control information for the one or more write transactions (e.g., a write address, write size, write length, write ID, and/or the like, for a write request) in OD protocol information 1217A into a second stream of one or more transaction units 1253-1_0, 1253-1_1, .... Additionally, or alternatively, the first translation logic 1215 may unpack control information (e.g., a write response) for the one or more write transactions in OD protocol information 1218B from a third stream of one or more transaction units 1254-1_0, 1254-1_1, ....

The first steam of one or more transaction units 1253-0 may be transferred from Die 0 to Die 1 using the D2D data paths 1251-0 and/or 1252-0 (and/or D2D interface 1213-0). The second stream of one or more transaction units 1253-1_0, 1253-1_1, ... may be transferred from Die 0 to Die 1 using the D2D data paths 1251-1 and/or 1252-1 (and/or D2D interface 1213-1). The third stream of one or more transaction units 1254-1_0, 1254-1_1, ... may be transferred from Die 1 to Die 0 using the D2D data paths 1251-1 and/or 1252-1 (and/or D2D interface 1213-1).

The second translation logic 1216 may perform one or more unpacking operations on the first steam of one or more transaction units 1253-0 and/or the second stream of one or more transaction units 1253-1, to generate a reconstructed version 1217B of OD protocol information 1217A for the one or more write transactions. The second translation logic 1216 may pack OD protocol information 1218A into the third stream of one or more transaction units 1254-1 which the first translation logic 1215 may unpack to generate a reconstructed version 1218B of the OD protocol information 1218A for the one or more write transactions.

As a second example of at least partial dedicated data path usage, the first translation logic 1215 may pack control information (e.g., a read address, read size, read length, read ID, and/or the like, for a read request) for one or more read transactions in OD protocol information 1217A into the second stream of one or more transaction units 1253-1 0, 1253- 1_1, .... The first translation logic 1215 may also unpack data information for the one or more read transactions (e.g., read data, valid, last, and/or the like) in OD protocol information 1218A from a fourth stream of one or more transaction units 1254-0_0, 1254-0_1, ....

The second steam of one or more transaction units 1253-1 may be transferred from Die 0 to Die 1 using the D2D data paths 1251-1 and/or 1252-1 (and/or D2D interface 1213-1). The fourth stream of one or more transaction units 1254-0 may be transferred from Die 1 to Die 0 using the D2D data paths 1251-0 and/or 1252-0 (and/or D2D interface 1213-0).

The second translation logic 1216 may perform one or more unpacking operations on the second steam of one or more transaction units 1253-1 to generate a reconstructed version 1217B of OD protocol information 1217A for the one or more read transactions. Additionally, or alternatively, the second translation logic 1216 may pack OD protocol information 1218A into the fourth stream of one or more transaction units 1254-0 which the first translation logic 1215 may unpack to generate a reconstructed version 1218B of the OD protocol information 1218A for the one or more read transactions.

In some embodiments, the transaction unit scheme 1250 may translate one or more OD protocol transactions implemented with OD protocol information 1217A and/or 1218B at Die 0 to one or more transaction units that may be transferred to Die 1 using one or more D2D protocols through interfaces 1213-0 and/or 1213-1 and translated back to one or more OD protocol transactions implemented with OD protocol information 1217B and/or 1218A at Die 1.

In some embodiments, the first translation logic 1215 may implement, at least partially, one or more OD protocol interfaces (e.g., one or more OD subordinate interfaces to communicate with corresponding OD manager interfaces). In some embodiments, the second translation logic 1216 may implement, at least partially, one or more OD protocol interfaces (e.g., one or more OD manager interfaces to communicate with one or more corresponding OD subordinate interfaces).

In some embodiments, the first translation logic 1215 and/or second translation logic 1216 may be implemented with or used to implement, for example, at least partially, a transaction layer such as the transaction layer 638 illustrated and described with respect to Fig. 6.

Depending on the implementation details, at least partial dedicated data path usage as illustrated and described with respect to the transaction unit scheme 1250 may reduce latency, increase bandwidth, reduce energy consumption, and/or the like.

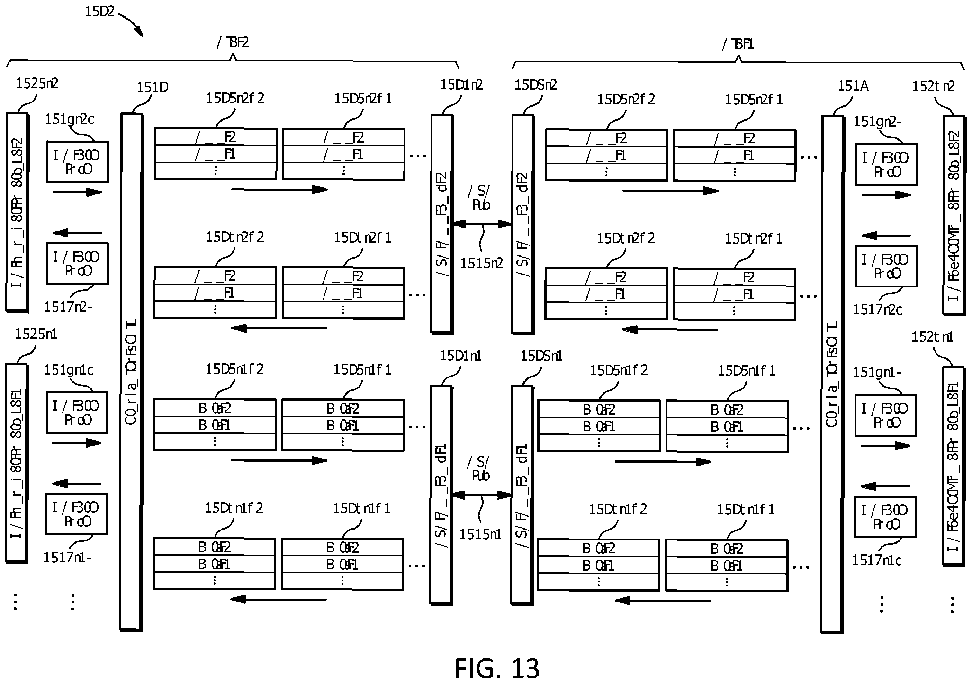

Fig. 13 illustrates a fourth embodiment of a transaction unit scheme in accordance with example embodiments of the disclosure. The transaction unit scheme 1350 illustrated in Fig. 13 may be used to implement, or be implemented with, any of the protocol translation schemes disclosed herein. For example, the transaction unit scheme 1350 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The transaction unit scheme 1350 illustrated in Fig. 13 may include one or more elements that may be similar to those illustrated in other figures in which similar elements may be indicated by reference numbers ending in, and/or containing, the same digits, letters, and/or the like.

Additionally, or alternatively, the transaction unit scheme 1350 illustrated in Fig. 13 may translate OD protocol information from more than one OD interface on at least one of the two dies. For example, the first translation logic 1315 may be connected to OD manager interfaces 1303-0, 1303-1, ... to exchange OD protocol information 1317-0A and/or 1318-0B, 1317-1A and/or 1318-1B, ..., respectively. Similarly, the second translation logic 1316 may be connected to OD subordinate interfaces 1304-0, 1304-1, ... to exchange OD protocol information 1317-0B and/or 1318-0A, 1317-1B and/or 1318-1A, ..., respectively.

The first translation logic 1315 and/or second translation logic 1316 may translate any type of OD protocol information 1317-0A, 1317-0B, 1318-0A, 1318-0B, 1317-1A, 1317-1B, 1318-1A, and/or 1318-1B (e.g., control information, data information, and/or the like) to D2D protocol information (e.g., by packing and/or unpacking any type of OD protocol information into and/or from one or more transaction units for a D2D protocol).

However, in some embodiments, the first translation logic 1315 and/or second translation logic 1316 may use one or more of the D2D data paths and/or associated D2D interfaces at least partially for a dedicated purpose. For example, the first translation logic 1315 and/or second translation logic 1316 may use D2D data paths 1351-0 and/or 1352-0 and/or D2D interface 1313-0 exclusively or primarily for data information (Data 0, Data 1, ...). Additionally, or alternatively, the first translation logic 1315 and/or second translation logic 1316 may use D2D data paths 1351-1 and/or 1352-1 and/or D2D interface 1313-1 exclusively or primarily for control information (Ctrl 0, Ctrl 1, ...).

In some implementations of the transaction unit scheme 1350, the first translation logic 1315 and/or second translation logic 1316 may pack and/or unpack data information for write and/or read transactions of an OD protocol into and/or from a first stream of one or more transaction units 1353-0 and/or a fourth stream of one or more transaction units 1354-0 in a manner similar to the transaction unit scheme 1250 illustrated in Fig. 12. However, in the transaction unit scheme 1350 illustrated in Fig. 13, data information (Data 0, Data 1, ...) for two or more OD manager interfaces 1303-0, 1303-1, ... and/or two or more OD subordinate interfaces 1304-0, 1304-1, ... may be combined in one or more transaction units 1353-0 and/or 1354-0 that may be transferred using the first D2D interface 1313-0.

Additionally, or alternatively, the first translation logic 1315 and/or second translation logic 1316 may pack and/or unpack control information for write and/or read transactions of an OD protocol into and/or from a second stream of one or more transaction units 1353-1 and/or a third stream of one or more transaction units 1354-1 in a manner similar to the transaction unit scheme 1250 illustrated in Fig. 12. However, in the transaction unit scheme 1350 illustrated in Fig. 13, control information (Ctrl 0, Ctrl 1, ...) for two or more OD manager interfaces 1303-0, 1303-1, ... and/or two or more OD subordinate interfaces 1304-0, 1304-1, ... may be combined in one or more transaction units 1353-1 and/or 1354-1 that may be transferred using the second D2D interface 1313-1.

Thus, in some embodiments, and depending on the implementation details, the transaction unit scheme 1350 may combine one or more types of information, for one or more transactions, and/or for one or more OD interfaces in one or more transaction units that may be transferred between dies using a D2D interconnect in accordance with example embodiments of the disclosure.

In some embodiments, the first translation logic 1315 may implement, at least partially, one or more OD protocol interfaces (e.g., one or more OD subordinate interfaces to communicate with corresponding OD manager interfaces 1303-0 and/or 1303-1). In some embodiments, the second translation logic 1316 may implement, at least partially, one or more OD protocol interfaces (e.g., one or more OD manager interfaces to communicate with one or more corresponding OD subordinate interfaces 1304-0 and/or 1304-1).

In some embodiments, the first translation logic 1315 and/or second translation logic 1316 may be implemented with or used to implement, for example, at least partially, a transaction layer such as the transaction layer 638 illustrated and described with respect to Fig. 6.

Depending on the implementation details, at least partial dedicated data path usage as illustrated and described with respect to the transaction unit scheme 1350 may reduce latency, increase bandwidth, reduce energy consumption, and/or the like.

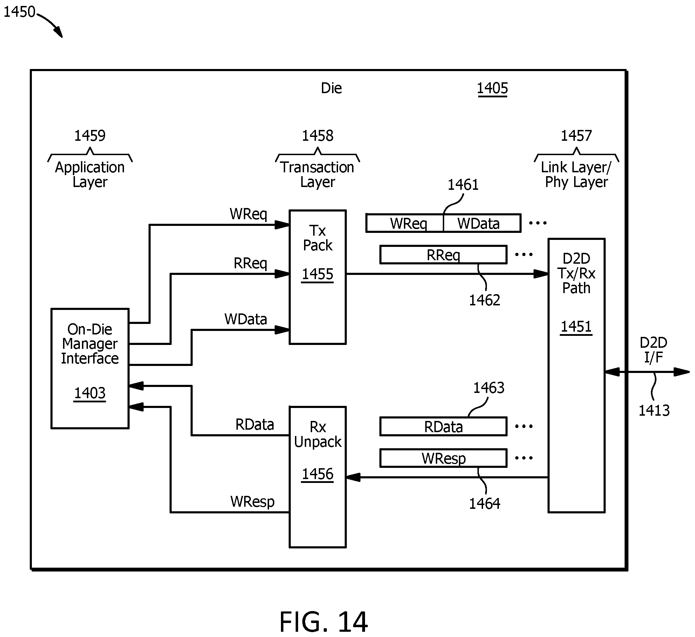

Fig. 14 illustrates a first embodiment of a component configuration for a transaction unit scheme with an on-die interface and a die-to-die path in accordance with example embodiments of the disclosure. The component configuration 1450 illustrated in Fig. 14 may be used to implement, or be implemented with, any of the protocol translation schemes disclosed herein. For example, the component configuration 1450 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The component configuration 1450 illustrated in Fig. 14 may include one or more elements that may be similar to those illustrated in other figures in which similar elements may be indicated by reference numbers ending in, and/or containing, the same digits, letters, and/or the like. The component configuration 1450 illustrated in Fig. 14 may be used, for example, to implement the transaction unit scheme 1050 illustrated in Fig. 10.

Referring to Fig. 14, the component configuration 1450 may include an OD manager interface 1403, packing logic 1455 for a transmit (TX) operation, unpacking logic 1456 for a receive (RX) operation, and/or a D2D transmit and/or receive (TX/RX) path 1451.

The packing logic 1455 may receive one or more signals on a write request (WReq) channel, one or more signals on a read request (RReq) channel, and/or one or more signals on a write data (WData) channel from the OD manager interface 1403 using an OD protocol. The packing logic 1455 may pack write request information and/or write data information into a stream of one or more transaction units 1461. The packing logic 1455 may pack read request information into a stream of one or more transaction units 1462.

The D2D transmit and/or receive path 1451 may transmit one or more streams of one or more transaction units 1461 and/or 1462 to another die using D2D interface 1413. The D2D transmit and/or receive path 1451 may receive one or more streams of one or more transaction units 1463 and/or 1464 from another die using D2D interface 1413.

The unpacking logic 1456 may unpack read data (RData) information from one or more transaction units 1463 which it may translate to an OD protocol and send to the OD manager interface 1403 using one or more signals on a read data channel. Some or all of the read data information may be received in response to read request information sent in one or more transaction units 1462.

The unpacking logic 1456 may unpack write response (WResp) information from one or more transaction units 1464 which it may translate to an OD protocol and send to the OD manager interface 1403 using one or more signals on a write response channel. Some or all of the write response information may be received in response to write request information and/or write data information sent in one or more transaction units 1461.

Although the component configuration 1450 is not limited to any specific implementation details, in some embodiments, one or more components may be implemented as, or with, one or more layers, for example, of a D2D system. For example, the D2D transmit and/or receive path 1451 may be implemented with a link layer (e.g., an adapter) and/or a PHY layer 1457, the packing logic 1455 and/or unpacking logic 1456 may be implemented as a transaction layer 1458, and/or the OD manager interface 1403 may be implemented as part of an application layer 1459.

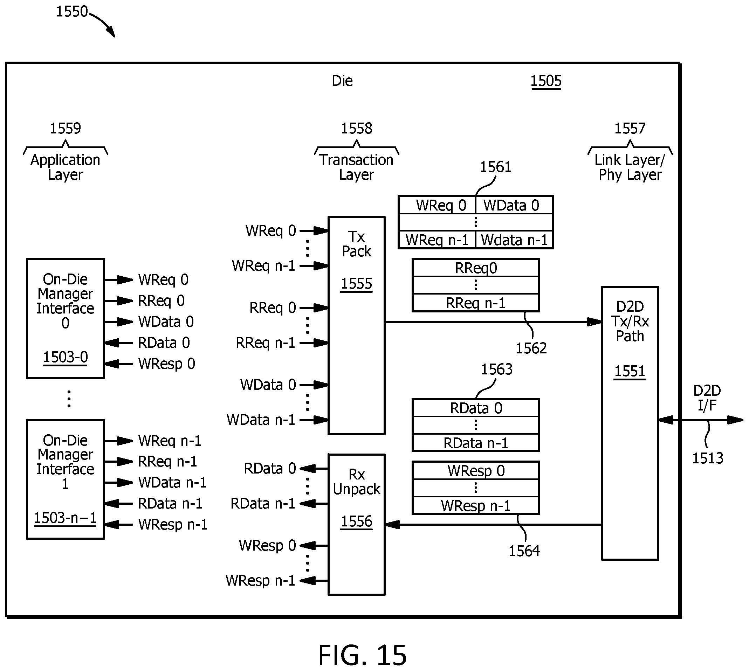

Fig. 15 illustrates a second embodiment of a component configuration for a transaction unit scheme with multiple on-die interfaces and a die-to-die path in accordance with example embodiments of the disclosure. The component configuration 1550 illustrated in Fig. 15 may be used to implement, or be implemented with, any of the protocol translation schemes disclosed herein. For example, the component configuration 1550 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The component configuration 1550 illustrated in Fig. 15 may include one or more elements that may be similar to those illustrated in other figures in which similar elements may be indicated by reference numbers ending in, and/or containing, the same digits, letters, and/or the like. The component configuration 1550 illustrated in Fig. 15 may be used, for example, to implement the transaction unit scheme 1150 illustrated in Fig. 11.

Referring to Fig. 15, the component configuration 1550 may include n OD manager interfaces 1503-0 ... 1503-n-1, packing logic 1555, unpacking logic 1556, and/or a D2D transmit and/or receive (TX/RX) path 1551.

The packing logic 1555 may receive one or more signals on write request channels WReq 0 ... WReq n-1, one or more signals on read request channels RReq 0 ... RReq n-1, and/or one or more signals on write data channels WData 0 ... WData n-1 from the OD manager interface 1503 using one or more OD protocols. The packing logic 1555 may pack write request information and/or write data information into a stream of one or more transaction units 1561, some or all of which may include information from more than one of the OD manager interfaces 1503. The packing logic 1555 may pack read request information into a stream of one or more transaction units 1562, some or all of which may include information from more than one of the OD manager interfaces 1503.

The D2D transmit and/or receive path 1551 may transmit one or more streams of one or more transaction units 1561 and/or 1562 to another die using D2D interface 1513. The D2D transmit and/or receive path 1551 may receive one or more streams of one or more transaction units 1563 and/or 1564 from another die using D2D interface 1513.

The unpacking logic 1556 may unpack read data information from one or more transaction units 1563 which it may translate to one or more OD protocols and send to the OD manager interfaces 1503 using one or more signals on read data channels RData 0 ... RData n-1. The unpacking logic 1556 may unpack write response information from one or more transaction units 1564 which it may translate to one or more OD protocols and send to the OD manager interfaces 1503 using one or more signals on write response channels WResp 0 ... WResp n-1.

Although the component configuration 1550 is not limited to any specific implementation details, in some embodiments, the D2D transmit and/or receive path 1551 may be implemented with a link layer (e.g., an adapter) and/or a PHY layer 1557, the packing logic 1555 and/or unpacking logic 1556 may be implemented as a transaction layer 1558, and/or the OD manager interfaces 1503-0 ... 1503-n-1 may be implemented as part of an application layer 1559.

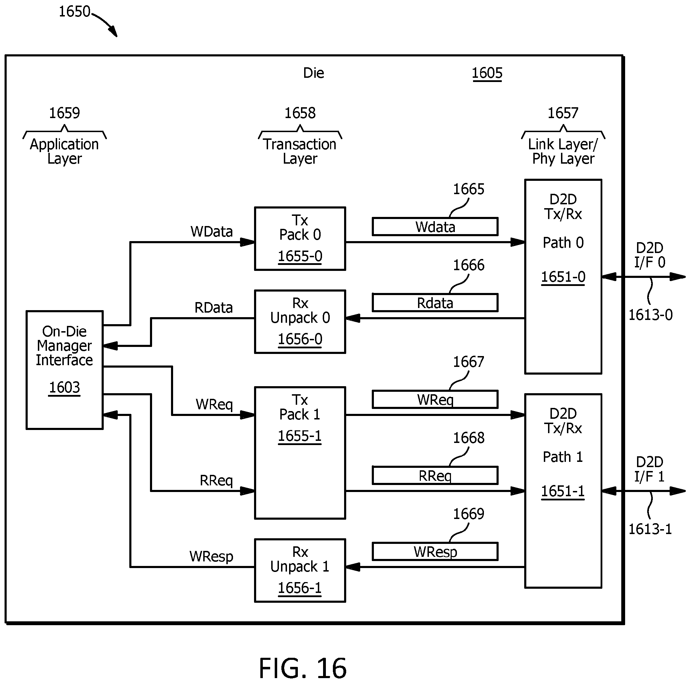

Fig. 16 illustrates a third embodiment of a component configuration for a transaction unit scheme with an on-die interface and multiple die-to-die paths in accordance with example embodiments of the disclosure. The component configuration 1650 illustrated in Fig. 16 may be used to implement, or be implemented with, any of the protocol translation schemes disclosed herein. For example, the component configuration 1650 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The component configuration 1650 illustrated in Fig. 16 may include one or more elements that may be similar to those illustrated in Figs. 10-13 in which similar elements may be indicated by reference numbers ending in, and/or containing, the same digits, letters, and/or the like. The component configuration 1650 illustrated in Fig. 16 may be used, for example, to implement the transaction unit scheme 1250 illustrated in Fig. 12.

Referring to Fig. 16, the component configuration 1650 may include an OD manager interface 1603, packing logic 1655-0 and/or 1655-1, unpacking logic 1656-0 and/or 1656-1, a D2D transmit and/or receive path 1651-0, and/or a D2D transmit and/or receive path 1651-1.

The packing logic 1655-0 may receive write data information using one or more signals of a write data channel from the OD manager interface 1603 using an OD protocol. The packing logic 1655-0 may pack the write data information into a stream of one or more transaction units 1665.

The D2D transmit and/or receive path 1651-0 may transmit the stream of one or more transaction units 1665 to another die using D2D interface 1613-0. The D2D transmit and/or receive path 1651-0 may receive a stream of one or more transaction units 1666 from another die using D2D interface 1613-0.

The unpacking logic 1656-0 may unpack read data information from one or more transaction units 1666 which it may translate to an OD protocol and send to the OD manager interface 1603 using one or more signals on a read data channel.

The packing logic 1655-1 may receive write request information and/or read request information using one or more signals of a write request channel and/or a read request channel, respectively, from the OD manager interface 1603 using an OD protocol. The packing logic 1655-1 may pack the write request information into a stream of one or more transaction units 1667. The packing logic 1655-1 may pack the read request information into a stream of one or more transaction units 1668.

The D2D transmit and/or receive path 1651-1 may transmit the streams of one or more transaction units 1667 and/or 1668 to another die using D2D interface 1613-1. The D2D transmit and/or receive path 1651-1 may receive a stream of one or more transaction units 1669 from another die using D2D interface 1613-1.

The unpacking logic 1656-1 may unpack write response information from one or more transaction units 1669 which it may translate to an OD protocol and send to the OD manager interface 1603 using one or more signals on a write response channel.

Although the component configuration 1650 is not limited to any specific implementation details, in some embodiments, the D2D transmit and/or receive paths 1651-0 and/or 1651-1 may be implemented with a link layer (e.g., an adapter) and/or a PHY layer 1657, the packing logic 1655-0 and/or 1655-1 and/or unpacking logic 1656-0 and/or 1656-1 may be implemented as a transaction layer 1658, and/or the OD manager interface 1603 may be implemented as part of an application layer 1659.

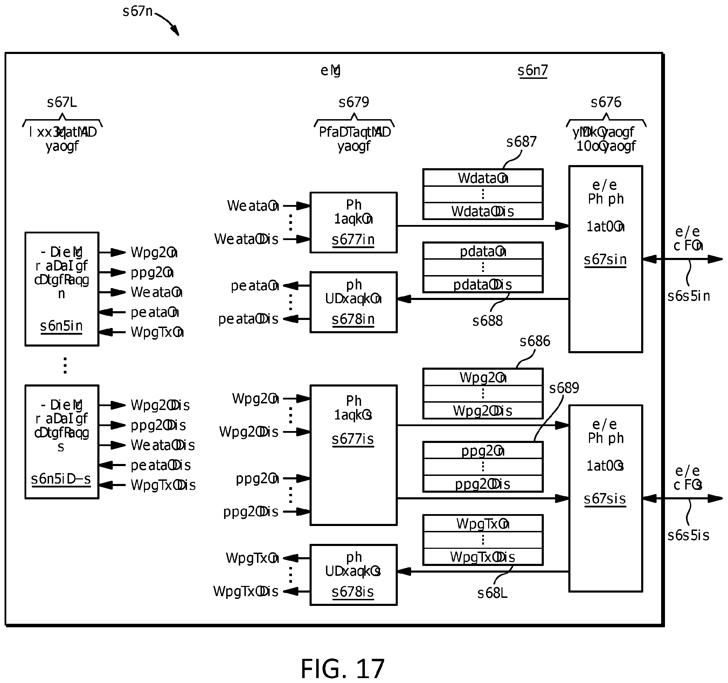

Fig. 17 illustrates a fourth embodiment of a component configuration for a transaction unit scheme with multiple on-die interfaces and multiple die-to-die paths in accordance with example embodiments of the disclosure. The component configuration 1750 illustrated in Fig. 17 may be used to implement, or be implemented with, any of the protocol translation schemes disclosed herein. For example, the component configuration 1750 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The component configuration 1750 illustrated in Fig. 17 may include one or more elements that may be similar to those illustrated in other figures in which similar elements may be indicated by reference numbers ending in, and/or containing, the same digits, letters, and/or the like. The component configuration 1750 illustrated in Fig. 17 may be used, for example, to implement the transaction unit scheme 1350 illustrated in Fig. 13.

Referring to Fig. 17, the component configuration 1750 may include n OD manager interfaces 1703-0 ... 1703-n-1, packing logic 1755-0 and/or 1755-1, unpacking logic 1756-0 and/or 1756-1, and/or D2D transmit and/or receive paths 1751-0 and/or 1751-1.

The packing logic 1755-0 may receive write data information using one or more signals of write data channels WData 0 ... WData n-1 from the OD manager interfaces 1703-0 ... 1703-n-1 using one or more OD protocols. The packing logic 1755-0 may pack the write data information into a stream of one or more transaction units 1765.

The D2D transmit and/or receive path 1751-0 may transmit the stream of one or more transaction units 1765 to another die using D2D interface 1713-0. The D2D transmit and/or receive path 1751-0 may receive a stream of one or more transaction units 1766 from another die using D2D interface 1713-0.

The unpacking logic 1756-0 may unpack read data information from one or more transaction units 1766 which it may translate to one or more OD protocols and send to the OD manager interfaces 1703 using one or more signals on read data channels RData 0 ... RData n-1.

The packing logic 1755-1 may receive write request information and/or read request information using one or more signals of write request channels WReq 0 ... WReq n-1 and/or read request channels RReq 0 ... RReq n-1, respectively, from the OD manager interfaces 1703-0 ... 1703-n-1 using one or more OD protocols. The packing logic 1755-1 may pack the write request information into a stream of one or more transaction units 1767. The packing logic 1755-1 may pack the read request information into a stream of one or more transaction units 1768.

The D2D transmit and/or receive path 1751-1 may transmit the one or more streams of one or more transaction units 1767 and/or 1768 to another die using D2D interface 1713-1. The D2D transmit and/or receive path 1751-1 may receive a stream of one or more transaction units 1769 from another die using D2D interface 1713-1.

The unpacking logic 1756-1 may unpack write response information from one or more transaction units 1769 which it may translate to one or more OD protocols and send to the OD manager interfaces 1703-0 ... 1703-n-1 using one or more signals on write response channels WResp 0 ... WResp n-1.

Although the component configuration 1750 is not limited to any specific implementation details, in some embodiments, the D2D transmit and/or receive paths 1751-0 and/or 1751-1 may be implemented with a link layer (e.g., an adapter) and/or a PHY layer 1757, the packing logic 1755-0 and/or 1755-1 and/or unpacking logic 1756-0 and/or 1756-1 may be implemented as a transaction layer 1758, and/or the OD manager interfaces 1703-0 ... 1703-n-1 may be implemented as part of an application layer 1759.

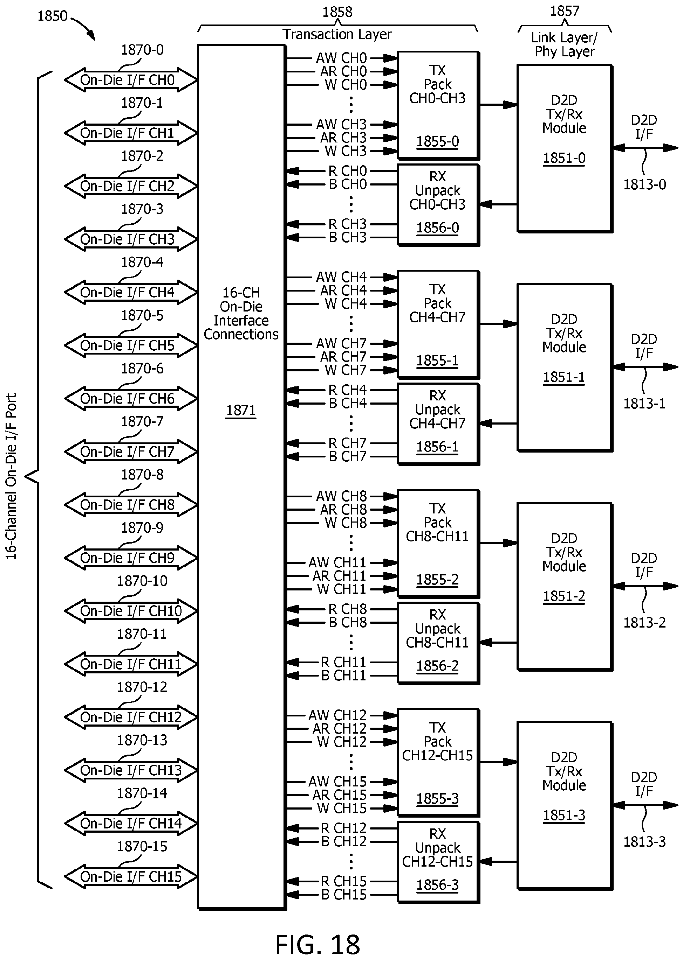

Fig. 18 illustrates an example embodiment of a component architecture having one or more modules arranged to transfer combined control and data information for a protocol translation scheme in accordance with example embodiments of the disclosure. The architecture 1850 illustrated in Fig. 18 may be used to implement, or be implemented with, any of the protocol translation schemes disclosed herein. For example, the component architecture 1850 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The component architecture 1850 illustrated in Fig. 18 may include one or more elements that may be similar to those illustrated in other figures in which similar elements may be indicated by reference numbers ending in, and/or containing, the same digits, letters, and/or the like. The component architecture 1850 illustrated in Fig. 18 may be used, for example, to implement the transaction unit scheme 1550 illustrated in Fig. 15.

For purposes of illustration, the embodiment illustrated in Fig. 18 may be described in the context of one or more OD interfaces implemented with an AXI protocol and/or a D2D system implemented with UCIe, and may describe specific types of protocol signals, specific numbers of interfaces and/or channels, logic circuits, transmit and/or receive modules, and/or the like, to provide a convenient point of reference for describing other aspects of the disclosure (such as one or more transaction unit formats described below), possible exemplary implementation details, and/or the like. However, the principles of the disclosure are not limited to any of the details illustrated in, and/or described with respect to, Fig. 18.

Referring to Fig. 18, the component architecture 1850 may include any number of D2D transmit and/or receive modules 1851-0, ..., 1851-3 (in this example, four), any number of instances of packing logic 1855-0, ..., 1855-3 (in this example, four), and/or any number of instances of unpacking logic 1856-0, ..., 1856-3 (in this example, four).

In some embodiments, one or more of the D2D transmit and/or receive modules 1851 may be implemented, for example, using one or more D2D system modules such as those illustrated and described with respect to Figs. 7A and/or 7B. A transmit and/or receive module 1851 may be configured to receive a stream of one or more transaction units from a corresponding instance of packing logic 1855 which the module may send to another die using a corresponding D2D interface 1813. A transmit and/or receive module 1851 may be configured to receive a stream of one or more transaction units from another die using a corresponding D2D interface 1813 which the module may send to a corresponding instance of unpacking logic 1856.

In the example illustrated in Fig. 18, an instance of an OD interface may be referred to as a channel (CH) or an OD interface (I/F) channel. Thus, a channel may refer to a collection of signals, connections, and/or the like, that may implement an OD interface that may include and/or use one or more signals arranged as one or more channels (which may be referred to and/or characterized as sub-channels) such as control channels (e.g., channels for commands, requests, addresses, responses, and/or the like), data channels (e.g., a write data channel and/or a read data channel), and/or the like, for an OD protocol.

For example, in the embodiment illustrated in Fig. 18, using the nomenclature of an AXI protocol, CH0 may refer to an OD (e.g., AXI) interface having a write request channel configured to transfer write request information AW CH0, a write data channel configured to transfer write data information W CH0, a write response channel configured to transfer write response information B CH0, a read request channel configured to transfer read request information AR CH0, and/or a read data channel configured to transfer read data information R CH0.

Thus, packing logic 1855-0 may be configured to receive write request information AW CH0, ..., AW CH3, from OD interface channels CH0, ..., CH3 (indicated as 1870-0, ..., 1870-3), respectively. Additionally or alternatively, packing logic 1855-0 may be configured to receive read request information AR CH0, ..., AR CH3, from OD interface channels CH0, ..., CH3, respectively. Additionally or alternatively, packing logic 1855-0 may be configured to receive write data information W CH0, ..., W CH3, using OD interface channels CH0, ..., CH3, respectively.

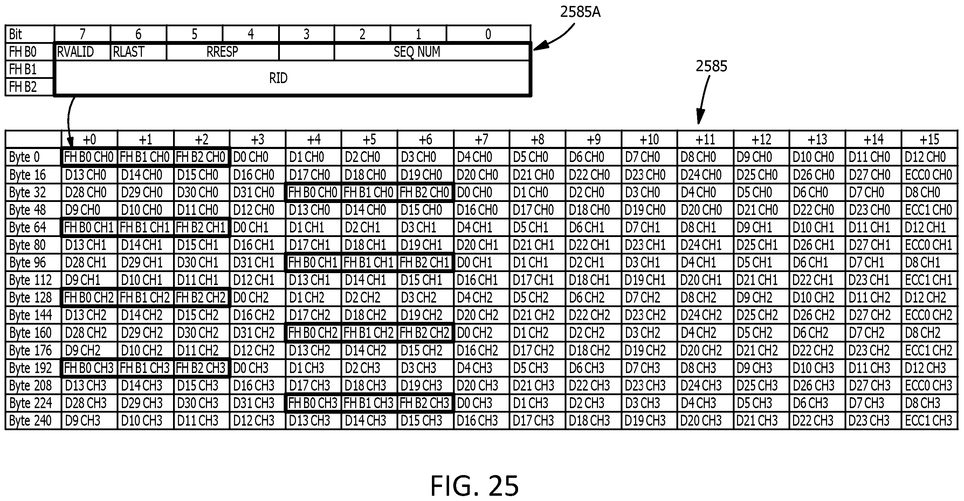

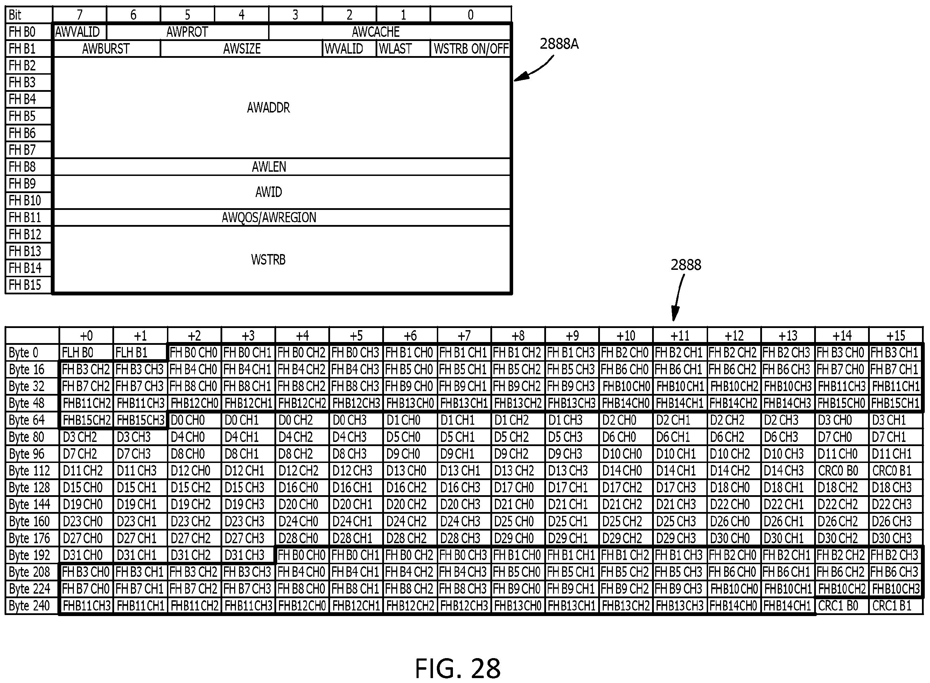

The packing logic 1855-0 may be configured to generate a stream of one or more transaction units by packing write request information, read request information, and/or write data information into a stream of one or more transaction units using any format, for example, one or more of the formats illustrated and/or described with respect to Fig. 25 and/or Fig. 28.

Unpacking logic 1856-0 may be configured to receive a stream of one or more transaction units from the transmit and/or receive module 1851-0 which it may unpack to generate read data information R CH0, ... R CH3 which it may send using OD interface channels CH0, ..., CH3, respectively. Additionally or alternatively, unpacking logic 1856-0 may be configured to unpack, from the stream of one or more transaction units, write response information B CH0, ..., B CH3 which it may send using OD interface channels CH0, ..., CH3 (indicated as 1870-0, ..., 1870-3), respectively.

Thus, in some embodiments, transmit and/or receive module 1851-0 may be configured to send and/or receive a combination of control information (e.g., write and/or read requests, write responses, and/or the like) and data information (e.g., write data, read data, and/or the like).

In some embodiments, packing logic 1855-1, ..., 1855-3, unpacking logic 1856-0, ..., 1856-3, and/or D2D transmit and/or receive modules 1851-1, ..., 1851-3 may be configured in similar arrangements to pack and/or unpack and send and/or receive, information for OD interface channels CH4, ..., CH15 (indicated as 1870-4, ..., 1870-15) in a manner similar to that described above with respect to OD interface channels CH0, ..., CH3.

In some embodiments, the OD interface connections 1871 may include one or more connections, switches, and/or the like, to connect one or more signals between OD interface channels 1870, packing logic 1855, and/or unpacking logic 1856.

In some embodiments, and depending on the implementation details, a collection of one or more OD interface channels 1870 (e.g., CH0, ..., CH15) may be referred to, and/or characterized as, an N-channel OD interface port where N may indicate a number of OD interface channels (in this example, sixteen). In some embodiments, one or more of the D2D transmit and/or receive modules 1851 may be implemented at least partially with a D2D link layer (e.g., an adapter) and/or a D2D Phy layer 1857. In some embodiments, one or more of the packing logic 1855 and/or unpacking logic 1856 may be implemented at least partially with a transaction layer 1858.

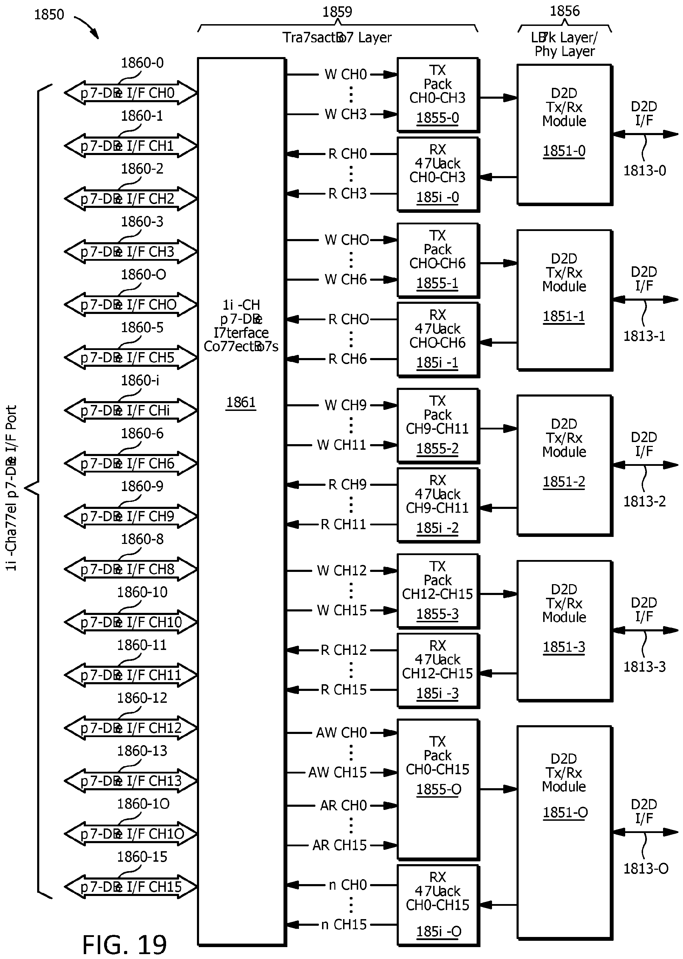

Fig. 19 illustrates an example embodiment of a component architecture having a module to transfer control and a module to transfer data information for a protocol translation scheme in accordance with example embodiments of the disclosure. The component architecture 1950 illustrated in Fig. 19 may be used to implement, or be implemented with, any of the protocol translation schemes disclosed herein. For example, the component architecture 1950 may be implemented, at least in part, with the D2D interconnect schemes 114 and/or 214 illustrated and described with respect to Fig. 1 and/or Fig. 2, and/or using any of the channel architectures, transactions, D2D systems, transaction unit formats (e.g., raw, flit, and/or the like) module and/or path configurations, and/or the like, illustrated and described with respect to Figs. 3-9.

The component architecture 1950 illustrated in Fig. 19 may include one or more elements that may be similar to those illustrated in other figures in which similar elements may be indicated by reference numbers ending in, and/or containing, the same digits, letters, and/or the like. The component architecture 1950 illustrated in Fig. 19 may be used, for example, to implement the component configuration 1750 illustrated in Fig. 17 in which separate modules may be used to transfer control information and data information.

As with the embodiment illustrated in Fig. 18, for purposes of illustration, the embodiment illustrated in Fig. 19 may be described in the context of one or more OD interfaces implemented with an AXI protocol and/or a D2D system implemented with UCIe, and may describe specific types of protocol signals, specific numbers of interfaces and/or channels, logic circuits, transmit and/or receive modules, and/or the like. However, the principles of the disclosure are not limited to any of the details illustrated in, and/or described with respect to, Fig. 19.

Referring to Fig. 19, the component architecture 1950 may include a first set of one or more modules and/or packing and/or unpacking logic that may essentially be dedicated to transferring data information and a second set of one or more modules and/or packing and/or unpacking logic that may essentially be dedicated to transferring control information. In some embodiments, one or more of the D2D transmit and/or receive modules 1951 may be implemented at least partially with a D2D link layer (e.g., an adapter) and/or a D2D Phy layer 1957. In some embodiments, one or more of the packing logic 1955 and/or unpacking logic 1956 may be implemented at least partially with a transaction layer 1958.

In the example embodiment illustrated in Fig. 19, data information may be transferred using any number of D2D transmit and/or receive modules (e.g., dedicated modules) 1951-0, ..., 1951-3 (in this example, four), any number of instances of packing logic 1955-0, ..., 1955-3 (in this example, four), and/or any number of instances of unpacking logic 1956-0, ..., 1956-3 (in this example, four) may be configured to pack, unpack, and/or transfer data information.

For example, packing logic 1955-0 may be configured to pack write data information W CH0, ... W CH3 for OD interface channels CH0, ..., CH3, respectively, into a stream of one or more transaction units that may be sent to another die by D2D transmit and/or receive module 1951-0 through D2D interface 1913-0. The D2D transmit and/or receive module 1951-0 may receive a stream of one or more transaction units through D2D interface 1913-0 that unpacking logic 1956-0 may unpack to generate read data information R CH0, ... R CH3 for OD interface channels CH0, ..., CH3 (indicated as 1970-0, ..., 1970-3), respectively.

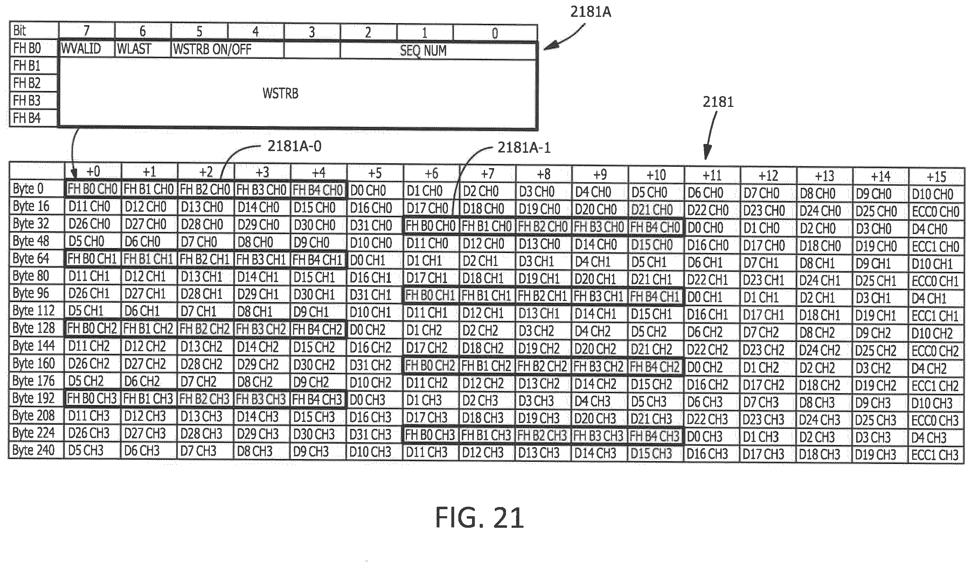

The packing logic 1955-0 and/or unpacking logic 1956-0 may implement any transaction unit format, for example, one or more of those illustrated and/or described with respect to Fig 21, Fig. 24, Fig. 26, and/or Fig. 27.

In the example embodiment illustrated in Fig. 19, control information maybe transferred using any number of D2D transmit and/or receive modules 1951-4 (in this example, one), any number of instances of packing logic 1955-4 (in this example, one), and/or any number of instances of unpacking logic 1956-4 (in this example, one) may be configured to pack, unpack, and/or transfer control information.

For example, packing logic 1955-4 may be configured to pack write request information AW CH0, ... AW CH15 and/or read request information AR CH0, ..., AR CH15 for OD interface channels CH0, ..., CH15, respectively, into a stream of one or more transaction units that may be sent to another die by D2D transmit and/or receive module 1951-4 through D2D interface 1913-4. The D2D transmit and/or receive module 1951-4 may receive a stream of one or more transaction units through D2D interface 1913-4 that unpacking logic 1956-4 may unpack to generate write response information B CH0, ... B CH15 for OD interface channels CH0, ..., CH15 (indicated as 1970-0, ..., 1970-15), respectively.

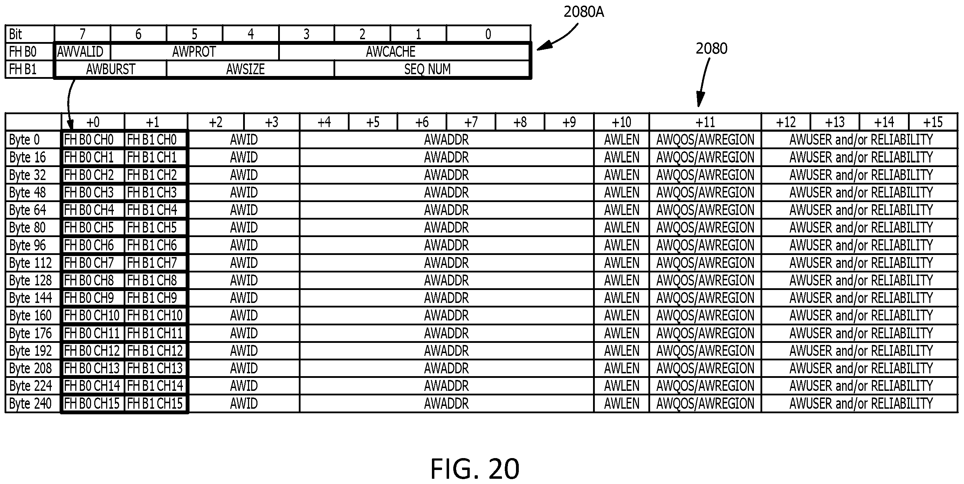

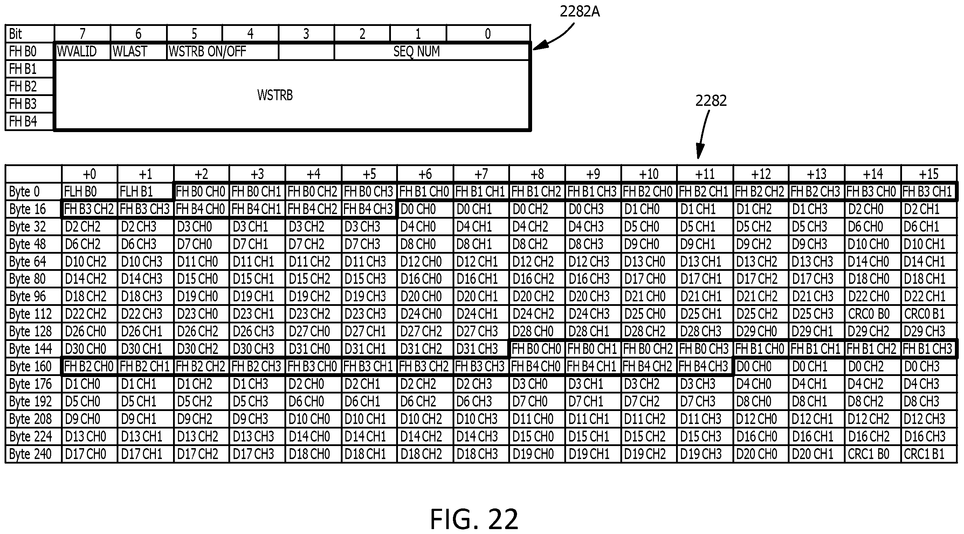

The packing logic 1955-1 and/or unpacking logic 1956-1 may implement any transaction unit format, for example, one or more of those illustrated and/or described with respect to Fig. 20 and/or Fig. 22.

In some embodiments, and depending on the implementation details, the use of essentially separate dedicated modules for data and control may increase bandwidth, and/or throughput, and/or reduce overhead, latency, and/or energy consumption, and/or the like. For example, depending on the implementation details, moving control information (e.g., write requests, read requests, write responses, and/or the like) out of a data path may enable the data path to run at or near full data transfer speed without interruption for control information that may be offloaded to a module that may handle control information.

Figs. 20 through 28 illustrate some example embodiments of transaction unit formats that may be implemented, for example, using one or more of the component architectures illustrated in Fig. 18 and/or Fig. 19 which may provide a convenient context for illustrating aspects of the disclosure. For purposes of illustration, the embodiments illustrated in Figs. 20 through 28 may be described in the context of an AXI protocol and/or a D2D system implemented with UCIe, and may use AXI nomenclature for various types of information. However, other OD and/or D2D protocols and/or interfaces may be used, and none of the component architectures illustrated in Fig. 18 and/or Fig. 19 or transaction unit formats illustrated in Figs. 20 through 28 are limited to any of the example details disclosed herein.

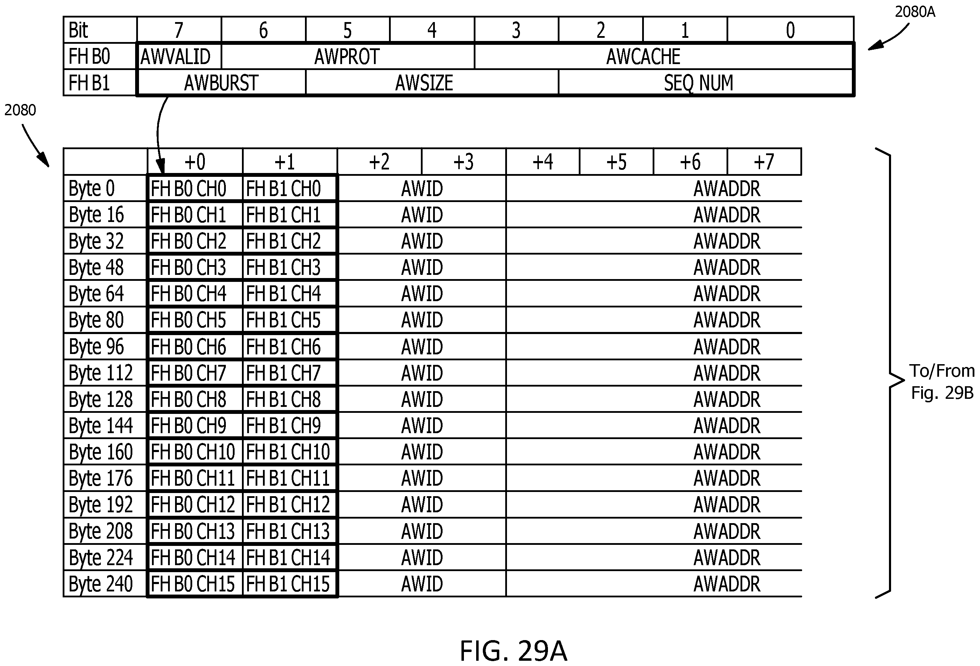

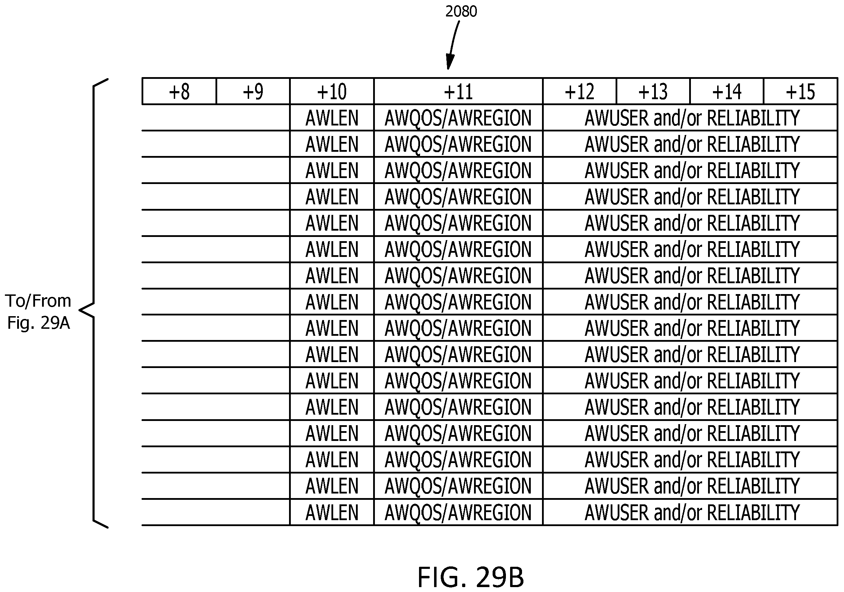

Fig. 20 illustrates an example embodiment of a transaction unit for transferring write request information using a raw format in accordance with example embodiments of the disclosure. References to Fig. 20 may also refer to Fig. 29. The raw format transaction unit 2080 illustrated in Fig. 20 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the raw format transaction unit 2080 illustrated in Fig. 20 may be described in the context of a system in which control information for sixteen OD interface channels CH0, ..., CH15 may be packed and/or transferred using packing logic such as the packing logic 1955-4 and/or an associated D2D transmit and/or receive module 1951-4 as illustrated in Fig. 19. However, the raw format transaction unit 2080 illustrated in Fig. 20 is not limited to the numbers and/or types of information, signals, bits, bytes, channels, and/or the like, disclosed herein.

The raw format transaction unit 2080 may include 256 bytes of which 16 bytes may be used to transfer control information for 16 corresponding OD interface channels CH0, ..., CH15. For convenience in referring to any of the 256 bytes, the raw format transaction unit 2080 (and/or some other transaction units illustrated in other figures) is illustrated as a table having 16 rows of 16 bytes each in which the byte number of the first byte in each row is indicated in the left column, and the byte number of any other byte in the row may be obtained by adding the number in the top row of the table to the number of the first byte in each row. Thus, for example, byte 10 in the 256-byte format (AWLEN for CH0) may be determined by adding +10 from the top row to Byte0 in the left column. As additional examples, AWADDR for CH0 may be located at bytes 4 through 9, and AWADDR for CH1 may be located at bytes 20 (byte 16+4) through 25 (byte 16+9).

The first two bytes in each row of the raw format transaction unit 2080 may include a format header (FH), an example of which is illustrated as format header 2080A. For convenience in referring to any of the 16 bits in the two bytes of format header 2080A, the format header 2080A is illustrated as a table having two rows of one byte (8 bits) each in which the number of each bit in the byte is indicated in the top row of the table. Thus, format header 2080A may include a first byte FH B0 having bits 0-7 and a second byte FH B1 having bits 0-7. For example, a write transaction size AWSIZE may be located at bits 3-5 of byte FH B1. Format headers illustrated in other figures for other embodiments of transaction units may be arranged in a similar format.

Each row of the raw format transaction unit 2080 may include write request information for a write transaction of a corresponding OD interface channel CH0, ..., CH15. Within each row, the first two bytes may include two header bytes having the format of header 2080A. For example, the first two bytes in the row indicated as Byte0 (bytes 0 and 1) may include format header bytes FH B0 and FH B1 for CH0 (indicated as FH B0 CH0 and FH B1 CH0, respectively). As another example, the first two bytes in the row indicated as Byte240 (bytes 240 and 241) may include format header bytes FH B0 and FH B1 for CH15 (indicated as FH B0 CH15 and FH B1 CH15, respectively). Thus, the 16 bits for a specific channel CH0, ..., CH15 enclosed by the heavy solid line in format header 2080A may be included in the first two bytes enclosed by the heavy solid line in each row for the corresponding channel CH0, ..., CH15 of the raw format transaction unit 2080.

In some embodiments, the information illustrated in the raw format transaction unit 2080 and/or the format header 2080A may be implemented using the nomenclature set forth in Table 1. Additionally, or alternatively, some information in the raw format transaction unit 2080 and/or the format header 2080A may be implemented using the nomenclature in Table 2.

**Table 2**

| | |
|---|---|
| SEQ NUM | Sequence number for credit mechanism |
| RELIABILITY | Parity, ECC, CRC, and/or other data reliability information |
| WSTROBE ON/OFF | Write strobe used for write data operations if ON |
| ECC | Error Correction Code byte(s) used with format |

In some embodiments, using some or all of the information indicated in the raw format transaction unit 2080 and/or the format header 2080A may enable the packing logic 1955 to capture write request information on a write request channel such as that illustrated in Fig. 4 for a write transaction on OD interface channel CH0. The packing logic 1955 may pack the captured write request information into the raw format transaction unit 2080 and/or the format header 2080A which may be transferred to another die where unpacking logic may unpack the raw format transaction unit 2080 and/or the format header 2080A to generate a reconstructed version of the write request information on a write request channel as part of a write transaction.

Although the 256 bytes of the raw format transaction unit 2080 may be illustrated as byte 0 through byte 256, the information in the raw format transaction unit 2080 may transferred in any manner such as transferring the entire 256-byte format in one transfer, or using four 64-bit raw format transfers units such as those illustrated and/or described with respect to Fig. 8 (e.g., 64-bit raw format UCIe transfers). For example, bytes 0 through 63 may be transferred using a first 64-bit raw format transfer, bytes 64 through 127 may be transferred using a second 64-bit raw format transfer, bytes 128 through 191 may be transferred using a third 64-bit raw format transfer, and/or bytes 192 through 255 may be transferred using a fourth 64-bit raw format transfer.

In some embodiments, and depending on the implementation details, using a raw format transaction unit such as the raw format transaction unit 2080 illustrated in Fig. 20 may reduce overhead, latency, and/or energy consumption, and/or increase bandwidth, and/or throughput, and/or the like, especially if the raw format transaction unit 2080 is transferred using a component architecture such as that illustrated in Fig. 19 (e.g., using a dedicated TX/RX module).

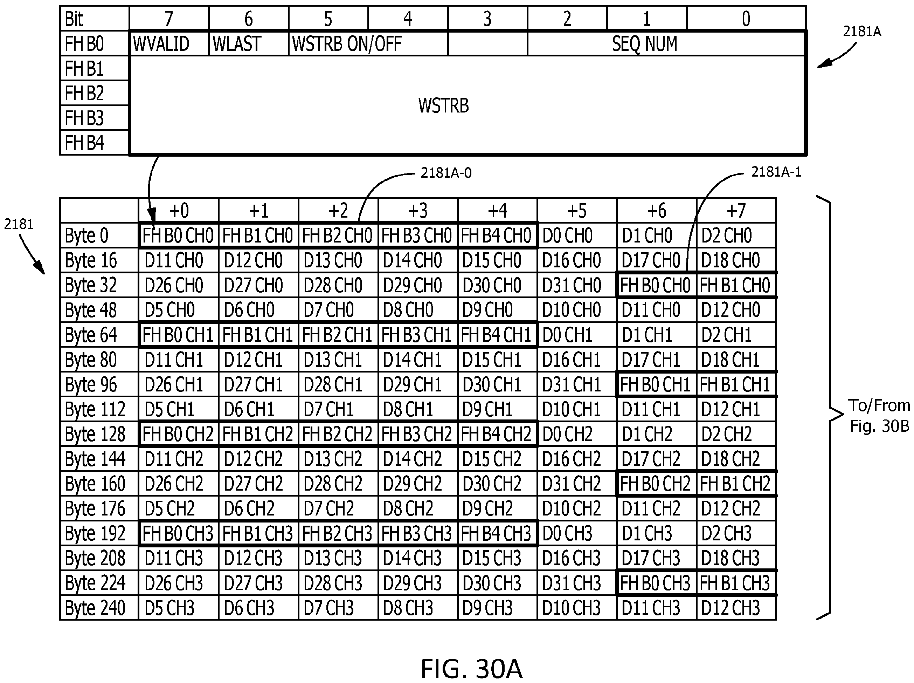

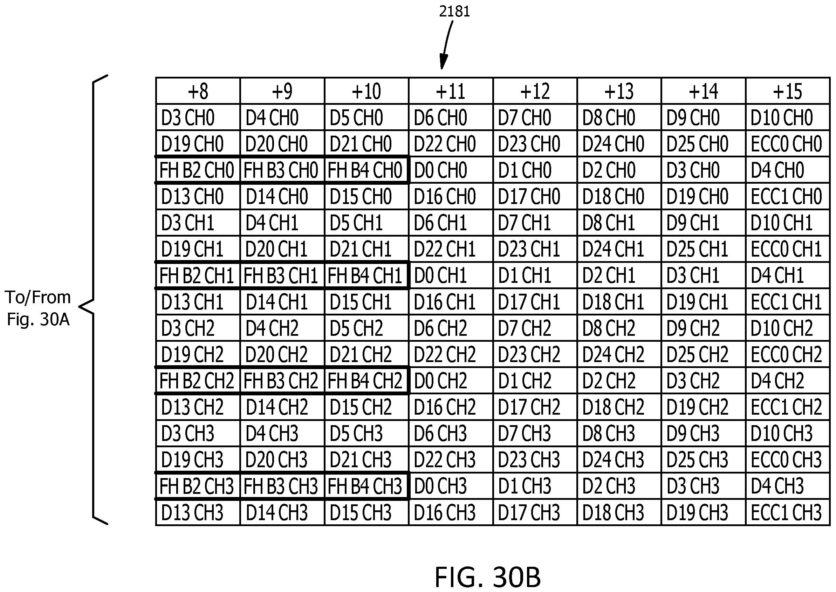

Fig. 21 illustrates an example embodiment of a transaction unit for transferring write data information using a raw format in accordance with example embodiments of the disclosure. References to Fig. 21 may also refer to Fig. 30. The raw format transaction unit 2181 illustrated in Fig. 21 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the raw format transaction unit 2181 illustrated in Fig. 21 may be described in the context of a system in which write data information for four OD interface channels CH0, ..., CH3 may be packed and/or transferred using packing logic such as the packing logic 1955-0 and/or an associated D2D transmit and/or receive module 1951-0 as illustrated in Fig. 19. In some embodiments, one or more (e.g., three) additional instances of the raw format transaction unit 2181 may be used to pack and/or transfer write data information for twelve additional OD interface channels CH4, ..., CH15 which may be packed and/or transferred using packing logic such as the packing logic 1955-1, ..., 1955-3 and/or associated D2D transmit and/or receive modules 1951-1, ... 1951-3 as illustrated in Fig. 19. However, the raw format transaction unit 2181 illustrated in Fig. 21 is not limited to use with the numbers and/or types of information, signals, bits, bytes, channels, components, and/or the like, disclosed herein.

The raw format transaction unit 2181 may include 256 bytes of which a first portion including the first 64 bytes may be used to transfer write data for OD interface channel CH0 as indicated by the suffix CH0 appended to the format headers and write data. A second portion including the second 64 bytes indicated as bytes 64 through 127 may be used to transfer write data for OD interface channel CH1 as indicated by the suffix CH1 appended to the format headers and write data in the second four rows of information. A third portion including the third 64 bytes indicated as bytes 128 through 191 may be used to transfer write data for OD interface channel CH2 as indicated by the suffix CH2 appended to the format headers and write data in the third four rows of information. A fourth portion including the last 64 bytes indicated as bytes 192 through 255 may be used to transfer write data for OD interface channel CH3 as indicated by the suffix CH3 appended to the format headers and write data in the last four rows of information.

Each 64-byte portion of the raw format transaction unit 2181 may be used to transfer write data for one or more write transactions, and write data for each transaction may be accompanied by a corresponding format header, an example of which is illustrated as format header 2181A in Fig. 21. A format header 2181A may include one or more fields identified, for example, by the nomenclature set forth in Table 1 and/or Table 2. For example, bytes 0 through 4 indicated as format header 2181A-0 (enclosed by the heavy solid line) may include five bytes of write data channel information such as WVALID, WLAST, WSTRB, and/or the like, captured from corresponding write data channel signals such as those illustrated in Fig. 4 which may be used to transfer write data WDATA for the first write transaction on OD interface channel CH0.

The first write transaction may be initiated, for example, by the write request information included in the first 16 bytes (e.g., bytes 0 through 15) of the raw format transaction unit 2080 illustrated in Fig. 20 which may provide information on the amount of write data included in the first write transaction. For example, one or more of the fields AWSIZE, AWLEN, AWBURST, and/or the like, in the write request information in the raw format transaction unit 2080 illustrated in Fig. 20 may be used to determine, as an example, that the first write transaction on CH0 may include 32 bytes of write data. Thus, bytes 5 through 37 of raw format transaction unit 2181 may include 32 bytes of write data (indicated as D0 CH0 through D31 CH0) for the first write transaction.

Because the write data (including the format header 2181A) for the first write transaction on CH0 may use less than the 64 bytes allocated to write data for CH0 (excluding two bytes for ECC information as discussed below), the packing logic 1955-0 may pack write data for at least a portion of a second write transaction into the raw format transaction unit 2181. Thus, bytes 38 through 42 may include another format header 2181A-1 for a second write transaction, and bytes 43-62 may include 20 bytes of write data (indicated as D0 CH0 through D19 CH0) for the second write transaction. The second write transaction may be initiated, for example, by write request information included in the first 16 bytes (e.g., bytes 0 through 15) of a second instance of the raw format transaction unit 2080 illustrated in Fig. 20 which may be generated and/or transferred, for example, as a stream of one or more raw format transaction units 2080 by packing logic 1955-4 and/or D2D transmit and/or receive module 1951-4. Additionally, or alternatively, the raw format transaction unit 2080 illustrated in Fig. 20 may be configured to include write request information for more than write one transaction on channel CH0.

As with the first write transaction, the second write transaction may include 32 bytes of write data. However, because only the first 20 bytes of write data for the second write transaction may fit in the space remaining in the raw format transaction unit 2181 for write data for CH0, the remaining 12 bytes of write data for the second write transaction may be packed into the first 12 bytes of a second instance of the raw format transaction unit 2181 which may be generated and/or transferred, for example, as a second transaction unit in a stream of transaction units.

In other situations, an amount of write data associated with the first write transaction may exceed the amount of space allocated to write data for CH0 in the raw format transaction unit 2181. In such a situation, the write data associated with the first write transaction (e.g., D0 CH0, ..., Dn-1 CH0, where the first write transaction includes n bytes of write data) may be packed into second, third, or more raw format transaction units 2181 which may be generated and/or transferred, for example, as a stream of transaction units by packing logic 1955-0 and/or D2D transmit and/or receive module 1951-0.

For purposes of illustration, the portions of the raw format transaction unit 2181 allocated to write data information for channels CH1 through CH3 may include write data for write transactions having the same amount of write data (e.g., 32 bytes) as CH0. However, in other situations, any write transaction for any channel may include any amount of write data. One or more of the write transactions for channels CH1 through CH3 may be initiated by corresponding write request information in the raw format transaction unit 2080 illustrated in Fig. 20. Write data for one or more of the write transactions for channels CH1 through CH3 may be accompanied by a corresponding format header 2181A in a manner similar to the write transactions for channel CH0.

In some embodiments, the raw format transaction unit 2181 may include data reliability information to implement one or more data reliability features. For example, in the embodiment illustrated in Fig. 21, byte 31 may include an error correction code (ECC) identified as ECCO CH0 that may provide error correction for bytes 0 through 30. ECCO CH0 may be calculated across bytes 0 through 30 using data reliability logic (e.g., ECC logic) that may be located, for example, in packing logic 1955-0. The error correcting code ECCO CH0 may be included in the raw format transaction unit 2181 that may be sent to another die where corresponding unpacking logic may use it to detect and/or correct errors in bytes 0 through 30. In a similar manner, bytes 32 through 62 may be protected by ECC1 CH0 located in byte 63. Additionally, or alternatively, portions of the raw format transaction unit 2181 allocated to write data information for channels CH1 through CH3 may be protected by ECCO CH1, ECC1 CH1, ECCO CH2, ECC1 CH2, ECCO CH3, and/or ECC1 CH3.

Although the use of error correction codes and/or other data reliability features with a raw format transaction unit in accordance with example embodiments of the disclosure is not limited to any specific applications, it may be especially beneficial, for example, in applications that may be sensitive to latency. For example, in some embodiments, a link layer or adapter layer of a D2D system may implement a retry scheme in which a transaction unit may be retransmitted based on detecting a transmission error (e.g., using a CRC scheme). However, retransmitting a transaction unit in some applications such as high bandwidth memory (HBM) may cause an unacceptable latency.

A protocol translation scheme may reduce this latency by transferring the raw format transaction unit 2181 illustrated in Fig. 21 using a PHY layer of a D2D system, thereby bypassing a link layer or adapter layer and avoiding an associated retry mechanism. However, in some example embodiments, a PHY layer of a D2D system may have a bit error rate (BER) of about 10-15 which may be unacceptably high, for example, in a system that may expect a BER of about 10-25 (e.g., at a system level). The ECC bytes illustrated in Fig. 21, however, may be used to correct one or more errors in a transaction unit, thereby improving the BER while still using relatively low-latency raw format transfers through a PHY layer. Thus, depending on the implementation details, an ECC scheme such as that illustrated in Fig. 21 may enable a protocol translation scheme to transfer OD protocol information using a raw format over a D2D system with relatively low latency while still maintaining an acceptably low BER.

In some embodiments, the SEQ NUM information included in the format header 2080A illustrated in Fig. 20, the format header 2181A illustrated in Fig. 21, and/or SEQ NUM information used with any other embodiment disclosed herein, may be used to implement a credit mechanism that, depending on the implementation details, may reduce latency associated with a protocol translation scheme. For example, referring to Fig. 1, the initiator 101 may initiate a write transaction by sending a write request to the target 102. Referring to Fig. 4, in some embodiments, sending a write request on the write request channel (e.g., the AW channel in the embodiment illustrated in Fig. 20) may involve waiting for the asserted AWREADY signal from the target. However, receiving the AWREADY signal at the initiator 101 may involve a round-trip delay associated with protocol information (e.g., signal operations such as signal states, timings, patterns, and/or the like) being packed, transmitted, and/or unpacked in both directions, and thus, the AWREADY signal from the target may be received with a relatively long latency. A similar delay may be associated with the WREADY signal on the write data channel (e.g., the W channel in the embodiment illustrated in Fig. 21) as well as ready signals on a write response channel (e.g., a BREADY signal on a B channel), a read request channel (e.g., an ARREADY signal on an AR channel), a read data channel (e.g., an RREADY signal on an R channel), and/or the like.

In some embodiments, the SEQ NUM information included in a format header may be used to implement a credit mechanism in which an initiator may initiate a first transaction and, before receiving a ready signal associated with the first transaction, initiate a second transaction. For example, in some embodiments, a sequence number, credit information, and/or the like, may be assigned to a transaction and/or one or more transaction units associated with the transaction and stored in a SEQ NUM field of one or more transaction units used for the transaction. Thus, in the example described above, when the asserted AWREADY signal is received at the initiator 101 from the target 102, it may be matched to a transaction associated with the ready signal. Additionally, or alternatively, the SEQ NUM information may be used to track a number of initiated transactions that have not been completed, for example, to prevent the initiation of additional transactions if a specified number of transactions have been initiated but not completed.

Depending on the implementation details, a credit mechanism using the SEQ NUM information included in a format header may reduce latency, for example, by enabling one or more additional transactions to proceed while waiting for a ready signal for a first transaction.

In some embodiments, WSTRB information may be used to establish a write strobe pattern for the WDATA signals that may be used for a first and/or subsequent transfers on the WDATA signals, for example, on the assumption that the same write strobe pattern may be used for each WDATA transfer (e.g., all data transfers associated with rising edges of clock cycles X through X+n-1) for the write transaction. Additionally or alternatively, the WSTROBE ON/OFF field may set to a first state that may indicate that the WSTRB field is used, or a second state that may indicate that the WSTRB field may be disregarded (e.g., all bits of the WDATA signal may be used to transfer write data). In some other embodiments, a WSTRB field may be used with each WDATA transfer as shown by the dashed signal transitions in Fig. 4, and the resulting data may be packed into the write data (e.g., D0 CH0, D1 CH0, ...) accordingly. Depending on the implementation details, this may reduce overhead, reduce power consumption, reduce latency, increase bandwidth, increase throughput, and/or the like.

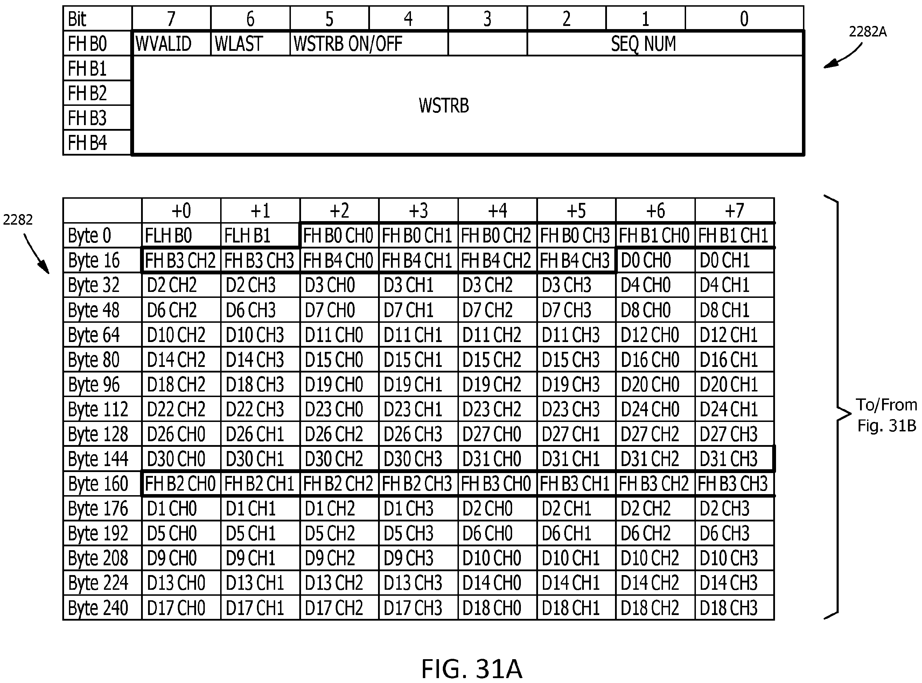

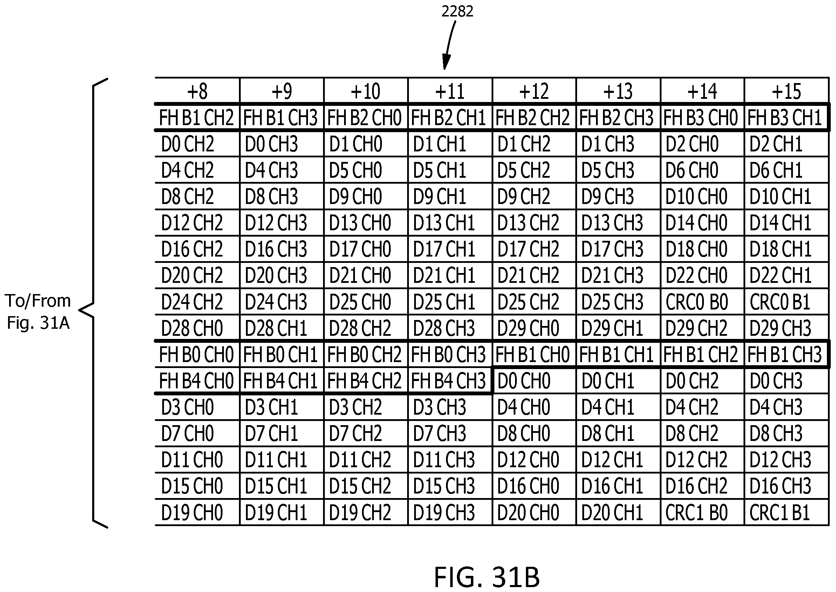

Fig. 22 illustrates an example embodiment of a transaction unit for transferring write data information using a flit format in accordance with example embodiments of the disclosure. References to Fig. 22 may also refer to Fig. 31. The raw format transaction unit 2282 illustrated in Fig. 22 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the flit format transaction unit 2282 illustrated in Fig. 22 may be described in the context of a system in which write data information for four OD interface channels CH0, ..., CH3 may be packed and/or transferred using packing logic such as the packing logic 1955-0 and/or an associated D2D transmit and/or receive module 1951-0 as illustrated in Fig. 19. In some embodiments, write data information for one or more (e.g., twelve) additional OD interface channels CH4, ..., CH15 may be packed into one or more (e.g., three) additional instances of the flit format transaction unit 2282 which may be packed and/or transferred using packing logic such as the packing logic 1955-1, ..., 1955-3 and/or associated D2D transmit and/or receive modules 1951-1, ... 1951-3 as illustrated in Fig. 19. However, the flit format transaction unit 2282 illustrated in Fig. 22 is not limited to use with the numbers and/or types of information, signals, bits, bytes, channels, components, and/or the like, disclosed herein.

The flit format transaction unit 2282 may use a flit format such as the latency-oriented (e.g., latency-optimized) flit format illustrated and/or described with respect to Fig. 9. Thus, the flit format transaction unit 2282 may include two flit header bytes FLH B0 and FLH B1 that may be located at bytes 0 and 1, respectively. Additionally, or alternatively, the flit format transaction unit 2282 may include CRC bytes CRC0 B0, CRC0 B1, CRC1 B0, and/or CRC1 B1, that may be located at bytes 126, 127, 254, and/or 255, respectively. In some embodiments, one or more of the flit header bytes and/or CRC bytes may be specified by a D2D protocol and/or implemented, for example, as part of an adapter or link layer. In some embodiments, one or more of the flit header bytes and/or CRC bytes may be used to implement a retry mechanism. Thus, in some embodiments, the flit format transaction unit 2282 may omit other data reliability information such as the ECC information illustrated in Fig. 21 because a retry mechanism may provide an adequate BER. In other embodiments, the flit format transaction unit 2282 may include additional data reliability information such as ECC information.

The flit format transaction unit 2282 may use a format header 2282A that may be configured in a manner similar to the format header 2181A illustrated in Fig. 21. For example, a format header 2282A may include one or more fields WVALID, WLAST, and/or WSTRB that may use, for example, the nomenclature set forth in Table 1. Additionally, or alternatively, a format header 2282A may include one or more fields WSTRB ON/OFF, and/or SEQ NUM that may use, for example, the nomenclature set forth in Table 2.

Write data for OD interface channels CH0, ..., CH3 may be packed into the flit format transaction unit 2282 in an interleaved manner, for example, with format header and/or write data information for one or more (e.g., each) of CH0, ..., CH3 interleaved on a row of the flit format transaction unit 2282 as illustrated in Fig. 22. For example, the first byte of a format header 2282A for each of channels CH0, CH1, CH2, and CH3 (e.g., bytes FH B0 CH0, FH B0 CH1, FH B0 CH2, and FH B0 CH3) may be located at bytes 2, 3, 4, and 5, respectively. As another example, the first byte of write data for each of channels CH0, CH1, CH2, and CH3 (e.g., bytes D0 CH0, D0 CH1, D0 CH2, and D0 CH3) may be located at bytes 22, 23, 24, and 25, respectively.

For purposes of illustration, in the example embodiment illustrated in Fig. 22, each transaction for each OD interface channel may include 32 bytes of read data, but in other embodiments, any transaction on any channel may include any amount of read data.

The flit format transaction unit 2282 may be used, for example, to transfer write data information for one or more write transactions that may be initiated by one or more write requests that may use the raw format transaction unit 2080 illustrated in Fig. 20.

In some embodiments, and depending on the implementation details, the flit format transaction unit 2282 illustrated in Fig. 22 may reduce one or more aspects of latency, for example, by enabling a first portion of write data for one or more transactions on one or more OD interface channels (e.g., write data bytes D0 CH0 through D29 CH1 located before the first CRC bytes CRC0 B0, CRC0 B1) to be delivered and possibly checked for errors before other portions of write data for the one or more transactions.

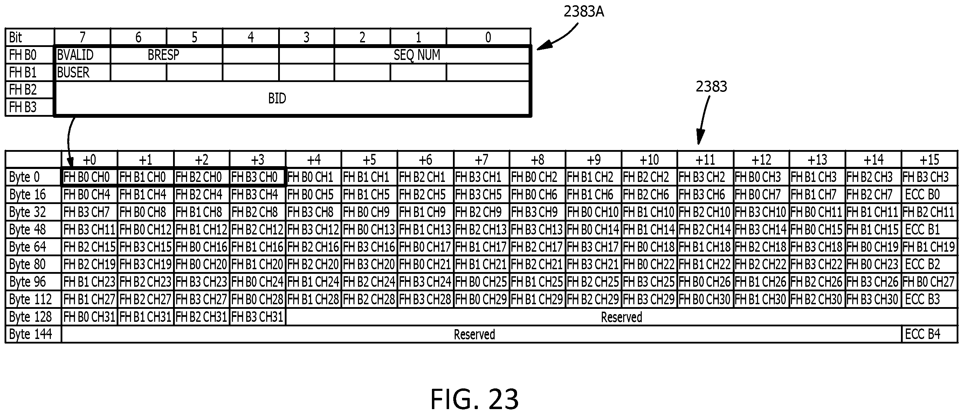

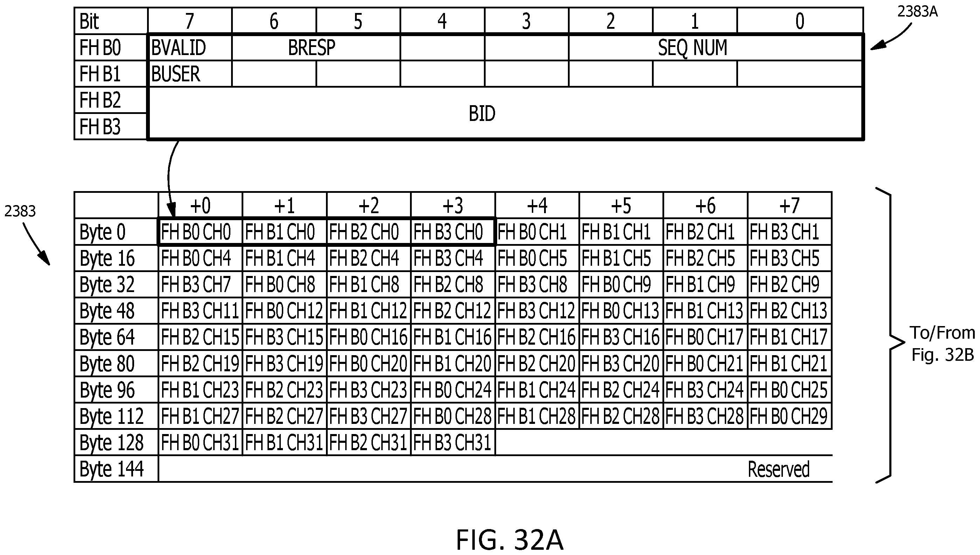

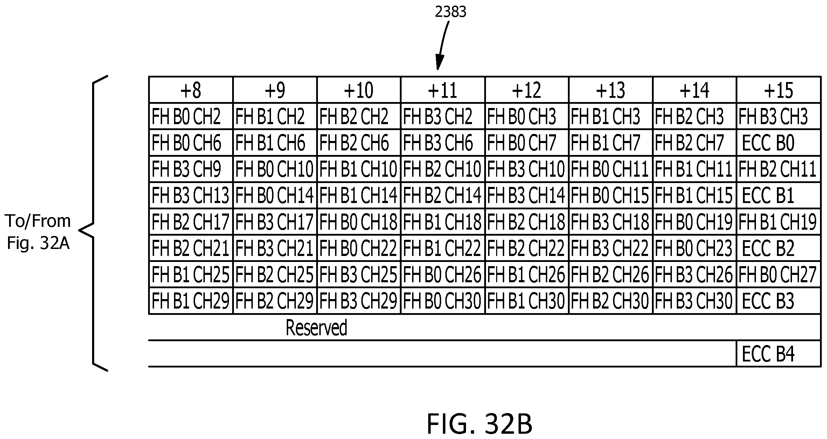

Fig. 23 illustrates an example embodiment of a transaction unit for transferring write response information using a raw format in accordance with example embodiments of the disclosure. References to Fig. 23 may also refer to Fig. 32. The raw format transaction unit 2383 illustrated in Fig. 23 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the raw format transaction unit 2383 illustrated in Fig. 23 may be described in the context of a system in which write response information for one or more channels may be received and/or unpacked, for example, using unpacking logic 1956-4 and/or D2D transmit and/or receive module 1951-4 illustrated in Fig. 19. However, the raw format transaction unit 2383 illustrated in Fig. 22 is not limited to use with the numbers and/or types of information, signals, bits, bytes, channels, components, and/or the like, disclosed herein.

The raw format transaction unit 2383 may include a number of bytes that may be based on a number of OD interface channels (in this example, 32 channels indicated as channels CH0 through CH31) and/or a number of bytes in a format header 2383A (in this example, four bytes indicated as FH B0 through FH B3). In the embodiment illustrated in Fig. 23, the raw format transaction unit 2383 may be packed with a format header 2383A for each of channels CH0 through CH31. Thus, the raw format transaction unit 2383 may include 128 bytes of format header information. For example, four bytes of format header information for CH0 may be located at bytes 0 through 3, four bytes of format header information for CH1 may be located at bytes 4 through 7, and so on.

In some embodiments, the raw format transaction unit 2383 may also include data reliability information such as ECC information indicated as ECC B0 through ECC B4 which may be used to implement an error correction scheme similar to that described with respect to Fig. 21.

The format header 2383A may include one or more fields indicated as BVALID, BRESP, BUSER, and/or BID which may use the nomenclature set forth in Table 1 and which may include information that unpacking logic 1956-4 may use to generate a reconstructed version of a write response on a write response channel (e.g., a B channel in the embodiment illustrated in Fig. 19) such as the write response (e.g., signal operations such as signal states, timings, patterns, and/or the like) illustrated in Fig. 4.

One or more of the format headers 2383A may provide a write response for a write transaction initiated, for example, by write request information included in the raw format transaction unit 2080 illustrated in Fig. 20 and/or for which write data may be transferred using the raw format transaction unit 2181 illustrated in Fig. 21 and/or the flit format transaction unit 2282 illustrated in Fig. 22. The unpacking logic 1956-4 at the initiator apparatus illustrated in Fig. 19 may receive the raw format transaction unit 2383, for example, through a D2D interface 1913-4 from corresponding packing logic (e.g., similar to packing logic 1955-4) located a target apparatus at another die.

In some embodiments, one or more of the format headers 2383A may include a field indicated as SEQ NUM as set forth in Table 2 which may be used to implement a credit mechanism similar to that described above with respect to Fig. 21.

In some embodiments, and depending on the implementation details, the raw format transaction unit 2383 illustrated in Fig. 23 may reduce overhead, reduce power consumption, reduce latency, increase bandwidth, increase throughput, and/or the like, for example, by separating write response information from write data and/or read data transfers, by efficiently packing write responses for multiple transactions and/or OD interface channels into one transaction unit (or a stream of one or more transaction units), by avoiding a retry mechanism, and/or the like.

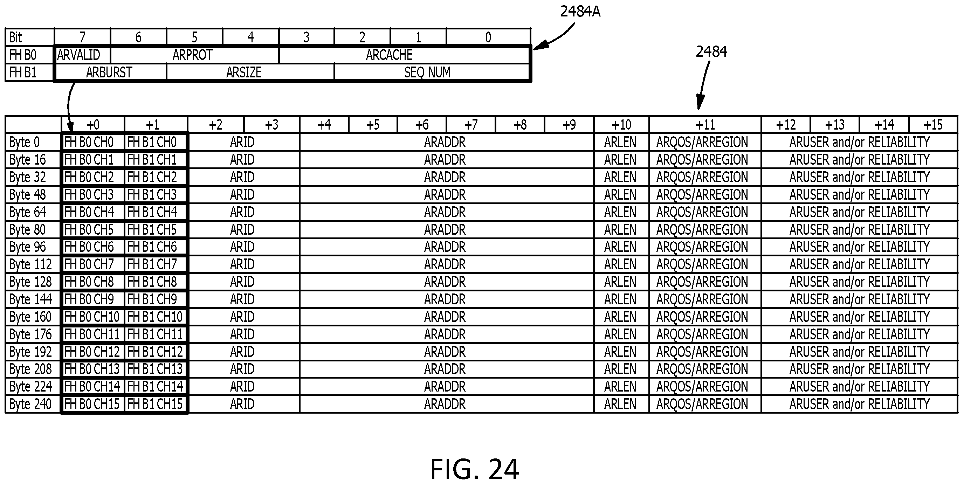

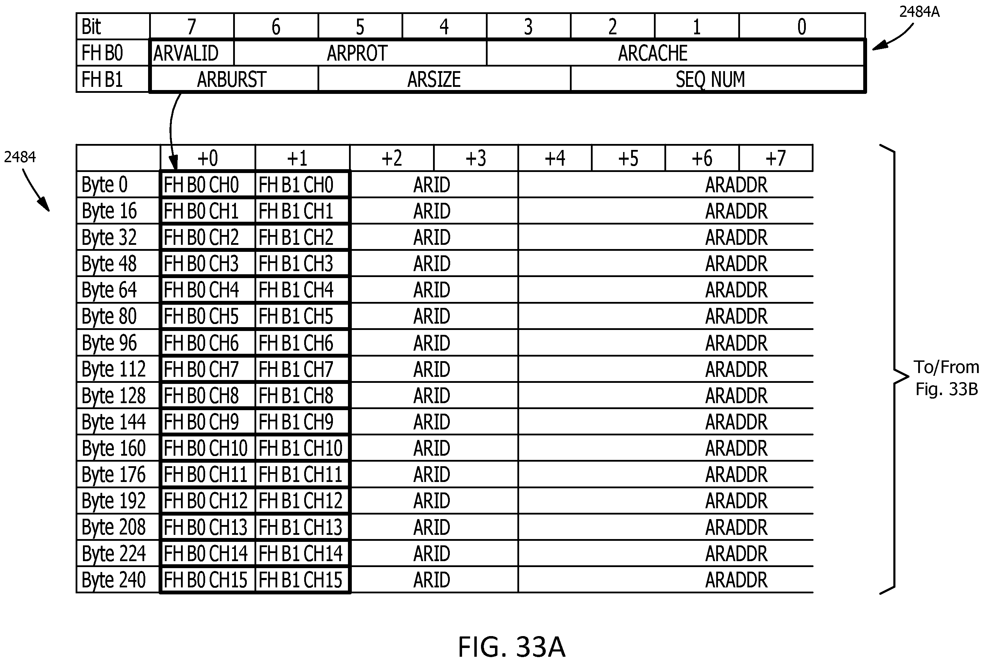

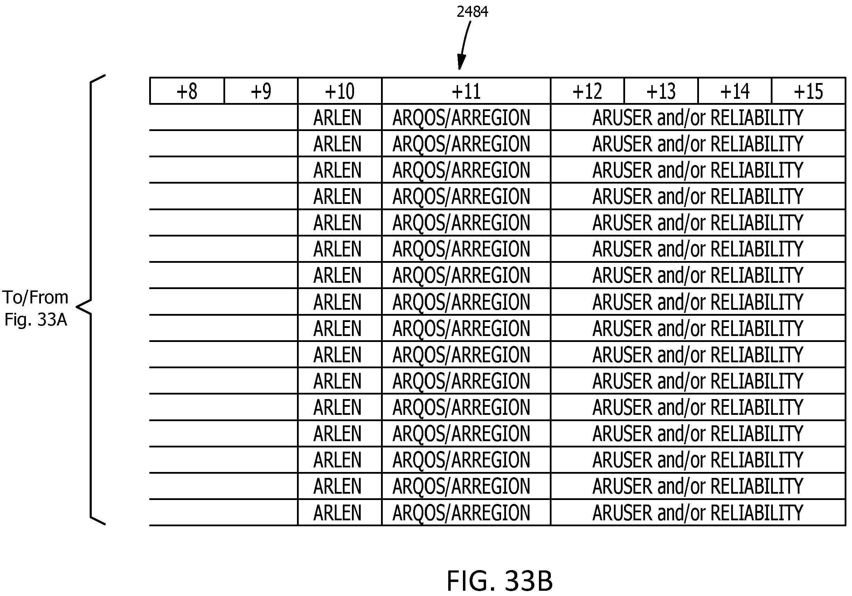

Fig. 24 illustrates an example embodiment of a transaction unit for transferring read request information using a raw format in accordance with example embodiments of the disclosure. References to Fig. 24 may also refer to Fig. 33. The raw format transaction unit 2484 illustrated in Fig. 24 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the raw format transaction unit 2484 illustrated in Fig. 24 may be described in the context of the component architecture illustrated in Fig. 19 in which control information for sixteen OD interface channels CH0, ..., CH15 may be packed and/or transferred using packing logic such as the packing logic 1955-4 and/or an associated D2D transmit and/or receive module 1951-4. However, the raw format transaction unit 2484 illustrated in Fig. 24 is not limited to the numbers and/or types of information, signals, bits, bytes, channels, and/or the like, disclosed herein.

The structure and/or operation of the raw format transaction unit 2484 illustrated in Fig. 24 may in some aspects be similar to the raw format transaction unit 2080 illustrated in Fig. 20, but with one or more fields, signals, and/or the like for a read request substituted for those for a write request. Thus, each row of the raw format transaction unit 2484 may include a two-byte format header 2484A and/or one or more fields such as ARID, ARADDR, ARLEN, ARQOS/ARREGION AND/OR ARUSER using the nomenclature set forth in Table 1. In some embodiments, reliability information RELIABILITY may be included with, and/or substituted for, ARUSER information. A format header 2484A may include one or more fields such as ARVALID, ARPROT, ARCACHE, ARBURST, and/or ARSIZE which may use the nomenclature set forth in Table 1.

Packing logic such as packing logic 1955-4 illustrated in Fig. 19 may capture information for a read request (e.g., signal operations such as signal states, timings, patterns, and/or the like as illustrated in Fig. 5) on a read request channel (e.g., an AR channel in the embodiment illustrated in Fig. 19) for one or more OD interface channels CH0, ..., CH15 and pack the information in one or more rows of the raw format transaction unit 2484.

In some embodiments, a format header 2484A may include a SEQ NUM field as set forth in Table 2 which may be used to implement a credit mechanism similar to that described above with respect to Fig. 21.

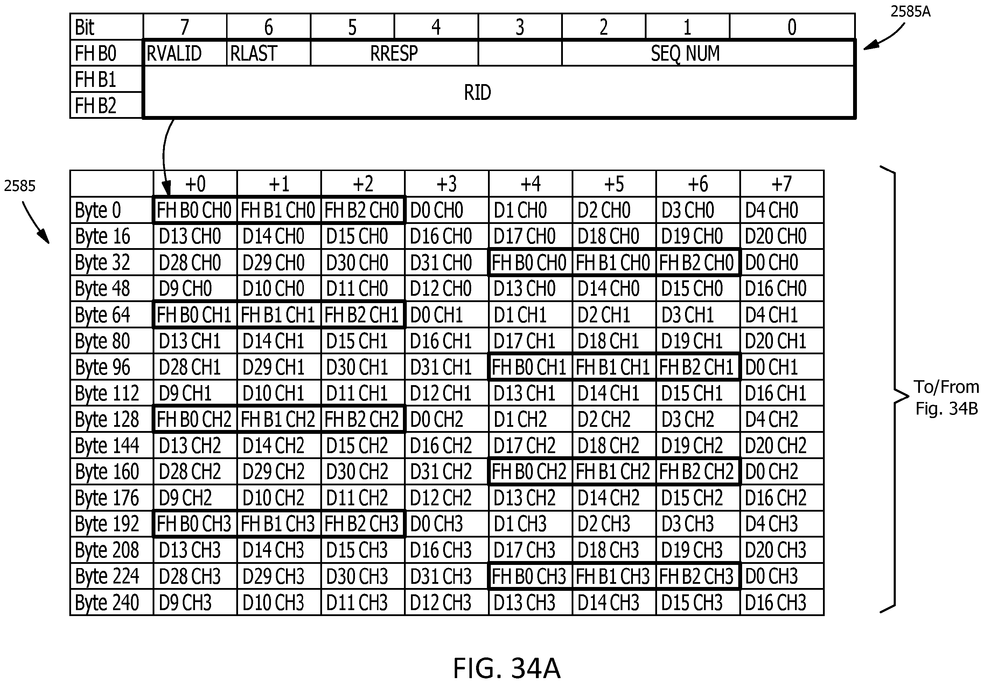

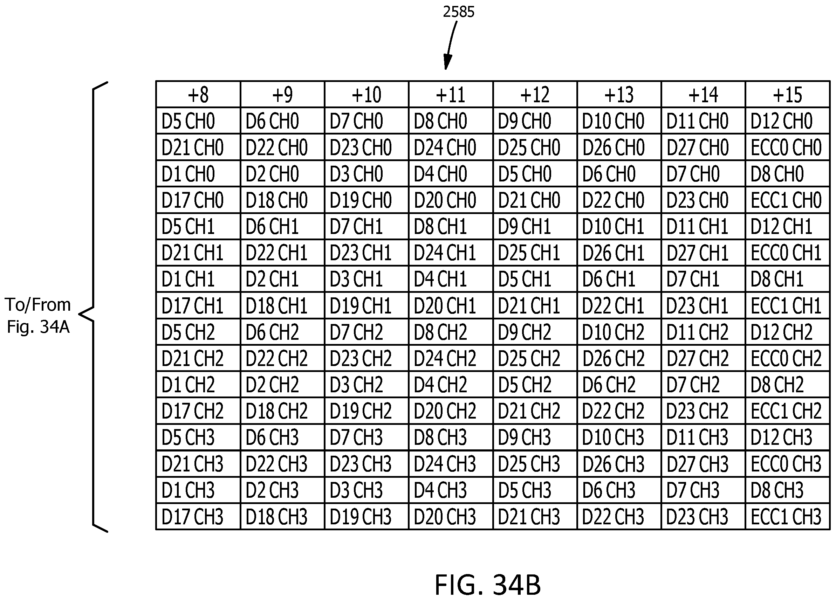

Fig. 25 illustrates an example embodiment of a transaction unit for transferring read data information using a raw format in accordance with example embodiments of the disclosure. References to Fig. 25 may also refer to Fig. 34. The raw format transaction unit 2585 illustrated in Fig. 25 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the raw format transaction unit 2585 illustrated in Fig. 25 may be described in the context of a system in which read data information for four OD interface channels CH0, ..., CH3 may be received and/or unpacked using the unpacking logic 1956-0 and/or an associated D2D transmit and/or receive module 1951-0 as illustrated in Fig. 19. In some embodiments, one or more (e.g., three) additional instances of the raw format transaction unit 2585 may be used to receive and/or unpack read data information for twelve additional OD interface channels CH4, ..., CH15 which may be received and/or unpacked using unpacking logic 1956-1, ..., 1956-3 and/or associated D2D transmit and/or receive modules 1951-1, ... 1951-3 as illustrated in Fig. 19. However, the raw format transaction unit 2585 illustrated in Fig. 25 is not limited to use with the numbers and/or types of information, signals, bits, bytes, channels, components, and/or the like, disclosed herein.

The structure and/or operation of the raw format transaction unit 2585 illustrated in Fig. 25 may in some aspects be similar to the raw format transaction unit 2181 for write data information illustrated in Fig. 21, but with one or more fields, signals, and/or the like for read data substituted for those for write data. Thus, each portion of the raw format transaction unit 2585 for a specific OD interface channel CH0 through CH3 may include information such as a format header 2585A and/or read data for one or more transactions on the corresponding channel.

In some embodiments, the raw format transaction unit 2585 may also include data reliability information such as the ECC information indicated as ECCO CH0, ECC1 CH0, ..., ECCO CH3, ECC1 CH3 which may be used to implement an error correction scheme similar to that described with respect to Fig. 21.

For purposes of illustration, in the example embodiment illustrated in Fig. 25, each transaction may include 32 bytes of read data, but in other embodiments, any transaction on any channel may include any amount of read data.

In some embodiments, a format header 2585A may include one or more fields such as RVALID, RLAST, RRESP, and/or RID which may use the nomenclature set forth in Table 1. In some embodiments, unpacking logic such as unpacking logic 1956-0 illustrated in Fig. 19 may use information in a format header 2585A along with corresponding read data (e.g., D0 CH0, ... D31 CH0) to generate a reconstructed version of read data (e.g., signal operations such as signal states, timings, patterns, and/or the like, illustrated in Fig. 5) on a read data channel (e.g., an R channel in the embodiment illustrated in Fig. 19).

In some embodiments, a format header 2585A may include a SEQ NUM field as set forth in Table 2 which may be used to implement a credit mechanism similar to that described above with respect to Fig. 21.

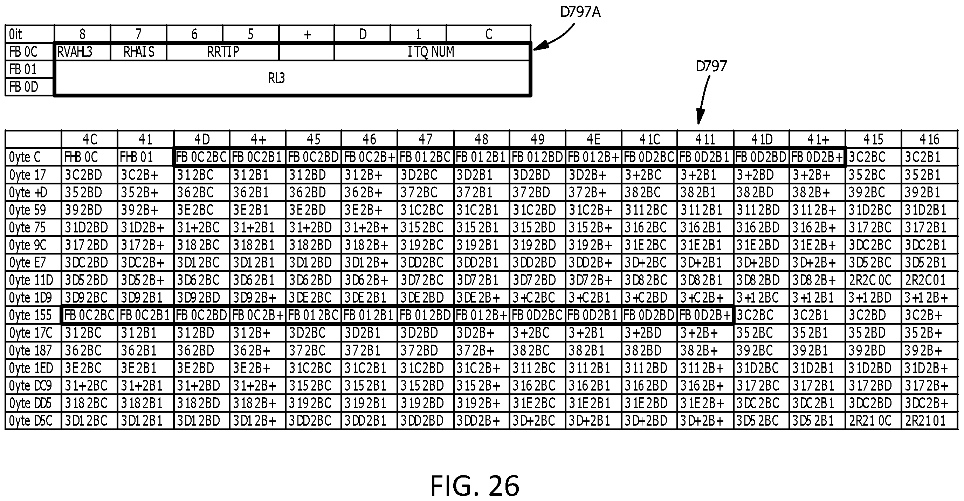

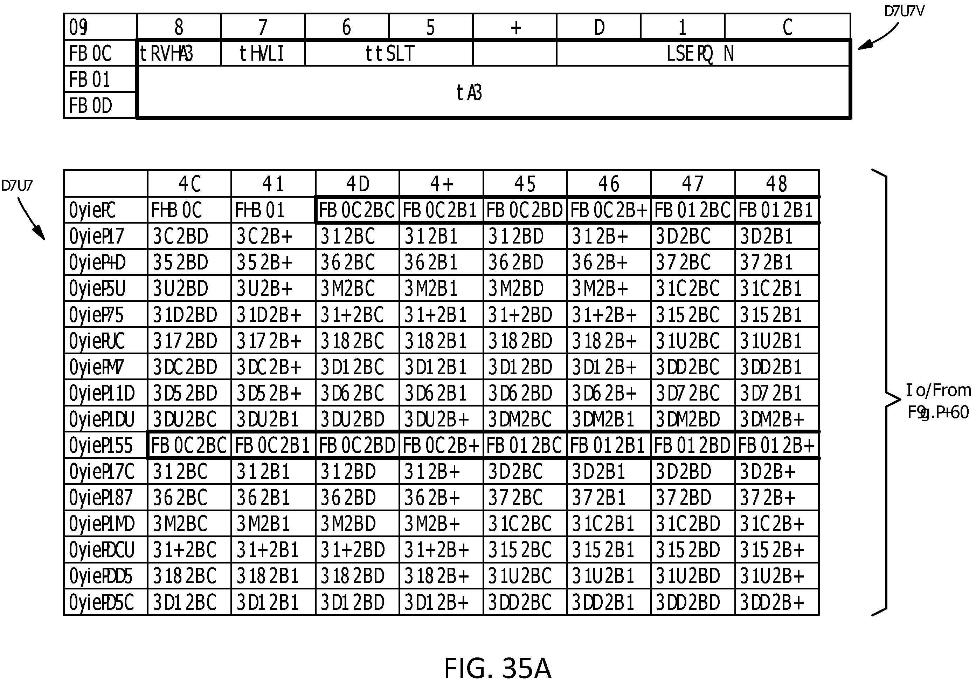

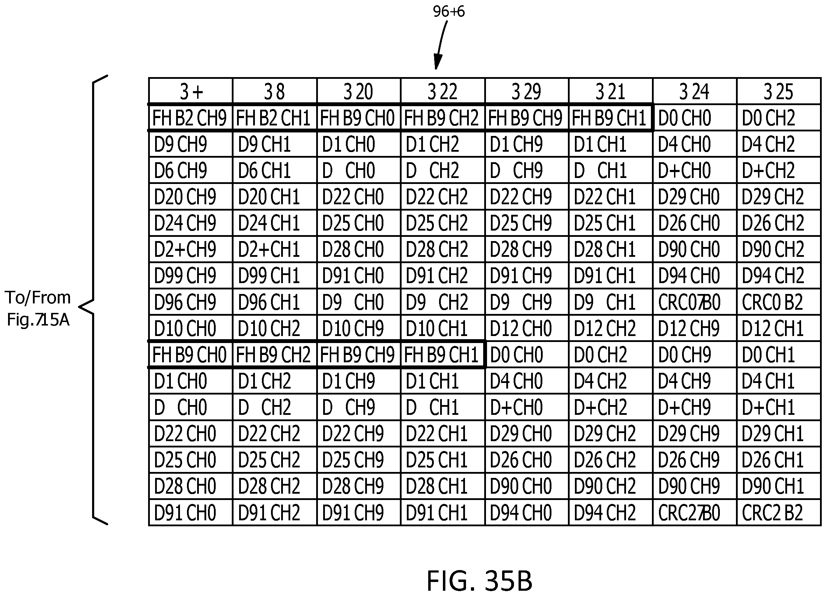

Fig. 26 illustrates an example embodiment of a transaction unit for transferring read data information using a flit format in accordance with example embodiments of the disclosure. References to Fig. 26 may also refer to Fig. 35. The raw format transaction unit 2686 illustrated in Fig. 26 may be used, for example, with a component architecture in which control information may be transferred using a first D2D path, module, and/or the like, and data information may be transferred using a second D2D path, module, and/or the like, such as one of the component architectures illustrated and/or described with respect to Fig. 12, Fig. 13, Fig. 16, Fig. 17, and/or Fig. 19.

For purposes of illustration, the flit format transaction unit 2686 illustrated in Fig. 26 may be described in the context of a system in which read data information for four OD interface channels CH0, ..., CH3 may be received and/or unpacked using unpacking logic such as the unpacking logic 1956-0 and/or an associated D2D transmit and/or receive module 1951-0 as illustrated in Fig. 19. In some embodiments, write data information for one or more (e.g., twelve) additional OD interface channels CH4, ..., CH15 may be unpacked from one or more (e.g., three) additional instances of the flit format transaction unit 2686 which may be unpacked and/or received using unpacking logic such as the unpacking logic 1956-1, ..., 1956-3 and/or associated D2D transmit and/or receive modules 1951-1, ... 1951-3 as illustrated in Fig. 19. However, the flit format transaction unit 2686 illustrated in Fig. 26 is not limited to use with the numbers and/or types of information, signals, bits, bytes, channels, components, and/or the like, disclosed herein.

The structure and/or operation of the flit format transaction unit 2686 illustrated in Fig. 26 may in some aspects be similar to the raw format transaction unit 2282 illustrated in Fig. 22, but with one or more fields, signals, and/or the like for read data substituted for those for write data. For example, the flit format transaction unit 2686 may use a flit format such as the latency-oriented (e.g., latency-optimized) flit format illustrated and/or described with respect to Fig. 9. Thus, the flit format transaction unit 2686 may include flit header bytes FLH B0 and FLH B1 and/or CRC bytes which, in some embodiments, may be specified by a D2D protocol and/or implemented, for example, as part of an adapter or link layer. In some embodiments, one or more of the flit header bytes and/or CRC bytes may be used to implement a retry mechanism. Thus, in some embodiments, the flit format transaction unit 2686 may omit other data reliability information such as the ECC information illustrated in Fig. 21 because a retry mechanism may provide an adequate BER. In other embodiments, the flit format transaction unit 2686 may include additional data reliability information such as ECC information.

The flit format transaction unit 2686 may use a format header 2686A that may be configured in a manner similar to the format header 2585A illustrated in Fig. 25. For example, a format header 2686A may include one or more fields RVALID, RLAST, RRESP, and/or RID that may use, for example, the nomenclature set forth in Table 1. Additionally, or alternatively, a format header 2686A may include a SEQ NUM field as set forth in Table 2 which may be used to implement a credit mechanism similar to that described above with respect to Fig. 21.

Read data for OD interface channels CH0, ..., CH3 may be packed into the flit format transaction unit 2686 in an interleaved manner, for example, with format header and/or read data information for one or more (e.g., each) of CH0, ..., CH3 interleaved on a row of the flit format transaction unit 2686 as illustrated in Fig. 26. For example, the first byte of a format header 2686A for each of channels CH0, CH1, CH2, and CH3 (e.g., bytes FH B0 CH0, FH B0 CH1, FH B0 CH2, and FH B0 CH3) may be located at bytes 2, 3, 4, and 5, respectively. As another example, the first byte of read data for each of channels CH0, CH1, CH2, and CH3 (e.g., bytes D0 CH0, D0 CH1, D0 CH2, and D0 CH3) may be located at bytes 14, 15, 16, and 17, respectively.

For purposes of illustration, in the example embodiment illustrated in Fig. 26, each transaction for each OD interface channel may include 32 bytes of read data, but in other embodiments, any transaction on any channel may include any amount of read data.

The flit format transaction unit 2686 may be used, for example, to transfer read data information for one or more read transactions that may be initiated by one or more read requests that may use the raw format transaction unit 2484 illustrated in Fig. 24.

In some embodiments, and depending on the implementation details, the flit format transaction unit 2686 illustrated in Fig. 26 may reduce one or more aspects of latency, for example, by enabling a first portion of write data for one or more transactions on one or more OD interface channels (e.g., write data bytes D0 CH0 through D27 CH3 located before the first CRC bytes CRC0 B0, CRC0 B1) to be delivered and possibly checked for errors before other portions of write data for the one or more transactions.

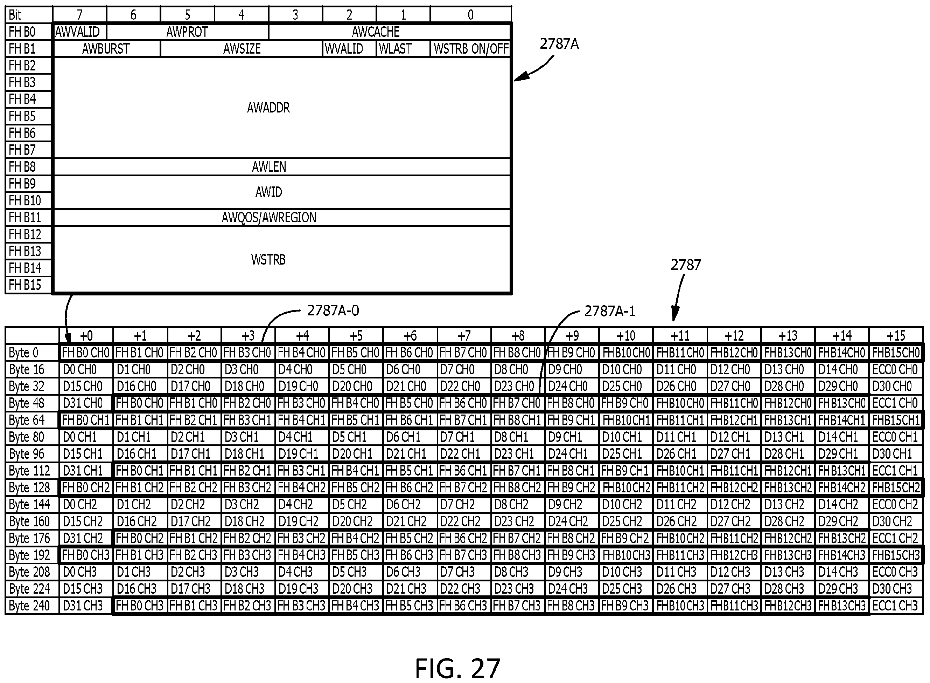

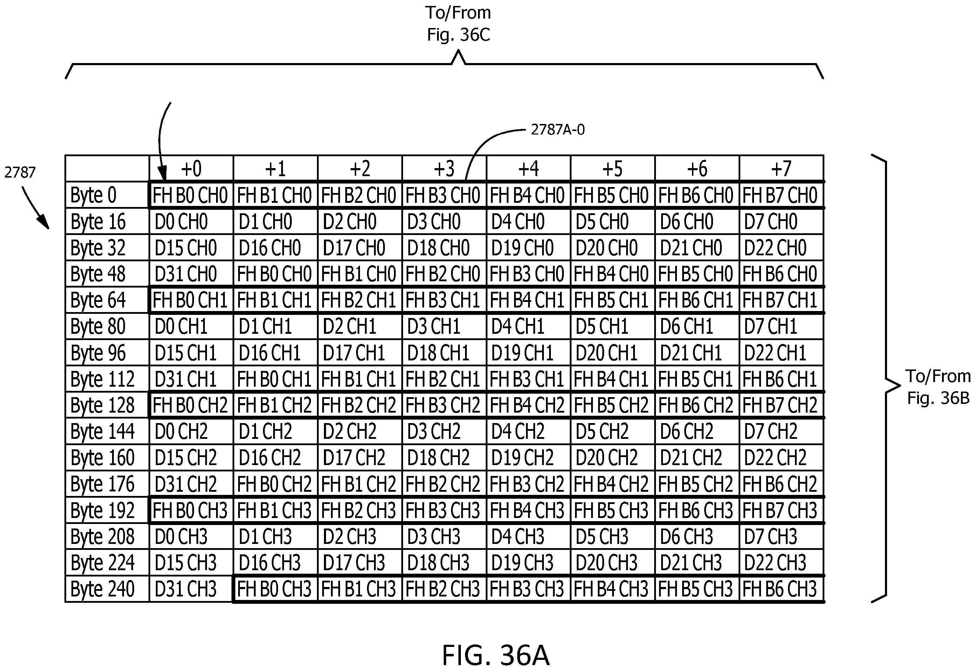

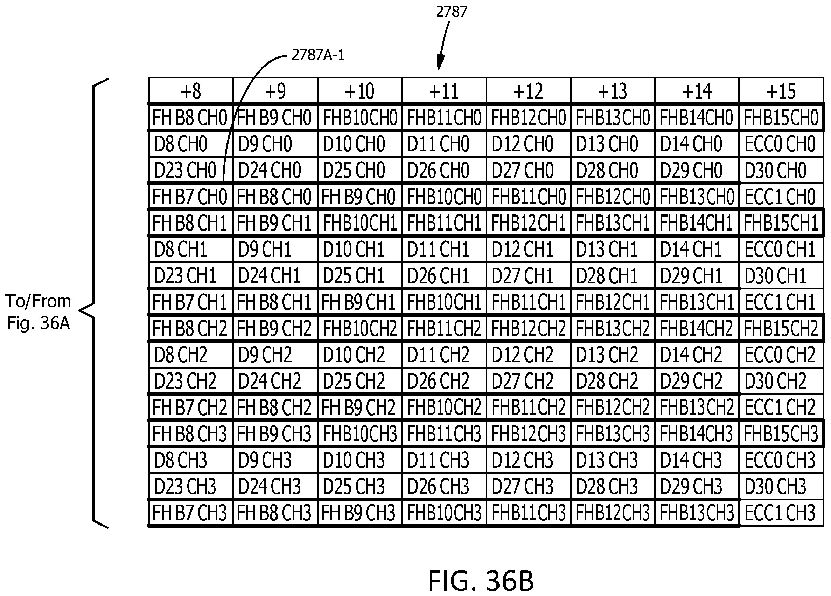

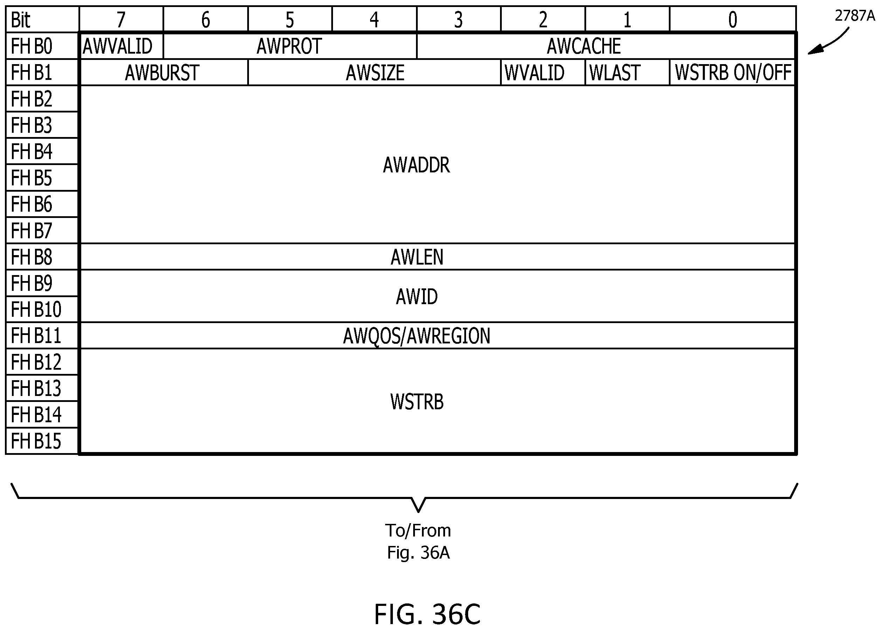

Fig. 27 illustrates an example embodiment of a transaction unit for transferring a write request and write data using a raw format and a combined transfer path in accordance with example embodiments of the disclosure. References to Fig. 27 may also refer to Fig. 36. The raw format transaction unit 2787 illustrated in Fig. 27 may be used, for example, with a component architecture in which control and data information may be combined and transferred using a common path such as one of the component architectures illustrated and/or described with respect to Fig. 10, Fig. 11, Fig. 14, Fig. 15, and/or Fig. 18.

For purposes of illustration, the raw format transaction unit 2787 illustrated in Fig. 27 may be described in the context of a system in which write request information and write data information for four OD interface channels CH0, ..., CH3 may be packed and/or transferred using packing logic such as the packing logic 1855-0 and/or an associated D2D transmit and/or receive module 1851-0 as illustrated in Fig. 18. In some embodiments, one or more (e.g., three) additional instances of the raw format transaction unit 2787 may be used to pack and/or transfer write request information and write data information for twelve additional OD interface channels CH4, ..., CH15 which may be packed and/or transferred using packing logic such as the packing logic 1855-1, ..., 1855-3 and/or associated D2D transmit and/or receive modules 1851-1, ... 1851-3 as illustrated in Fig. 18. However, the raw format transaction unit 2787 illustrated in Fig. 27 is not limited to use with the numbers and/or types of information, signals, bits, bytes, channels, components, and/or the like, disclosed herein.

Some aspects of the structure and/or operation of the raw format transaction unit 2787 illustrated in Fig. 27 may be similar to the raw format transaction unit 2181 illustrated in Fig. 21. For example, information for write transactions for four OD interface channels CH0, ..., CH3 may be packed into four portions of the raw format transaction unit 2787 including bytes 0-63, bytes 64-127, bytes 128-191, and bytes 192-255, respectively.

However, the raw format transaction unit 2787 illustrated in Fig. 27 may combine write request information with write data information in a format header 2787A. For example, a format header 2787A may include write request information for a write request channel such as an AW channel illustrated in Fig. 18 which may operate, for example, in a manner similar to the write request channel illustrated in Fig. 4. As another example, a format header 2787A may include write data information for a write data channel such as a W channel illustrated in Fig. 18 which may operate in a manner similar to the write data channel illustrated in Fig. 4. Depending on the implementation details, combining write request information with write data information in a common header, transaction unit, and/or the like may enable the write request information and write data information for one or more transactions to be transferred using a common D2D path, module, and/or the like.

In some embodiments, the format header 2787A may include one or more fields such as AWVALID, AWPROT, AWCACHE, AWBURST, AWSIZE, WVALID, WLAST, AWADDR, AWLEN, AWID, AWQOS, and/or WSTRB that may use, for example, the nomenclature set forth in Table 1. Additionally, or alternatively, a format header 2787A may include a WSTRB ON/OFF field as set forth in Table 2 that may be used, for example, to indicate whether the WSTRB field is used.

In some embodiments, the raw format transaction unit 2787 may also include data reliability information such as the ECC information indicated as ECCO CH0, ECC1 CH0, ..., ECCO CH3, ECC1 CH3 which may be used to implement an error correction scheme similar to that described with respect to Fig. 21.

The raw format transaction unit 2787 illustrated in Fig. 27 may include a first format header 2787A-0 for a first write transaction on CH0 in bytes 0-15 and 32 bytes of write data D0 CH0, ..., D31 CH0 for the first write transaction in bytes 16-30 and bytes 32-48 (byte 31 may include an ECC byte ECCO CH0). The first 14 bytes of a second format header 2787A-1 for a second write transaction on CH0 may be located in bytes 49-62, and the remaining two bytes of the second format header 2787A-1 may be packed into and transferred with a second instance of the raw format transaction unit 2787 as part of a stream of transaction units. (The heavy line surrounding the second format header 2787A-1 is left open to indicate that the second format header 2787A-1 continues in a second transaction unit.)

For purposes of illustration, in the example embodiment illustrated in Fig. 27, each transaction for each OD interface channel may include 32 bytes of write data, but in other embodiments, any transaction on any channel may include any amount of write data.

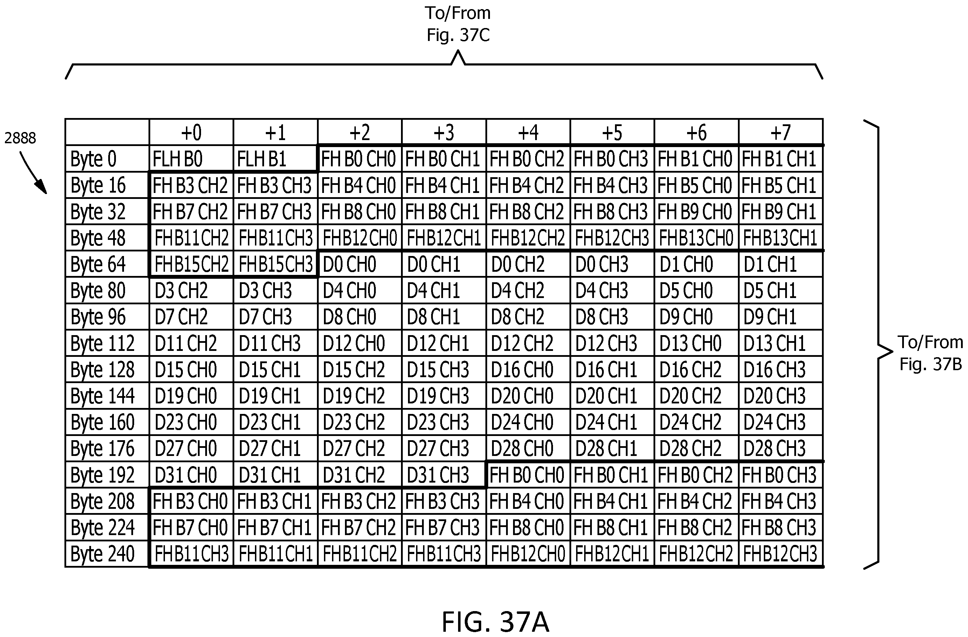

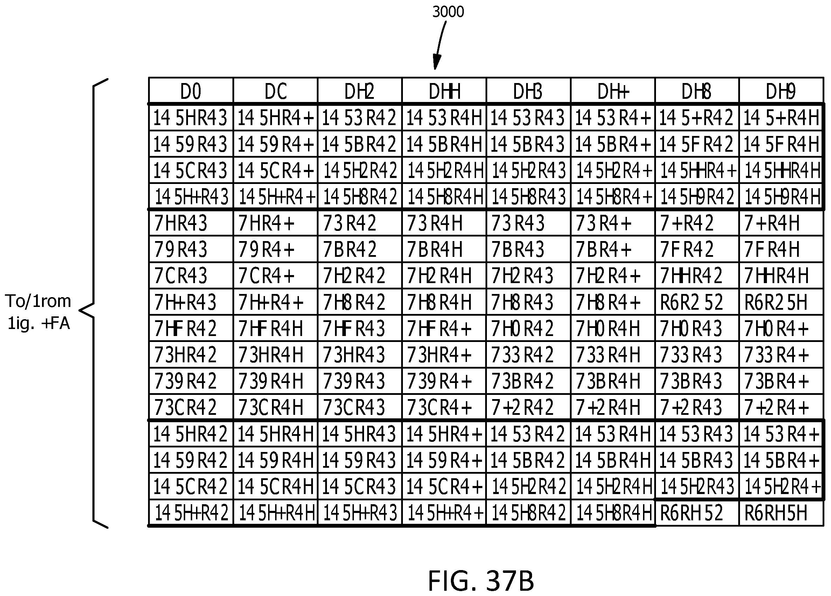

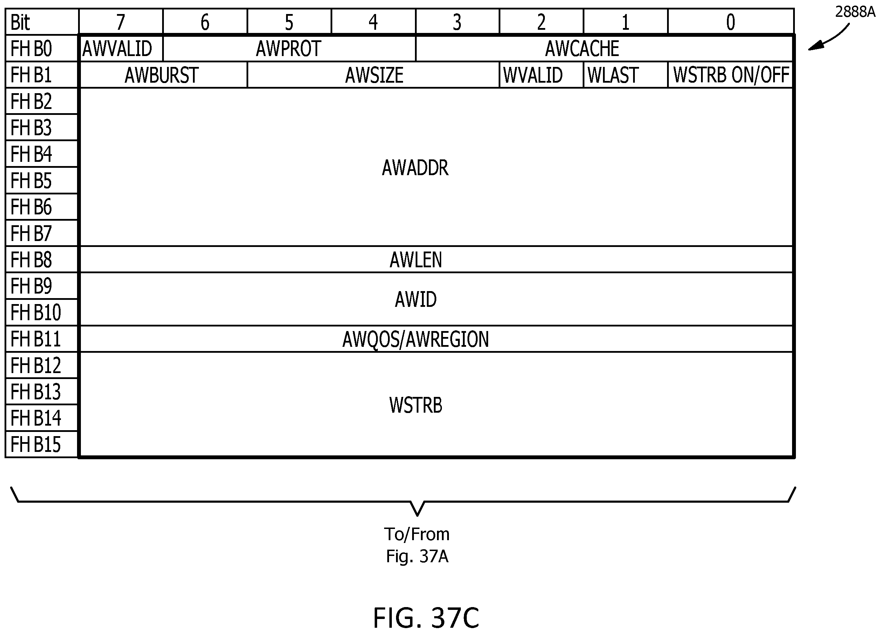

Fig. 28 illustrates an example embodiment of a transaction unit for transferring a write request and write data using a flit format and a combined transfer path in accordance with example embodiments of the disclosure. References to Fig. 28 may also refer to Fig. 37. The flit format transaction unit 2888 illustrated in Fig. 28 may be used, for example, with a component architecture in which control and data information may be combined and transferred using a common path such as one of the component architectures illustrated and/or described with respect to Fig. 10, Fig. 11, Fig. 14, Fig. 15, and/or Fig. 18.

For purposes of illustration, the raw format transaction unit 2888 illustrated in Fig. 28 may be described in the context of a system in which write request information and write data information for four OD interface channels CH0, ..., CH3 may be packed and/or transferred using packing logic such as the packing logic 1855-0 and/or an associated D2D transmit and/or receive module 1851-0 as illustrated in Fig. 18. In some embodiments, one or more (e.g., three) additional instances of the flit format transaction unit 2888 may be used to pack and/or transfer write request information and write data information for twelve additional OD interface channels CH4, ..., CH15 which may be packed and/or transferred using packing logic such as the packing logic 1855-1, ..., 1855-3 and/or associated D2D transmit and/or receive modules 1851-1, ... 1851-3 as illustrated in Fig. 18. However, the flit format transaction unit 2888 illustrated in Fig. 28 is not limited to use with the numbers and/or types of information, signals, bits, bytes, channels, components, and/or the like, disclosed herein.

Some aspects of the structure and/or operation of the raw format transaction unit 2888 illustrated in Fig. 28 may be similar to the flit format transaction unit 2282 illustrated in Fig. 22. For example, write data for OD interface channels CH0, ..., CH3 may be packed into the flit format transaction unit 2888 in an interleaved manner, for example, with format header and/or write data information for one or more of CH0, ..., CH3 interleaved on a row of the flit format transaction unit 2288 as illustrated in Fig. 28. For example, the first byte of a format header 2282A for each of channels CH0, CH1, CH2, and CH3 (e.g., bytes FH B0 CH0, FH B0 CH1, FH B0 CH2, and FH B0 CH3) may be located at bytes 2, 3, 4, and 5, respectively. As another example, the first byte of write data for each of channels CH0, CH1, CH2, and CH3 (e.g., bytes D0 CH0, D0 CH1, D0 CH2, and D0 CH3) may be located at bytes 66, 67, 68, and 69, respectively.

However, the raw format transaction unit 2888 illustrated in Fig. 28 may combine write request information with write data information in a format header 2888A in a manner similar to the format header 2787A illustrated in Fig. 27. Thus, in some embodiments, the format header 2888A may include one or more fields such as AWVALID, AWPROT, AWCACHE, AWBURST, AWSIZE, WVALID, WLAST, AWADDR, AWLEN, AWID, AWQOS, and/or WSTRB that may use, for example, the nomenclature set forth in Table 1. Additionally, or alternatively, a format header 2888A may include a WSTRB ON/OFF field as set forth in Table 2 that may be used, for example, to indicate whether the WSTRB field is used.

In some embodiments, the flit format transaction unit 2888 may use a flit format such as the latency-oriented (e.g., latency-optimized) flit format illustrated and/or described with respect to Fig. 9. Thus, the flit format transaction unit 2888 may include flit header bytes FLH B0 and FLH B1 and/or CRC bytes which, in some embodiments, may be specified by a D2D protocol and/or implemented, for example, as part of an adapter or link layer. In some embodiments, one or more of the flit header bytes and/or CRC bytes may be used to implement a retry mechanism. Thus, in some embodiments, the flit format transaction unit 2888 may omit other data reliability information such as the ECC information illustrated in Fig. 21 because a retry mechanism may provide an adequate BER. In other embodiments, the flit format transaction unit 2888 may include additional data reliability information such as ECC information.

In some embodiments, and depending on the implementation details, one or more of the techniques, schemes, and/or the like disclosed herein may provide flexible solutions for translating between one or more OD protocols and one or more D2D protocols, for example, by providing various transaction unit formats (e.g., raw format, flit format, and/or the like), component architectures, control options (e.g., write strobe control options), credit mechanisms, reliability features (e.g., ECC techniques), and/or the like.

Any of the functionality and/or components disclosed herein, including any of the interfaces, translation logic, packing and/or unpacking logic, error detection logic, error correction logic, encoding and/or decoding logic, layers, and/or the like may be implemented with circuitry such as combinational logic, sequential logic, timers, counters, registers, state machines, accelerators, embedded processors, microcontrollers, processing units (e.g., CPUs, GPUs, NPUs, TPUs, DSPs), and/or the like, some of which may execute instructions stored in any type of memory and/or implement any type of execution environment such as a container, a virtual machine, an operating system, and/or the like, or a combination thereof.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

In some embodiments, a portion of an element may refer to less than, or all of, the element. A first portion of an element and a second portion of the element may refer to the same portions of the element. A first portion of an element and a second portion of the element may overlap (e.g., a portion of the first portion may be the same as a portion of the second portion).

Since the inventive principles of this patent disclosure may be modified in arrangement and detail without departing from the inventive conceptsas defined in the appended claims.

## Claims

1. An apparatus comprising:
a die (105; 205) comprising at least one circuit configured to:
receive, using a first channel of an on-die interface (103, 109; 203, 209), first information;
receive, using a second channel of the on-die interface (103, 109; 203, 209), second information;
generate one or more transaction units comprising the first information and the second information; and
send, using at least one die-to-die system (107; 207), the one or more transaction units.

2. The apparatus of claim 1, wherein:
a first one of the one or more transaction units comprises at least a portion of the first information; and
a second one of the one or more transaction units comprises at least a portion of the second information.

3. The apparatus of claim 1 or 2, wherein the first information comprises information for a first transaction of the on-die interface (103, 109; 203, 209) and information for a second transaction of the on-die interface (103, 109; 203, 209).

4. The apparatus of claim 3, wherein the second information comprises information for the first transaction of the on-die interface (103, 109; 203, 209) and information for the second transaction of the on-die interface (103, 109; 203, 209).

5. An apparatus comprising:
a die (105, 205) comprising at least one circuit configured to:
receive, using at least one on-die interface (103, 109; 203, 209), first information for a first transaction;
receive, using the at least one on-die interface (103, 109; 203, 209), second information for a second transaction;
generate one or more transaction units comprising the first information and the second information; and
send, using at least one die-to-die system (107; 207), the one or more transaction units.

6. An apparatus comprising:
a die (105, 205) comprising at least one circuit configured to:
receive, using a first on-die interface (103, 109; 203, 209), first information;
receive, using a second on-die interface (103, 109; 203, 209), second information;
generate one or more transaction units comprising the first information and the second information; and
send, using at least one die-to-die system (107; 207), the one or more transaction units.

7. The apparatus of claim 6, wherein:
a first one of the one or more transaction units comprises at least a portion of the first information; and
a second one of the one or more transaction units comprises at least a portion of the second information.

8. The apparatus of any one of claims 1 or 5 or 6, wherein one of the one or more transaction units comprises at least a portion of the first information and at least a portion of the second information.

9. The apparatus of claim 8, wherein:
the at least a portion of the first information comprises control information for the first transaction; and
the at least a portion of the second information comprises control information for the second transaction.

10. The apparatus of claim 8 or 9, wherein:
the at least a portion of the first information comprises data information for the first transaction; and
the at least a portion of the second information comprises data information for the second transaction.

11. The apparatus of claim 1 to 6, wherein:
the at least one die-to-die system (107; 207) comprises a path; and
the at least one circuit is configured to:
send, using the path, at least a portion of the first information; and
send, using the path, at least a portion of the second information.

12. The apparatus of any one of claims 1 to 6, wherein:
the at least one die-to-die system (107; 207) comprises a first path and a second path; and
the at least one circuit is configured to:
send, using the first path, at least a portion of the first information; and
send, using the second path, at least a portion of the second information.

13. The apparatus of any one of claims 7, 11 and 12, wherein:
the at least a portion of the first information comprises control information; and
the at least a portion of the second information comprises control information.

14. The apparatus of any one of claims 7 and 11 to 13, wherein:
the at least a portion of the first information comprises data information; and
the at least a portion of the second information comprises data information.

15. The apparatus of any one of claims 1 to 14, wherein one of the one or more transaction units comprises error correction information for at least one of the one or more transaction units.
